(19) Europäisches Patentamt
European Patent Office
Office européen des brevets

(11) EP 1 327 941 A2

(12) EUROPEAN PATENT APPLICATION

(43) Date of publication:
16.07.2003 Bulletin 2003/29

(51) Int Cl.$^7$: G06F 17/30

(21) Application number: 02006919.1

(22) Date of filing: 26.03.2002

(84) Designated Contracting States:
AT BE CH CY DE DK ES FI FR GB GR IE IT LI LU MC NL PT SE TR
Designated Extension States:
AL LT LV MK RO SI

(30) Priority: 15.01.2002 US 53045

(71) Applicant: Unicorn Solutions, Inc.
Dover, Delaware (US)

(72) Inventors:
- Hellman, Ziv Z., c/o Unicorn Solutions, Inc.
Dover, Delaware (US)
- Schreiber, Marcel Zvi, c/o Unicorn Sol., Inc.
Dover, Delaware (US)
- Yuval, Tom Y., c/o Unicorn Solutions, Inc.
Dover, Delaware (US)

(74) Representative: Rupp, Christian, Dipl.Phys. et al
Mitscherlich & Partner
Patent- und Rechtsanwälte
Sonnenstrasse 33
80331 München (DE)

# (54) Method and system for deriving a transformation by referring schema to a central model

(57) A method for transforming data from one data schema to another including receiving a source data schema and a target data schema, mapping the source data schema into an ontology model, mapping the target data schema into the ontology model, and deriving a transformation for transforming data conforming to the source data schema into data conforming to the target data schema, using the ontology model. A system is also described and claimed.

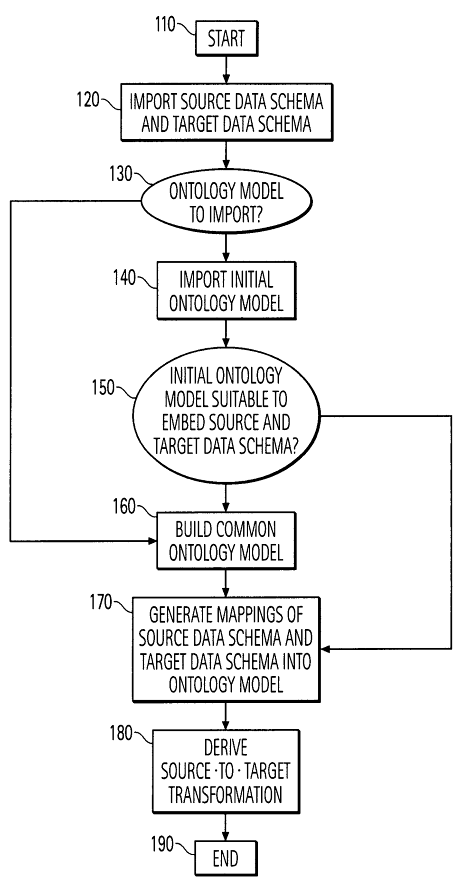


Fig. 1

EP 1 327 941 A2

## Description

CROSS REFERENCES TO RELATED APPLICATIONS

This application is a continuation-in-part of assignee's pending application U.S. Serial No. 09/866,101 filed on May 25, 2001, entitled "Method and System for Collaborative Ontology Modeling."

FIELD OF THE INVENTION

The present invention relates to data schema, and in particular to deriving transformations for transforming data from one schema to another.

BACKGROUND OF THE INVENTION

Ontology is a philosophy of what exists. In computer science ontology is used to model entities of the real world and the relations between them, so as to create common dictionaries for their discussion. Basic concepts of ontology include (i) classes of instances / things, and (ii) relations between the classes, as described hereinbelow. Ontology provides a vocabulary for talking about things that exist.

Instances / Things

There are many kinds of "things" in the world. There are physical things like a car, person, boat, screw and transistor. There are other kinds of things which are not physically connected items or not even physical at all, but may nevertheless be defined. A company, for example, is a largely imaginative thing the only physical manifestation of which is its appearance in a list at a registrar of companies. A company may own and employ. It has a defined beginning and end to its life.

Other things can be more abstract such as the Homo Sapiens species, which is a concept that does not have a beginning and end as such even if its members do.

Ontological models are used to talk about "things." An important vocabulary tool is "relations" between things. An ontology model itself does not include the "things," but introduces class and property symbols which can then be used as a vocabulary for talking about and classifying things.

Properties

Properties are specific associations of things with other things. Properties include:

- Relations between things that are part of each other, for example, between a PC and its flat panel screen;
- Relations between things that are related through a process such as the process of creating the things, for example, a book and its author;
- Relations between things and their measures, for example, a thing and its weight.

Some properties also relate things to fundamental concepts such as natural numbers or strings of characters -- for example, the value of a weight in kilograms, or the name of a person.

Properties play a dual role in ontology. On the one hand, individual things are referenced by way of properties, for example, a person by his name, or a book by its title and author. On the other hand, knowledge being shared is often a property of things, too. A thing can be specified by way of some of its properties, in order to query for the values of other of its properties.

Classes

Not all properties are relevant to all things. It is convenient to discuss the source of a property as a "class" of things, also referred to as a frame or, for end-user purposes, as a category. Often sources of several properties coincide, for example, the class Book is the source for both Author and ISBN Number properties.

There is flexibility in the granularity to which classes are defined. Cars is a class. Fiat Cars can also be a class, with a restricted value of a manufacturer property. It may be unnecessary to address this class, however, since Fiat cars may not have special properties of interest that are not common to other cars. In principle, one can define classes as granular as an individual car unit, although an objective of ontology is to define classes that have important properties.

Abstract concepts such as measures, as well as media such as a body of water which cannot maintain its identity after coming into contact with other bodies of water, may be modeled as classes with a quantity property mapping them to real numbers.

In a typical mathematical model, a basic ontology comprises:

- A set **C**, the elements of which are called "class symbols;"
- For each C∈**C**, a plain language definition of the class C;
- A set **P**, the elements of which are called "property symbols;"
- For each P∈**F**:
    - **o** a plain language definition of P;
    - **o** a class symbol called the source of P; and
    - **o** a class symbol called the target of P; and
- A binary transitive reflexive anti-symmetric relation, **I**, called the inheritance relation on **C** × **C**.

In the ensuing discussion, the terms "class" and "class symbol" are used interchangeably, for purposes of convenience and clarity. Similarly, the terms "property" and "property symbol" are also used interchangeably.

It is apparent to those skilled in the art that if an ontology model is extended to include sets in a class, then a classical mathematical relation on C × D can be considered as a property from C to sets in D.

If **I**($C_1$, $C_2$) then $C_1$ is referred to as a subclass of $C_2$, and $C_2$ is referred to as a superclass of $C_1$. Also, $C_1$ is said to inherit from $C_2$.

A distinguished universal class "Being" is typically postulated to be a superclass of all classes in **C**.

Variations on an ontology model may include:

- Restrictions of properties to unary properties, these being the most commonly used properties;
- The ability to specify more about properties, such as multiplicity and invertibility.

The notion of a class symbol is conceptual, in that it describes a generic genus for an entire species such as Books, Cars, Companies and People. Specific instances of the species within the genus are referred to as "instances" of the class. Thus "Gone with the Wind" is an instance of a class for books, and "IBM" is an instance of a class for companies. Similarly, the notions of a property symbol is conceptual, in that it serves as a template for actual properties that operate on instances of classes.

Class symbols and property symbols are similar to object-oriented classes in computer programming, such as C++ classes. Classes, along with their members and field variables, defined within a header file, serve as templates for specific class instances used by a programmer. A compiler uses header files to allocate memory for, and enables a programmer to use instances of classes. Thus a header file can declare a rectangle class with members left, right, top and bottom. The declarations in the header file do not instantiate actual "rectangle objects," but serve as templates for rectangles instantiated in a program. Similarly, classes of an ontology serve as templates for instances thereof.

There is, however, a distinction between C++ classes and ontology classes. In programming, classes are templates and they are instantiated to create programming objects. In ontology, classes document common structure but the instances exist in the real world and are not created through the class.

Ontology provides a vocabulary for speaking about instances, even before the instances themselves are identified. A class Book is used to say that an instance "is a Book." A property Author allows one to create clauses "author of" about an instance. A property Siblings allows one to create statements "are siblings" about instances. Inheritance is used to say, for example, that "every Book is a PublishedWork". Thus all vocabulary appropriate to PublishedWork can be used for Book.

Once an ontology model is available to provide a vocabulary for talking about instances, the instances themselves can be fit into the vocabulary. For each class symbol, C, all instances which satisfy "is a C" are taken to be the set of instances of C, and this set is denoted B(C). Sets of instances are consistent with inheritance, so that $B(C_1) \subseteq B(C_2)$ whenever $C_1$ is a subclass of $C_2$. Property symbols with source $C_1$ and target $C_2$ correspond to properties with source $B(C_1)$ and target $B(C_2)$. It is noted that if class $C_1$ inherits from class C, then every instance of $C_1$ is also an instance of C, and it is therefore known already at the ontology stage that the vocabulary of C is applicable to $C_1$.

Ontology enables creation of a model of multiple classes and a graph of properties therebetween. When a class is defined, its properties are described using handles to related classes. These can in turn be used to look up properties of the related classes, and thus properties of properties can be accessed to any depth.

Provision is made for both classes and complex classes. Generally, complex classes are built up from simpler classes using tags for symbols such as intersection, Cartesian product, **set, list** and **bag.** The "intersection" tag is

followed by a list of classes or complex classes. The "Cartesian product" tag is also followed by a list of classes or complex classes. The **set** symbol is used for describing a class comprising subsets of a class, and is followed by a single class or complex class. The **list** symbol is used for describing a class comprising ordered subsets of a class; namely, finite sequences, and is followed by a single class or complex class. The **bag** symbol is used for describing unordered finite sequences of a class, namely, subsets that can contain repeated elements, and is followed by a single class or complex class. Thus **set**[C] describes the class of sets of instances of a class C, **list**[C] describes the class of lists of instances of class C, and **bag**[C] describes the class of bags of instances of class C.

In terms of formal mathematics, for a set S, **set**[S] is **P**(S), the power set of S; **bag**[S] is $N^S$, where N is the set of non-negative integers; and **list**[S] is

$$\bigcup_{n=1}^{\infty} S^n .$$

There are natural mappings

$$\textbf{list}[S] \xrightarrow{\phi} \textbf{bag}[S] \xrightarrow{\psi} \textbf{set}[S] . \qquad (1)$$

Specifically, for a sequence $(s_1, s_2, ..., S_n) \in$ **list**[S], $\phi(s_1, s_2, ..., s_n)$ is the element f∈**bag**[S] that is the "frequency histogram" defined by $f(s) = \#\{1 \leq i \leq n: s_i = s\}$; and for f∈**bag**[S], ψ(f)∈**set**[S] is the subset of S given by the support of f, namely, supp(f) = {s∈S: f(s) >0}. It is noted that the composite mapping φψ maps a the sequence $(s_1, s_2, ..., s_n)$ into the set of its elements $\{s_1, s_2, ..., s_n\}$. For finite sets S, **set**[S] is also finite, and **bag**[S] and **list**[S] are countably infinite.

A general reference on ontology systems is Sowa, John F., "Knowledge Representation," Brooks/Cole, Pacific Grove, CA, 2000.

Relational database schema (RDBS) are used to define templates for organizing data into tables and fields. SQL queries are used to populate tables from existing tables, generally by using table join operations. Extensible markup language (XML) schema are used to described documents for organizing data into a hierarchy of elements and attributes. XSLT script is used to generate XML documents from existing documents, generally by importing data between tags in the existing documents. XSLT was originally developed in order to generate HTML pages from XML documents.

A general reference on relation databases and SQL is the document "Oracle 9i: SQL Reference," available on-line at http://www.oracle.com. XML, XML schema, XPath and XSLT are standards of the World-Wide Web Consortium, and are available on-line at http://www.w3.org.

Often multiple schema exist for the same source of data, and as such the data cannot readily be imported or exported from one application to another. For example, two airline companies may each run applications that process relational databases, but if the relational databases used by the two companies conform to two different schema, then neither of the companies can readily use the databases of the other company. In order for the companies to share data, it is necessary to export the databases from one schema to another.

There is thus a need for a tool that can transform data conforming with a first schema into data that conforms with a second schema.

## SUMMARY OF THE INVENTION

The present invention provides a method and system for deriving transformations for transforming data from one schema to another. The present invention describes a general method and system for transforming data confirming with an input, or source data schema into an output, or target data schema. In a preferred embodiment, the present invention can be used to provide (i) an SQL query, which when applied to relational databases from a source RDBS, populates relational databases in a target RDBS; and (ii) XSLT script which, when applied to documents conforming with a source XML schema generates documents conforming with a target XML schema.

The present invention preferably uses an ontology model to determine a transformation that accomplishes a desired source to target transformation. Specifically, the present invention employs a common ontology model into which both the source data schema and target data schema can be mapped. By mapping the source and target data schema into a common ontology model, the present invention derives interrelationships among their components, and uses the interrelationships to determine a suitable transformation for transforming data conforming with the source data schema into data conforming with the target data schema.

Given a source RDBS and a target RDBS, in a preferred embodiment of the present invention an appropriate transformation of source to target databases is generated by:

(i) mapping the source and target RDBS into a common ontology model;
(ii) representing table columns of the source and target RDBS in terms of properties of the ontology model;
(iii) deriving expressions for target table columns in terms of source table columns; and
(iv) converting the expressions into one or more SQL queries.

Although the source and target RDBS are mapped into a common ontology model, the derived transformations of the present invention go directly from source RDBS to target RDBS without having to transform data via an ontological format. In distinction, prior art Universal Data Model approaches transform via a neutral model or common business objects.

The present invention applies to N relational database schema, where N≥2. Using the present invention, by mapping the RDBS into a common ontology model, data can be moved from any one of the RDBS to any other one. In distinction to prior art approaches that require on the order of $N^2$ mappings, the present invention requires at most N mappings.

For enterprise applications, SQL queries generated by the present invention are preferably deployed within an Enterprise Application Integration infrastructure. Those skilled in the art will appreciate that transformation languages other than SQL that are used by enterprise application infrastructures can be generated using the present invention. For example, IBM's ESQL language can similarly be derived for deployment on their WebSphere MQ family of products.

Given a source XML schema and a target XML schema, in a preferred embodiment of the present invention an appropriate transformation of source to target XML documents is generated by:

(i) mapping the source and target XML schema into a common ontology model;
(ii) representing elements and attributes of the source and target XML schema in terms of properties of the ontology model;
(iii) deriving expressions for target XML elements and XML attributes in terms of source XML elements and XML attributes; and
(iv) converting the expressions into an XSLT script.

There is thus provided in accordance with a preferred embodiment of the present invention a method for deriving transformations for transforming data from one data schema to another, including receiving a source data schema and a target data schema, mapping the source data schema into an ontology model, mapping the target data schema into the ontology model, and deriving a transformation for transforming data conforming to the source data schema into data conforming to the target data schema, using the ontology model.

There is further provided in accordance with a preferred embodiment of the present invention a system for deriving transformations for transforming data from one data schema to another, including a schema receiver receiving a source data schema and a target data schema, a mapping processor mapping a data schema into an ontology model, and a transformation processor deriving a transformation for transforming data conforming to the source data schema into data conforming to the target data schema, based on respective source and target mappings generated by said mapping processor for mapping said source data schema and said target data schema into a common ontology model.

There is yet further provided in accordance with a preferred embodiment of the present invention a method for building an ontology model into which data schema can be embedded, including receiving at least one data schema, and building an ontology model into which the at least one data schema can be embedded.

There is additionally provided in accordance with a preferred embodiment of the present invention a system for building an ontology model into which data schema can be embedded, including a schema receiver receiving at least one data schema, and a model builder building an ontology model into which the at least one data schema can be embedded.

There is moreover provided in accordance with a preferred embodiment of the present invention an article of manufacture including one or more computer-readable media that embody a program of instructions for transforming data from one schema to another, wherein the program of instructions, when executed by a processing system, causes the processing system to receive a source data schema and a target data schema, map the source data schema into an ontology model, map the target data schema into the ontology model, and derive a transformation for transforming data conforming to the source data schema into data conforming to the target relational database schema, using the ontology model.

There is further provided in accordance with a preferred embodiment of the present invention an article of manufacture including one or more computer-readable media that embody a program of instructions for building a common ontology model into which data schema can be embedded, wherein the program of instructions, when executed by a processing system, causes the processing system to receive at least one data schema, and build an ontology model into which the at least one data schema can be embedded.

BRIEF DESCRIPTION OF THE DRAWINGS

The present invention will be more fully understood and appreciated from the following detailed description, taken in conjunction with the drawings in which:

FIG. 1 is a simplified flowchart of a method for deriving transformations for transforming data from one schema to another, in accordance with a preferred embodiment of the present invention;
FIG. 2 is a simplified block diagram of a system for deriving transformations for transforming data from one schema to another, in accordance with a preferred embodiment of the present invention;
FIG. 3 is a simplified flowchart of a method for building a common ontology model into which one or more data schema can be embedded, in accordance with a preferred embodiment of the present invention;
FIG. 4 is a simplified block diagram of a system for building a common ontology model into which one or more data schema can be embedded, in accordance with a preferred embodiment of the present invention;
FIG. 5 is a simplified illustration of a mapping from an RDBS into an ontology model, in accordance with a preferred embodiment of the present invention;
FIG. 6 is a second simplified illustration of a mapping from an RDBS into an ontology model, in accordance with a preferred embodiment of the present invention;
FIG. 7 is a simplified illustration of relational database transformations involving constraints and joins, in accordance with a preferred embodiment of the present invention;
FIG. 8 is a simplified illustration of use of a preferred embodiment of the present invention to deploy XSLT scripts within an EAI product such as Tibco;
FIGS. 9A - 9E are illustrations of a user interface for a software application that transforms data from one relational database schema to another, in accordance with a preferred embodiment of the present invention;
FIG. 10 is an illustration of a user interface for an application that imports an RDBS into the software application illustrated in FIGS. 8A - 8E, in accordance with a preferred embodiment of the present invention;
FIGS. 11A - 11R are illustrations of a user interface for a software application that transforms data from one XML schema to another, in accordance with a preferred embodiment of the present invention;
FIG. 12 is an illustration of ontology model corresponding to a first example;
FIG. 13 is an illustration of ontology model corresponding to a second example;
FIG. 14 is an illustration of ontology model corresponding to a third example;
FIG. 15 is an illustration of ontology model corresponding to a fourth example;
FIG. 16 is an illustration of ontology model corresponding to a fifth and sixth example;
FIG. 17 is an illustration of ontology model corresponding to a seventh example.
FIG. 18 is an illustration of ontology model corresponding to an eighth example
FIG. 19 is an illustration of ontology model corresponding to a ninth example
FIG. 20 is an illustration of ontology model corresponding to a tenth example;
FIG. 21 is an illustration of ontology model corresponding to an eleventh example;
FIG. 22 is an illustration of ontology model corresponding to a twelfth and seventeenth example.
FIG. 23 is an illustration of ontology model corresponding to a thirteenth example
FIG. 24 is an illustration of ontology model corresponding to a fourteenth example
FIG. 25 is an illustration of ontology model corresponding to a twenty-second example; and
FIG. 26 is an illustration of ontology model corresponding to a twenty-third example.

DETAILED DESCRIPTION OF A PREFERRED EMBODIMENT

The present invention concerns deriving transformations for transforming data conforming with one data schema to data conforming to another data schema. Preferred embodiments of the invention are described herein with respect to table-based data schema, such as RDBS and document-based schema, such as XML schema.
Reference is now made to FIG. 1, which is a simplified flowchart of a method for deriving transformations for transforming data from one schema to another, in accordance with a preferred embodiment of the present invention. The flowchart begins at step 110. At step, 120 a source data schema and a target data schema are imported. These data schema describe templates for storing data, such as templates for tables and table columns, and templates for structured documents. If necessary, the source data schema and/or the target data schema may be converted from a standard format to an internal format. For example, they may be converted from Oracle format to an internal format.
At steps 130 - 160 a common ontology model is obtained, into which the source data schema and the target

data schema can both be embedded, At step 130 a determination is made as to whether or not an initial ontology model is to be imported. If not, logic passes directly to step 160. Otherwise, at step 140 an initial ontology model is imported. If necessary, the initial ontology model may be converted from a standard format, such as one of the formats mentioned hereinabove in the Background, to an internal format.

At step 150 a determination is made as to whether or not the initial ontology model is suitable for embedding both the source and target data schema. If so, logic passes directly to step 170. Otherwise, at step 160 a common ontology model is built. If an initial ontology model was exported, then the common ontology is preferably build by editing the initial ontology model; specifically, by adding classes and properties thereto. Otherwise, the common ontology model is built from scratch. It may be appreciated that the common ontology model may be built automatically with or without user assistance.

At step 170 the source and target data schema are mapped into the common ontology model, and mappings therefor are generated. At step 180 a transformation is derived for transforming data conforming with the source data schema into data conforming with the target data schema, based on the mappings derived at step 170. Finally, the flowchart terminates at step 190.

Reference is now made to FIG. 2, which is a simplified block diagram of a system 200 for deriving transformations for transforming data from one schema to another, in accordance with a preferred embodiment of the present invention. Shown in FIG. 2 is a schema receiver 210 for importing a source data schema and a target data schema. These data schema describe templates for storing data, such as templates for tables and table columns, and templates for structured documents. If necessary, schema receiver 210 converts the source and target data schema from an external format to an internal format.

Also shown in FIG. 2 is an ontology receiver / builder 220 for obtaining a common ontology model, into which the source data schema and the target data schema can both be embedded. The operation of ontology receiver /builder 220 is described hereinabove in steps 130 - 160 of FIG. 1.

The source and target data schema, and the common ontology model are used by a mapping processor 230 to generate respective source and target mappings, for mapping the source data schema into the common model and for mapping the target data schema into the common ontology model. In a preferred embodiment of the present invention, mapping processor 230 includes a class identifier 240 for identifying ontology classes with corresponding to components of the source and target data schema, and a property identifier 250 for identifying ontology properties corresponding to other components of the source and target data schema, as described in detail hereinbelow.

Preferably, the source and target mappings generated by mapping processor, and the imported source and target data schema are used by a transformation generator 260 to derive a source-to-target transformation, for transforming data conforming to the source data schema into data conforming to the target data schema.

Reference is now made to FIG. 3, which is a simplified flowchart of a method for building a common ontology model into which one or more data schema can be embedded, in accordance with a preferred embodiment of the present invention. The flowchart begins are step 310. Steps 120, 140 and 160 are similar to these same steps in FIG. 1, as described hereinabove. Finally, the flowchart terminates at step 320.

Reference is now made to FIG. 4, which is a simplified block diagram of a system 400 for building a common ontology model into which one or more data schema can be embedded, in accordance with a preferred embodiment of the present invention. Shown in FIG. 4 is schema receiver 210 from FIG. 2 for importing data schema. Also shown in FIG. 4 is an ontology receiver 420, for importing an initial ontology model. If necessary, ontology receiver 420 converts the initial ontology model from an external format to an internal format.

The initial ontology model and the imported data schema are used by an ontology builder 430 for generating a common ontology model, into which the imported data schema can all be embedded. In a preferred embodiment of the present invention, ontology builder 430 generates the common ontology model by editing the initial ontology model; specifically, by using a class builder 440 to add classes thereto based on components of the imported data schema, and by using a property builder 450 to add properties thereto based on other components of the imported data schema.

Applications of the present invention include inter alia:

- integrating between two or more applications that need to share data;
- transmitting data from a database schema across a supply chain to a supplier or customer using a different database schema;
- moving data from two or more databases with different schemas into a common database, in order that queries may be performed across the two or more databases;
- loading a data warehouse database for off-line analysis of data from multiple databases;
- synchronizing two databases;
- migrating data when a database schema is updated;
- moving data from an old database or database application to a replacement database or database application, respectively.

**Relational Database schema**

Relational database schema (RDBS), also referred to as table definitions or, in some instances, metadata, are used to define templates for organizing data into tables and table columns, also referred to as fields. Often multiple schema exist for the same source of data, and as such the data cannot readily be imported or exported from one application to another. The present invention describes a general method and system for transforming an input, or source relational database schema into an output, or target schema. In a preferred embodiment, the present invention can be used to provide an SQL query, which when applied to a relational database from the source schema, produces a relational database in the target schema.

As described in detail hereinbelow, the present invention preferably uses an ontology model to determine an SQL query that accomplishes a desired source to target transformation. Specifically, the present invention employs a common ontology model into which both the source RDBS and target RDBS can be mapped. By mapping the source and target RDBS into a common ontology model, the present invention derives interrelationships among their tables and fields, and uses the interrelationships to determine a suitable SQL query for transforming databases conforming with the source RDBS into databases conforming with the target RDBS.

The present invention can also be used to derive executable code that transforms source relational databases into the target relational databases. In a preferred embodiment, the present invention creates a Java program that executes the SQL query using the JDBC (Java Database Connectivity) library. In an alternative embodiment the Java program manipulates the databases directly, without use of an SQL query.

For enterprise applications, SQL queries generated by the present invention are preferably deployed within an Enterprise Application Integration infrastructure.

Although the source and target RDBS are mapped into a common ontology model, the derived transformations of the present invention go directly from source RDBS to target RDBS without having to transform data via an ontological format. In distinction, prior art Universal Data Model approaches transform via a neutral model.

The present invention applies to N relational database schema, where N≥2. Using the present invention, by mapping the RDBS into a common ontology model, data can be moved from any one of the RDBS to any other one. In distinction to prior art approaches that require on the order of $N^2$ mappings, the present invention requires at most N mappings.

A "mapping" from an RDBS into an ontology model is defined as:

(i) an association of each table from the RDBS with a class in the ontology model, in such a way that rows of the table correspond to instances of the class; and

(ii) for each given table from the RDBS, an association of each column of the table with a property or a composition of properties in the ontology model, the source of which is the class corresponding to the given table and the target of which has a data type that is compatible with the data type of the column.

A mapping from an RDBS into an ontology model need not be surjective. That is, there may be classes and properties in the ontology that do not correspond to tables and columns, respectively, in the RDBS. A mapping is useful in providing a graph representation of an RDBS.

In general, although a mapping from an RDBS into an ontology model may exist, the nomenclature used in the RDBS may differ entirely from that used in the ontology model. Part of the utility of the mapping is being able to translate between RDBS language and ontology language. It may be appreciated by those skilled in the art, that in addition to translating between RDBS table /column language and ontology class / property language, a mapping is also useful in translating between queries from an ontology query language and queries from an RDBS language such as SQL (standard query language).

Reference is now made to FIG. 5, which is a first simplified illustration of a mapping from an RDBS into an ontology model, in accordance with a preferred embodiment of the present invention. Shown in FIG. 5 is a table 500, denoted T1, having four columns denoted C1, C2, C3 and C4. Also shown in FIG. 1 is an ontology model 550 having a class denoted K1 and properties P1, P2, P3 and P4 defined on class T1. The labeling indicates a mapping from table T1 into class K1, and from columns C1, C2, C3 and C4 into respective properties P1, P2, P3 and P4.

Reference is now made to FIG. 6, which is a second simplified illustration of a mapping from an RDBS into an ontology model, in accordance with a preferred embodiment of the present invention. Shown in FIG. 6 are table T1 from FIG. 5, and a second table 600, denoted T2, having four columns denoted D1, D2, D3 and D4. Column C1 of table T1 is a key; i.e., each entry for column C1 is unique, and can be used as an identifier for the row in which it is situated. Column D3 of table T2 refers to table T1, by use of the key from column C1. That is, each entry of column D3 refers to a row within table T1, and specifies such row by use of the key from C1 for the row.

Also shown in FIG. 6 is an ontology model 650 having two classes, denoted K1 and K2. Class K1 has properties P1, P2, P3 and P4 defined thereon, and class K2 has properties Q1, Q2, Q4 and S defined thereon. Property S has

as its source class K1 and as its target class K2. The labeling indicates a mapping from table T1 into class K1, and from columns C1, C2, C3 and C4 into respective properties P1, P2, P3 and P4. The fact that C1 serves as a key corresponds to property P1 being one-to-one, so that no two distinct instances of class K1 have the same values for property P1.

The labeling also indicates a mapping from table T2 into class K2, and from columns D1, D2 and D4 into respective properties Q1, Q2 and Q4. Column D3 corresponds to a composite property P1oS, where o denotes function composition. In other words, column D3 corresponds to property P1 of S(K2).

The targets of properties P1, P2, P3, P4, Q1, Q2 and Q4 are not shown in FIG. 6, since these properties preferably map into fundamental types corresponding to the data types of the corresponding columns entries. For example, the target of P1 may be an integer, the target of P2 may be a floating point number, and the target of P3 may be a character string. Classes for such fundamental types are not shown in order to focus on more essential parts of ontology model 650.

Classes K1 and K2, and property S are indicated with dotted lines in ontology model 650. These parts of the ontology are transparent to the RDBS underlying tables T1 and T2. They represent additional structure present in the ontology model which is not directly present in the RDBS.

Given a source RDBS and a target RDBS, in a preferred embodiment of the present invention an appropriate transformation of source to target RDBS is generated by:

(i) mapping the source and target RDBS into a common ontology model;
(ii) representing fields of the source and target RDBS in terms of properties of the ontology model, using symbols for properties;
(iii) deriving expressions for target symbols in terms of source symbols; and
(iv) converting the expressions into one or more SQL queries.

Reference is now made to FIG. 7, which is a simplified illustration of relational database transformations involving constraints and joins, in accordance with a preferred embodiment of the present invention.

<u>**XML schema**</u>

As described in detail hereinbelow, the present invention preferably uses an ontology model to determine an XSLT transformation that accomplishes a desired source to target transformation. Specifically, the present invention employs a common ontology model into which both the source XML schema and target XML schema can be mapped. By mapping the source and target XML schema into a common ontology model, the present invention derives interrelationships among their elements and attributes, and uses the interrelationships to determine suitable XSLT script for transforming documents generating documents conforming with the target XML schema from documents conforming with the source XML schema.

The present invention can also be used to derive executable code that transforms source XML documents into the target XML documents. In a preferred embodiment, the present invention packages the derived XSLT script with a Java XSLT engine to provide an executable piece of Java code that can execute the transformation.

Preferably, this is used to deploy XSLTs within an EAI product such as Tibco. Specifically, in a preferred embodiment of the present invention, a function (similar to a plug-in) is installed in a Tibco MessageBroker, which uses the Xalan XSLT engine to run XSLT scripts that are presented in text form. As an optimization, the XSLT script files are preferably compiled to Java classfiles.

Reference is now made to FIG. 8, which is a simplified illustration of use of a preferred embodiment of the present invention to deploy XSLT scripts within an EAI product such as Tibco.

<u>**User Interface**</u>

Applicant has developed a software application, named COHERENCE™, which implements a preferred embodiment of the present invention to transform data from one schema to another. Coherence enables a user

- to import source and target RDBS;
- to build an ontology model into which both the source and target RDBS can be mapped;
- to map the source and target RDBS into the ontology model; and
- to impose constraints on properties of the ontology model. Once the mappings are defined, Coherence generates an SQL query to transform the source RDBS into the target RDBS.

Reference is now made to FIGS. 9A - 9E, which are illustrations of a user interface for transforming data from

one relational database schema to another using the Coherence software application, in accordance with a preferred embodiment of the present invention. Shown in FIG. 9A is a main Coherence window 905 with a left pane 910 and a right pane 915. Window 905 includes three primary tabs 920, 925 and 930, labeled Authoring, Mapping and Transformations, respectively. Authoring tab 920 is invoked in order to display information about the ontology model, and to modify the model by adding, deleting and editing classes and properties. Mapping tab 925 is invoked in order to display information about the RDBS and the mappings of the RDBS into the ontology, and to edit the mappings. Transformations tab 930 is invoked to display transformations in the form of SQL queries, from a source RDBS into a target RDBS. In FIG. 9A, tab 920 for Authoring is shown selected.

Left pane 910 includes icons for two modes of viewing an ontology: icon 935 for viewing in inheritance tree display mode, and icon 940 for viewing in package display mode.

Inheritance tree display mode shows the classes of the ontology in a hierarchical fashion corresponding to superclass and subclass relationships. As illustrated in FIG. 9A, in addition to the fundamental classes for Date, Number, Ratio, String and NamedElement, there is a class for City. Corresponding to the class selected in left pane 910, right pane 915 displays information about the selected class. Right pane 915 includes six tabs for class information display: tab 945 for General, tab 950 for Properties, tab 955 for Subclasses, tab 960 for Enumerated Values, tab 965 for Relations and tab 970 for XML schema. Shown in FIG. 9A is a display under tab 945 for General. The display includes the name of the class, Being, and the package to which it belongs; namely, fundamental. Also shown in the display is a list of immediate superclasses, which is an empty list for class Being. Also shown in the display is a textual description of the class; namely, that Being is a root class for all classes.

Tab 960 for Enumerated Values applies to classes with named elements; i.e., classes that include a list of all possible instances. For example, a class Boolean has enumerated values "True" and "False," and a class Gender may have enumerated values "Male" and "Female."

FIG. 9B illustrates package display mode for the ontology. Packages are groups including one or more ontology concepts, such as classes, and properties. Packages are used to organize information about an ontology into various groupings. As illustrated in FIG. 9B, there is a fundamental package that includes fundamental classes, such as Being, Boolean, Date and Integer. Also shown in FIG. 9B is a package named WeatherFahrenheit, which includes a class named City.

As shown in FIG. 9B, City is selected in left pane 910 and, correspondingly, right pane 915 displays information about the class City. Right pane 915 display information under Tab 950 for Properties. As can be seen, class City belongs to the package WeatherFahrenheit, and has four properties; namely, Celsius of type RealNumber, city of type String, Fahrenheit of type RealNumber and year of type RealNumber. FIG. 9B indicates that the property Celsius satisfies a constraint. Specifically, Celsius = 5 * (Fahrenheit - 32) / 9.

In FIG. 9C, the tab 925 for Mapping is shown selected. As shown in the left pane of FIG. 9C, two RDBS have been imported into Coherence. A first RDBS named WeatherCelsius, which includes a table named **Towns,** and a second RDBS named WeatherFahrenheit, which includes a table named **Cities.**

The table named **Cities** is shown selected in FIG. 9C, and correspondingly the right pane display information regarding the mapping of **Cities** into the ontology. As can be seen, the table **Cities** contains three fields; namely, Fahrenheit, city and year. The table **Cities** has been mapped into the ontology class City, the field Fahrenheit has been mapped into the ontology property Fahrenheit, the field city has been mapped into the ontology property name, and the field year has been mapped into the ontology property year. The RDBS WeatherFahrenheit will be designated as the source RDBS.

When tab 925 for Mapping is selected, the right pane includes three tabs for displaying information about the RDBS: tab 975 for Map Info, tab 980 for Table Info and tab 985 for Foreign Keys.

The RDBS named WeatherCelsius is displayed in FIG. 9D. As can be seen, the table **Towns** contains three fields; namely, town, Celcius and year. The table **Towns** has been mapped into the ontology class City, the field town has been mapped into the ontology property name, the field Celcius has been mapped into the ontology property Celcius, and the field year had been mapped into the ontology property year. The RDBS WeatherCelcius will be designated as the target RDBS.

As such, the target RDBS is

| Table I: **Towns** | | |
|---|---|---|
| Town | Celcius | Year |
| | | |
| | | |
| | | |

and the source RDBS is

| Table II: **Cities** | | |
|---|---|---|
| Fahrenheit | City | Year |
| | | |
| | | |
| | | |

In FIG. 9E, the tab 930 for Transformations is shown selected. As can be seen in the right pane, the source table is **Cities** and the target table is **Towns.** The SQL query

```
INSERT INTO WeatherCelcius.Towns(CELCIUS, TOWN, YEAR)
(SELECT
            (5 * (A.FAHRENHEIT – 32) / 9) AS CELCIUS,
            A.CITY AS TOWN,
            A.YEAR AS YEAR
FROM
            WeatherFahrenheit.Cities A);
```

accomplishes the desired transformation.

Reference is now made to FIG. 10, which is an illustration of a user interface for an application that imports an RDBS into Coherence, in accordance with a preferred embodiment of the present invention. Shown in FIG. 10 is a window 1010 for a schema convertor application. Preferably, a user specifies the following fields:

- Database Name 1020: What Oracle refers to as an SID (System Identifier).
- Host Name 1030: The name of an Oracle 8i server (or Global Database Name).
- Port 1040: Port number
- Username 1050: The username of a user with privileges to the relevant schemas.
- Password 1060: The password of the user with privileges to the relevant schemas.
- Oracle schema 1070: The schema or database in Oracle to be converted to .SML format. The .SML format is an internal RDBS format used by Coherence. When importing more than one schema, a semicolon (;) is placed between schema names.
- Coherence schema 2080: The label identifying the RDBS that is displayed on the Mapping Tab in Coherence. This field is optional; if left blank, the Oracle schema name will be used.
- Output File 1090: A name for the .SML file generated.

Reference is now made to FIGS. 11A - 11R, which are illustrations of a for transforming data from one XML schema to another using the Coherence software application, in accordance with a preferred embodiment of the present

invention. Shown in FIG. 11A is a window with package view of an Airline Integration ontology model in its left lane. The left pane displays classes from a fundamental package. A class Date is shown highlighted, and its properties are shown in the right pane. Fundamental packages are used for standard data types. Shown in FIG. 11B is a window with a hierarchical view of the Airline Integration ontology model in its left pane. The left pane indicates that FrequentFlyer is a subclass of Passenger, Passenger is a subclass of Person, and Person is a subclass of Being. The right pane displays general information about the class FrequentFlyer.

FIG. 11C shows a window used for opening an existing ontology model. In the Coherence software application, ontology models are described using XML and stored in .oml files. Such files are described in applicant's copending patent application U.S. Serial No. 09/866,101 filed on May 25, 2001 and entitled METHOD AND SYSTEM FOR COLLABORATIVE ONTOLOGY MODELING, the contents of which are hereby incorporated by reference.

FIG. 11D shows the hierarchical view from FIG. 11B, indicating properties of the FrequentFlyer class. The property fullName is highlighted, and a window for constraint information indicates that there is a relationship among the ontology properties firstName, lastName and fullName; namely, that fullName is the concatenation of firstName and lastName with a white space therebetween. This relationship is denoted as Constraint_5.

FIG. 11E shows the hierarchical view from FIG. 11B, indicating test instance of the Passenger class. A list of instances is displayed in the right pane, along with property values for a specific selected instance from the list.

FIG. 11F shows two imported XML schema for airline information. FIG. 11G shows a window for importing XML schema into Coherence. FIG. 11H shows a window with a display of an imported XML schema for British Airways, with a list of complexTypes from the imported schema. The complexType Journey is selected, and the right pane indicates that Journey and its elements are currently not mapped to a class and properties of the ontology model.

FIG. 11I shows a window for generating a mapping from the British Airways XML schema into the Airline Integration ontology model. The ontology class Flight is shown selected to correspond to the XML ComplexType Journey. FIG. 11J shows the left pane from FIG. 11H, with the right pane now indicating that the XML complexType Journey from the British Airways XML schema has been mapped to the class Flight from the Airline Integration ontology model. FIG. 11K shows the left pane from FIG. 11H, with a window for selecting properties and indirect properties (i.e., compositions of properties) to correspond to elements from the XML schema. Shown selected in FIG. 11K is a property *distanceInMiles*() of the class Flight. FIG. 11L shows the left pane from FIG. 11H, with the right pane now indicated that Journey has been mapped to Flight, and the XML element distance_in_miles within the complexType Journey has been mapped to the property *distanceInMiles*() of the class Flight. FIG. 11M shows the left pane from FIG. 11H, with the right pane now indicating that the mapping has been extended to all XML elements of the complexType Journey, showing the respective properties to which each element is mapped. FIG. 11N shows schema info for the complexType Journey, listing its elements and their data types.

FIG. 11O shows a window for specifying a transformation to be derived. Shown in FIG. 11O is a request to derive a transformation from a source data schema, namely, the imported SwissAir XML schema to a target data schema, namely, the imported British Airways XML schema. Shown in FIG. 11P is an XSLT script generated to transform XML documents conforming to the SwissAir schema to XML documents conforming to the British Airways schema. FIG. 11Q shows a specific transformation of a SwissAir XML document to a British Airways XML document, obtained by applying the derived XSLT script from FIG. 11P. Finally, FIG. 11R shows a display of the newly generated British Airways XML document with specific flights and passengers.

## Examples

For purposes of clarity and exposition, the workings of the present invention are described first through a series of twenty-three examples, followed by a general description of implementation. Two series of examples are presented. The first series, comprising the first eleven examples, relates to RDBS transformations. For each of these examples, a source RDBS and target RDBS are presented as input, along with mappings of these schema into a common ontology model. The output is an appropriate SQL query that transforms database tables that conform to the source RDBS, into database tables that conform to the target RDBS. Each example steps through derivation of source and target symbols, expression of target symbols in terms of source symbols and derivation of an appropriate SQL query based on the expressions.

The second series of examples, comprising the last twelve examples, relates to XSLT transformation. For each of these examples, a source XML schema and target XML schema are presented as input, along with mappings of these schema into a common ontology model. The output is an appropriate XSLT script that transforms XML documents that conform to the source schema into XML documents that conform to the target schema.

### A First Example: Schoolchildren

In a first example, a target table is of the following form:

| Table III: Target Table **T** for First Example | | | |
|---|---|---|---|
| Child_Name | Mother_Name | School_Location | Form |
| | | | |
| | | | |
| | | | |

Four source tables are given as follows:

| Table IV: Source Table $S_1$ for First Example | | |
|---|---|---|
| Name | School_Attending | Mother_NI_Number |
| | | |
| | | |
| | | |

| Table V: Source Table $S_2$ for First Example | | | |
|---|---|---|---|
| NI_Number | Name | Region | Car_Number |
| | | | |
| | | | |
| | | | |

| Table VI: Source Table $S_3$ for First Example | | |
|---|---|---|
| Name | Location | HeadTeacher |
| | | |
| | | |
| | | |

| Table VII: Source Table $S_4$ for First Example | | |
|---|---|---|
| Name | Year | Form |
| | | |
| | | |
| | | |

The underlying ontology is illustrated in FIG. 12. The dotted portions of the ontology in FIG. 12 show additional ontology structure that is transparent to the relational database schema. Using the numbering of properties indicated in FIG. 12, the unique properties of the ontology are identified as:

| Table VIII: Unique Properties within Ontology for First Example | |
|---|---|
| Property | Property Index |
| *name*(Child) | 6 |
| *national_insurance_number*(Person) | 4 |
| *name*(School) | 10 |

The mapping of the target schema into the ontology is as follows:

| Table IX: Mapping from Target schema to Ontology for First Example | | |
|---|---|---|
| schema | Ontology | Property Index |
| **T** | Class: Child | |
| **T**.Child_Name | Property: *name*(Child) | 6 |
| **T**.Mother_Name | Property: *name*(*mother*(Child)) | 3o5 |
| **T**.School_Location | Property: *location*(*school_attending*(Child)) | 12o9 |
| **T**.Form | Property: *current_school_form*(Child) | 8 |

The symbol o is used to indicate composition of properties. The mapping of the source schema into the ontology is as follows:

| Table X: Mapping from Source schema to Ontology for First Example | | |
|---|---|---|
| schema | Ontology | Property Index |
| $S_1$ | Class: Child | |
| $S_1$.Name | Property: *name*(Child) | 6 |
| $S_1$.School_Attending | Property: *name*(*school_attending*(Child)) | 10o9 |
| $S_1$.Mother_NI_Number | Property: *national_insurance_number*(*mother*(Child)) | 4o5 |
| $S_2$ | Class: Person | |
| $S_2$.NI_Number | Property: *national_insurance_number*(Person) | 4 |
| $S_2$.Name | Property: *name*(Person) | 3 |
| $S_2$.Region | Property: *region_of_residence*(Person) | 1 |
| $S_2$.Car_Number | Property: *car_registration_number*(Person) | 2 |
| $S_3$ | Class: School | |
| $S_3$.Name | Property: *name*(School) | 10 |
| $S_3$.Location | Property: *location*(School) | 12 |
| $S_3$.HeadTeacher | Property: *name*(*headteacher*(School)) | 3o11 |
| $S_4$ | Class: Child | |
| $S_4$.Name | Property: *name*(Child) | 6 |
| $S_4$.Year | Property: *year_of_schooling*(Child) | 7 |
| $S_4$.Form | Property: *current_school_form*(Child) | 8 |

The indices of the source properties are:

| Table XI: Source Symbols for First Example | |
|---|---|
| Source Table | Source Symbols |
| $S_1$ | |
| | $10o9o6^{-1}$ |
| | $4o5o6^{-1}$ |
| $S_2$ | |
| | $3o4^{-1}$ |
| | $1o4^{-1}$ |
| | $2o4^{-1}$ |
| $S_3$ | |
| | $12o10^{-1}$ |
| | $3o11o10^{-1}$ |
| $S_4$ | |
| | $7o6^{-1}$ |
| | $8o6^{-1}$ |

The symbols in Table XI relate fields of a source table to a key field. Thus in table $\mathbf{S_1}$ the first field, $\mathbf{S_1}$.Name is a key field. The second field, $\mathbf{S_1}$.School_Attending is related to the first field by the composition $10o9o6^{-1}$, and the third field, $\mathbf{S_1}$.Mother_NI_Number is related to the first field by the composition $4o5o6^{-1}$. In general, if a table contains more than one key field, then expressions relative to each of the key fields are listed.

The inverse notation, such as $6^{-1}$ is used to indicate the inverse of property 6. This is well defined since property 6 is a unique, or one-to-one, property in the ontology model. The indices of the target properties, keyed on Child_Name are:

| Table XII: Target Symbols for First Example | | |
|---|---|---|
| Target Table | Target Symbols | Paths |
| **T** | | |
| | $3o5o6^{-1}$ | $(3o4^{-1})$ o $(4o5o6^{-1})$ |
| | $12o9o6^{-1}$ | $(12o10^{-1})$ o $(10o9o6^{-1})$ |
| | $8o6^{-1}$ | $(8o6^{-1})$ |

Based on the paths given in Table XII, the desired SQL query is:

```
INSERT INTO T(Child_Name, Mother_Name, School_Location, Form)
(SELECT
        S1.Name AS Child_Name,
        S2.Name AS Mother_Name,
        S3.Location AS School_Location,
        S4.Form AS Form
FROM
        S1, S2, S3, S4
WHERE
        S2.NI_Number = S1.Mother_NI_Number AND
        S3.Name = S1.School_Attending AND
        S4.Name = S1.Name);
```

The rules provided with the examples relate to the stage of converting expressions of target symbols in terms of source symbols, into SQL queries. In general,

**Rule 1:** When a target symbol is represented using a source symbols, say ($aob^{-1}$), from a source table, S, then the column of S mapping to a is used in the SELECT clause of the SOL query and the column of S mapping to b is used in the WHERE clause.
**Rule 2:** When a target symbol is represented as a composition of source symbols, say ($aob^{-1}$) o ($boc^{-1}$), where $aob^{-1}$ is taken from a first source table, say $S_1$, and $boc^{-1}$ is taken from a second source table, say $S_2$, then $S_1$ and $S_2$ must be joined in the SOL query by the respective columns mapping to b.
**Rule 3:** When a target symbol is represented using a source symbols, say ($aob^{-1}$), from a source table, S, and is not composed with another source symbol of the form $boc^{-1}$, then table S must be joined to the target table through the column mapping to b.

When applied to the following sample source data, Tables XIII, XIV, XV and XVI, the above SQL query produces the target data in Table XVII.

Table XIII: Sample Source Table $S_1$ for First Example

| Name | School_Attending | Mother_NI_Number |
|---|---|---|
| Daniel Ashton | Chelsea Secondary School | 123456 |
| Peter Brown | Warwick School for Boys | 673986 |
| Ian Butler | Warwick School for Boys | 234978 |
| Matthew Davies | Manchester Grammar School | 853076 |
| Alex Douglas | Weatfields Secondary School | 862085 |
| Emma Harrison | Camden School for Girls | 275398 |
| Martina Howard | Camden School for Girls | 456398 |

| Table XIV: Sample Source Table $S_2$ for First Example | | | |
|---|---|---|---|
| NI_Number | Name | Region | Car_Number |
| 123456 | Linda | London | NULL |
| 673986 | Amanda | Warwick | NULL |
| 456398 | Claire | Cambridgeshire | NULL |
| 862085 | Margaret | NULL | NULL |
| 234978 | Amanda | NULL | NULL |
| 853076 | Victoria | Manchester | NULL |
| 275398 | Elizabeth | London | NULL |

| Table XV: Sample Source Table $S_3$ for First Example | | |
|---|---|---|
| Name | Location | HeadTeacher |
| Manchester Grammar School | Manchester | M. Payne |
| Camden School for Girls | London | J. Smith |
| Weatfields Secondary School | Cambridgeshire | NULL |
| Chelsea Secondary School | London | I. Heath |
| Warwick School for Boys | Warwickshire | NULL |

| Table XVI: Sample Source Table $S_4$ for First Example | | |
|---|---|---|
| Name | Year | Form |
| Peter Brown | 7 | Lower Fourth |
| Daniel Ashton | 10 | Mid Fifth |
| Matthew Davies | 4 | Lower Two |
| Emma Harrison | 6 | Three |
| James Kelly | 3 | One |
| Greg McCarthy | 5 | Upper Two |
| Tina Reynolds | 8 | Upper Fourth |

| Table XVII: Sample Target Table **T** for First Example | | | |
|---|---|---|---|
| Child_Name | Mother_Name | School_Location | Form |
| Daniel Ashton | Linda | London | Mid Fifth |
| Peter Brown | Amanda | Warwickshire | Lower Fourth |
| Matthew Davies | Victoria | Manchester | Lower Two |
| Emma Harrison | Elizabeth | London | Three |

A Second Example: Employees

In a second example, a target table is of the following form:

| Table XVIII: Target Table **T** for Second Example | | | |
|---|---|---|---|
| Name | Department | Supervisor | Room# |
| | | | |
| | | | |

Four source tables are given as follows:

| Table XIX: Source Table $S_1$ for Second Example | | |
|---|---|---|
| Emp_ID# | Name | Department |
| | | |
| | | |

| Table XX: Source Table $S_2$ for Second Example | | |
|---|---|---|
| Employee_Name | Supervisor | Project |
| | | |
| | | |

| Table XXI: Source Table $S_3$ for Second Example | | |
|---|---|---|
| ID# | Room_Assignment | Telephone# |
| | | |
| | | |

| Table XXII: Source Table $S_4$ for Second Example | |
|---|---|
| Department | Budget |
| | |
| | |

The underlying ontology is illustrated in FIG. 13. The dotted portions of the ontology in FIG. 13 are additional ontology structure that is transparent to the relational database schema. The unique properties of the ontology are:

| Table XXIII: Unique Properties within Ontology for Second Example | |
|---|---|
| Property | Property Index |
| *name*(Employee) | 3 |
| *ID#*(Employee) | 4 |

The mapping of the target schema into the ontology is as follows:

| Table XXIV: Mapping from Target schema to Ontology for Second Example | | |
|---|---|---|
| schema | Ontology | Property Index |
| **T** | Class: Employee | |
| **T**.Name | Property: *name*(Employee) | 3 |
| **T**.Department | Property: *code*(*departmental_affiliation*(Employee)) | 8o7 |
| **T**.Supervisor | Property: *name*(*supervisor*(Employee)) | 3o6 |
| **T**.Room# | Property: *room_number*(Employee) | 1 |

The mapping of the source schema into the ontology is as follows:

| Table XXV: Mapping from Source schema to Ontology for Second Example | | |
|---|---|---|
| schema | Ontology | Property Index |
| $S_1$ | Class: Employee | |
| $S_1$.Emp_ID# | Property: *ID#*(Employee) | 4 |
| $S_1$.Name | Property: *name*(Employee) | 3 |
| $S_1$.Department | Property: *code(departmental_affiliation*(Employee)) | 8o7 |
| $S_2$ | Class: Employee | |
| $S_2$.Employee_Name | Property: *name*(Employee) | 3 |
| $S_2$.Supervisor | Property: *name*(*supervisor*(Employee)) | 3o6 |
| $S_2$.Project | Property: *project_assignment*(Employee) | 5 |
| $S_3$ | Class: Employee | |
| $S_3$.ID# | Property: *ID#*(Employee) | 4 |
| $S_3$.Room_Assignment | Property: *room_number*(Employee) | 1 |
| $S_3$.Telephone# | Property: *tel#*(Employee) | 2 |
| $S_4$ | Class: Department | |
| $S_4$.Department | Property: *code*(Department) | 8 |
| $S_4$.Budget | Property: *budget_amount*(Department) | 9 |

The indices of the source properties are:

| Table XXVI: Source Symbols for Second Example | |
|---|---|
| Source Table | Source Symbols |
| $S_1$ | |
| | $3o4^{-1}$ |
| | $8o7o4^{-1}$ |
| | $4o3^{-1}$ |
| | $8o7o3^{-1}$ |
| $S_2$ | |
| | $3o6o3^{-1}$ |
| | $5o3^{-1}$ |
| $S_3$ | |
| | $1o4^{-1}$ |
| | $2o4^{-1}$ |
| $S_4$ | |
| | $9o8^{-1}$ |

The indices of the target properties, keyed on Name are:

| Table XXVII: Target Symbols for Second Example | | |
|---|---|---|
| Target Table | Target Symbols | Paths |
| **T** | | |
| | $8o7o3^{-1}$ | $(8o7o3^{-1})$ |
| | $3o6o3^{-1}$ | $(3o6o3^{-1})$ |
| | $1o3^{-1}$ | $(1o4^{-1})$ o $(4o3^{-1})$ |

Based on the paths given in Table XXVII, the desired SQL query is:

```
INSERT INTO T(Name, Department, Supervisor, Room#)
(SELECT
            S1.Name AS Name,
            S1.Department AS Department,
            S2.Supervisor AS Supervisor,
            S3.Room_Assignment AS Room#
FROM
            S1, S2, S3
WHERE
            S2.Employee_Name = S1.Name AND S3.ID# = S1.Emp_ID#);
```

It is noted that Table $S_4$ not required in the SQL. When applied to the following sample source data, Tables XXVIII, XXIX and XXX, the above SQL query produces the target data in Table XXXI.

| Table XXVIII: Sample Source Table $S_1$ for Second Example | | |
|---|---|---|
| Emp_ID# | Name | Department |
| 198 | Patricia | SW |
| 247 | Eric | QA |
| 386 | Paul | IT |

| Table XXIX: Sample Source Table $S_2$ for Second Example | | |
|---|---|---|
| Employee_Name | Supervisor | Project |
| Eric | John | Release 1.1 |
| Patricia | George | Release 1.1 |
| Paul | Richard | Release 1.1 |

| Table XXX: Sample Source Table $S_3$ for Second Example | | |
|---|---|---|
| ID# | Room_Assignment | Telephone# |
| 386 | 10 | 106 |
| 198 | 8 | 117 |
| 247 | 7 | 123 |

| Table XXXI: Sample Target Table **T** for Second Example | | | |
|---|---|---|---|
| Name | Department | Supervisor | Room# |
| Patricia | SW | George | 8 |
| Eric | QA | John | 7 |
| Paul | IT | Richard | 10 |

**A Third Example: Airline Flights**

In a third example, a target table is of the following form:

| Table XXXII: Target Table **T** for Third Example | | |
|---|---|---|
| FlightID | DepartingCity | ArrivingCity |
| | | |
| | | |

Two source tables are given as follows:

| Table XXXIII: Source Table $S_1$ for Third Example | | |
|---|---|---|
| Index | APName | Location |
| | | |
| | | |

| Table XXXIV: Source Table $S_2$ for Third Example | | |
|---|---|---|
| FlightID | FromAirport | ToAirport |
| | | |
| | | |

The underlying ontology is illustrated in FIG. 14. The dotted portions of the ontology in FIG. 14 are additional ontology structure that is transparent to the relational database schema. The unique properties of the ontology are:

| Table XXXV: Unique Properties within Ontology for Third Example | |
|---|---|
| Property | Property Index |
| *name*(Airport) | 1 |
| *ID*(Flight) | 6 |

The mapping of the target schema into the ontology is as follows:

| Table XXXVI: Mapping from Target schema to Ontology for Third Example | | |
|---|---|---|
| schema | Ontology | Property Index |
| T | Class: Flight | |
| T.FlightID | Property: *ID#*(Flight) | 6 |
| T.DepartingCity | Property: *location*(*from_airport*(Flight)) | 204 |
| T.ArrivingCity | Property: *location*(*to_airport*(Flight)) | 205 |

The mapping of the source schema into the ontology is as follows:

| Table XXXVII: Mapping from Source schema to Ontology for Third Example | | |
|---|---|---|
| schema | Ontology | Property Index |
| $S_1$ | Class: Airport | |
| $S_1$.Index | Property: *Index*(Airport) | 3 |
| $S_1$.APName | Property: *name*(Airport) | 1 |
| $S_1$.Location | Property: *location*(Airport) | 2 |
| $S_2$ | Class: Flight | |
| $S_2$.FlightID | Property: *ID#*(Flight) | 6 |
| $S_2$.FromAirport | Property: *name*(*from_airport*(Flight)) | 104 |
| $S_2$.ToAirport | Property: *name*(*to_airport*(Flight)) | 105 |

The indices of the source properties are:

| Table XXXVIII: Source Symbols for Third Example | |
|---|---|
| Table | Source Symbols |
| $S_1$ | |
| | $1o3^{-1}$ |
| | $2o3^{-1}$ |
| | $3o1^{-1}$ |
| | $2o1^{-1}$ |
| $S_2$ | |
| | $1o4o6^{-1}$ |
| | $1o5o6^{-1}$ |

The indices of the target properties, keyed on FlightID are:

| Table XXXIX: Target Symbols for Third Example | | |
|---|---|---|
| Table | Target Symbols | Paths |
| **T** | | |
| | $2o4o6^{-1}$ | $(2o1^{-1})$ o $(1o4o6^{-1})$ |
| | $2o5o6^{-1}$ | $(2o1^{-1})$ o $(1o5o6^{-1})$ |

Since the path $(2o1^{-1})$ appears in two rows of Table XXXIX, it is necessary to create two tables for $S_1$ in the SQL query. Based on the paths given in Table XXXVII, the desired SQL query is:

```
INSERT INTO T(FlightID, DepartingCity, ArrivingCity)
(SELECT
        S2.FlightID AS FlightID,
        S11.Location AS DepartingCity,
        S12.Location AS ArrivingCity
FROM
        S1 S11, S1 S12, S2
WHERE
        S11.APName = S2.FromAirport AND
        S12.APName = S2.ToAirport);
```

In general,

**Rule 4:** When the same source symbol is used multiple times in representing target symbols each occurrence of the source symbol must refer to a different copy of the source table containing it.

When applied to the following sample source data, Tables XL and XLI, the above SQL query produces the target data in Table XLII.

| Table XL: Sample Source Table $\mathbf{S_1}$ for Third Example | | |
|---|---|---|
| Index | APName | Location |
| 1 | Orly | Paris |
| 2 | JFK | New York |
| 3 | LAX | Los Angeles |
| 4 | HNK | Hong Kong |
| 5 | TLV | Tel Aviv |
| 6 | Logan | Boston |

| Table XLI: Sample Source Table $\mathbf{S_2}$ for Third Example | | |
|---|---|---|
| FlightID | FromAirport | ToAirport |
| 001 | Orly | JFK |
| 002 | JFK | LAX |
| 003 | TLV | HNK |
| 004 | Logan | TLV |

| Table XLII: Sample Target Table **T** for Third Example | | |
|---|---|---|
| FlightID | DepartingCity | ArrivingCity |
| 001 | Paris | New York |
| 002 | New York | Los Angeles |
| 003 | Tel Aviv | Hong Kong |
| 004 | Boston | Tel Aviv |

**A Fourth Example: Lineage**

In a fourth example, a target table is of the following form:

| Table XLIII: Target Table **T** for Fourth Example | | |
|---|---|---|
| ID | Name | Father_Name |
| | | |
| | | |

One source table is given as follows:

| Table XLIV: Source Table **S** for Fourth and Fifth Examples | | |
|---|---|---|
| ID | Name | Father_ID |
| | | |
| | | |

The underlying ontology is illustrated in FIG. 15. The dotted portions of the ontology in FIG. 15 are additional ontology structure that is transparent to the relational database schema. The unique properties of the ontology are:

| Table XLV: Unique Properties within Ontology for Fourth and Fifth Examples | |
|---|---|
| Property | Property Index |
| *name*(Person) | 1 |
| *ID#*(Person) | 2 |

The mapping of the target schema into the ontology is as follows:

| Table XLVI: Mapping from Target schema to Ontology for Fourth Example | | |
|---|---|---|
| schema | Ontology | Property Index |
| **T** | Class: Person | |
| **T**.ID | Property: *ID#*(Person) | 2 |
| **T**.Name | Property: *name*(Person) | 1 |
| **T**.Father_Name | Property: *name*(*father*(Person)) | 1o3 |

The mapping of the source schema into the ontology is as follows:

| Table XLVII: Mapping from Source schema to Ontology for Fourth and Fifth Examples | | |
|---|---|---|
| schema | Ontology | Property Index |
| S | Class: Person | |
| S.ID | Property: *ID#*( Person) | 2 |
| S.Name | Property: *name*(Person) | 1 |
| S.Father_ID | Property: *ID#*(*father*(Person)) | 2o3 |

The indices of the source properties are:

| Table XLVIII: Source Symbols for Fourth and Fifth Examples | |
|---|---|
| Table | Source Symbols |
| $S_1$ | |
| | $1o2^{-1}$ |
| | $2o3o2^{-1}$ |

The indices of the target properties, keyed on ID are:

| Table XLIX: Target Symbols for Fourth Example | | |
|---|---|---|
| Table | Target Symbols | Paths |
| **T** | | |
| | $1o2^{-1}$ | $(1o2^{-1})$ |
| | $1o3o2^{-1}$ | $(1o2^{-1})$ o $(2o3o2^{-1})$ |

Based on the paths given in Table XLIX, the desired SQL query is:

```
INSERT INTO T(ID, Name, Father_ID)
(SELECT
        S1.ID AS ID,
        S1.Name AS Name,
        S2.ID AS Father_ID
FROM
        S S1, S S2
WHERE
        S2.ID = S1.Father_ID);
```

### A Fifth Example: Lineage

In a fifth example, the target property of Father_Name in the fourth example is changed to Grandfather_Name, and the target table is thus of the following form:

| Table L: Target Table **T** for Fifth Example | | |
|---|---|---|
| ID | Name | Grandfather_Name |
| | | |
| | | |

One source table is given as above in Table XLIV.
The underlying ontology is again illustrated in FIG. 15. The unique properties of the ontology are as above in Table XLV.
The mapping of the target schema into the ontology is as follows:

| Table LI: Mapping from Target schema to Ontology for Fifth Example | | |
|---|---|---|
| schema | Ontology | Property Index |
| **T** | Class: Person | |
| **T**.ID | Property: *ID#*(Person) | 2 |
| **T**.Name | Property: *name*(Person) | 1 |
| **T**.Grandfather_Name | Property: *name(father(father*(Person))) | 1o3o3 |

The mapping of the source schema into the ontology is given in Table XLVII above.
The indices of the source properties are given in Table XLVIII above.
The indices of the target properties, keyed on ID are:

| Table LII: Target Symbols for Fifth Example | | |
|---|---|---|
| Table | Target Symbols | Paths |
| **T** | | |
| | $1o2^{-1}$ | $(1o2^{-1})$ |
| | $1o3o3o2^{-1}$ | $(1o2^{-1})$ o $(2o3o2^{-1})$ o $(2o3o2^{-1})$ |

Based on the paths given in Table LII, the desired SQL query is:

```
INSERT INTO T(ID, Name, Grandfather_ID)
(SELECT
        S1.ID AS ID, S1.Name AS Name,
        S3.ID AS Grandfather_ID
FROM
        S S1, S S2, S S3
WHERE
        S3.ID = S2.Father_ID AND
        S2.ID = S1.Father_ID);
```

**A Sixth Example: Dog Owners**

In a sixth example, a target table is of the following form:

| Table LIII: Target Table **T** for Sixth Example | | |
|---|---|---|
| ID | Name | Dogs_Previous_Owner |
| | | |
| | | |

Two source tables are given as follows:

| Table LIV: Source Table $S_1$ for Sixth Example | | |
|---|---|---|
| ID | Name | Dog |
| | | |
| | | |

| Table LV: Source Table $S_2$ for Sixth Example | | |
|---|---|---|
| Owner | Name | Previous_Owner |
| | | |
| | | |

The underlying ontology is illustrated in FIG. 16. The dotted portions of the ontology in FIG. 16 are additional ontology structure that is transparent to the relational database schema. The unique properties of the ontology are:

| Table LVI: Unique Properties within Ontology for Sixth Example | |
|---|---|
| Property | Property Index |
| *ID#*(Person) | 2 |
| *name*(Dog) | 6 |

The mapping of the target schema into the ontology is as follows:

| Table LVII: Mapping from Target schema to Ontology for Sixth Example | | |
|---|---|---|
| schema | Ontology | Property Index |
| **T** | Class: Person | |
| **T**.ID | Property: *ID#*(Person) | 2 |
| **T**.Name | Property: *name*(Person) | 1 |
| **T**.Dogs_Previous_Owner | Property: *previous_owner*(*dog*(Person)) | 5o3 |

The mapping of the source schema into the ontology is as follows:

| Table LVIII: Mapping from Source schema to Ontology for Sixth Example | | |
|---|---|---|
| schema | Ontology | Property Index |
| $\mathbf{S_1}$ | Class: Person | |
| $\mathbf{S_1}$.ID | Property: *ID#*(Person) | 2 |
| $\mathbf{S_1}$.Name | Property: *name*(Person) | 1 |
| $\mathbf{S_1}$.Dog | Property: *name*(*dog*(Person)) | 6o3 |
| $\mathbf{S_2}$ | Class: Dog | |
| $\mathbf{S_2}$.Owner | Property: *name*(*owner*(Dog)) | 1o4 |
| $\mathbf{S_2}$.Name | Property: *name*(Dog) | 6 |
| $\mathbf{S_2}$.Previous_Owner | Property: *name*(*previous_owner*(Dog)) | 1o5 |

The indices of the source properties are:

| Table LIX: Source Symbols for Sixth Example | |
|---|---|
| Table | Source Symbols |
| **$S_1$** | |
| | $1o2^{-1}$ |
| | $6o3o2^{-1}$ |
| **$S_2$** | |
| | $1o4o6^{-1}$ |
| | $1o5o6^{-1}$ |

The indices of the target properties, keyed on ID are:

| Table LX: Target Symbols for Sixth Example | | |
|---|---|---|
| Table | Target Symbols | Paths |
| **T** | | |
| | $1o2^{-1}$ | $(1o2^{-1})$ |
| | $5o3o2^{-1}$ | $(1o5o6^{-1})$ o $(6o3o2^{-1})$ |

Based on the paths given in Table LX, the desired SQL query is:

```
INSERT INTO T(ID, Name, Dogs_Previous_Owner)
(SELECT
        S1.ID AS ID, S1.Name AS Name,
        S2.Previous_Owner AS Dogs_Previous_Owner
FROM
        S1, S2
WHERE
        S2.Name = S1.Dog);
```

**A Seventh Example: Employees**

In a seventh example, a target table is of the following form:

| Table LXI: Target Table **T** for Seventh Example | | | |
|---|---|---|---|
| ID | Name | Email | Department |
| | | | |
| | | | |

Five source tables are given as follows:

| Table LXII: Source Table $\mathbf{S_1}$ for Seventh Example | |
|---|---|
| ID | Department |
| | |
| | |

| Table LXIII: Source Table $\mathbf{S_2}$ for Seventh Example | |
|---|---|
| ID | Email |
| | |
| | |

| Table LXIV: Source Table $\mathbf{S_3}$ for Seventh Example | |
|---|---|
| ID | Name |
| | |
| | |

| Table LXV: Source Table $\mathbf{S_4}$ for Seventh Example | |
|---|---|
| ID | Email |
| | |
| | |

| Table LXVI: Source Table $S_5$ for Seventh Example | |
|---|---|
| ID | Department |
| | |
| | |

The underlying ontology is illustrated in FIG. 17. The dotted portions of the ontology in FIG. 17 are additional ontology structure that is transparent to the relational database schema. The unique properties of the ontology are:

| Table LXVII: Unique Properties within Ontology for Seventh Example | |
|---|---|
| Property | Property Index |
| *ID#*(Person) | 2 |

The mapping of the target schema into the ontology is as follows:

| Table LXVIII: Mapping from Target schema to Ontology for Seventh Example | | |
|---|---|---|
| schema | Ontology | Property Index |
| **T** | Class: Person | |
| **T**.ID | Property: *ID#*(Person) | 2 |
| **T**.Name | Property: *name*(Person) | 1 |
| **T**.Email | Property: *e-mail*(Person) | 3 |
| **T**.Department | Property: *department*(Person) | 4 |

The mapping of the source schema into the ontology is as follows:

| Table LXIX: Mapping from Source schema to Ontology for Seventh Example | | |
|---|---|---|
| schema | Ontology | Property Index |
| $S_1$ | Class: Employee | |
| $S_1$.ID | Property: *ID#*( Employee) | 2 |
| $S_1$.Department | Property: *department*(Employee) | 4 |
| $S_2$ | Class: Employee | |
| $S_2$.ID | Property: *ID#*( Employee) | 2 |
| $S_2$.Email | Property: *e-mail*(Employee) | 3 |
| $S_3$ | Class: Employee | |
| $S_3$.ID | Property: *ID#*( Employee) | 2 |
| $S_3$.Name | Property: *name*(Employee) | 1 |
| $S_4$ | Class: Employee | |
| $S_4$.ID | Property: *ID#*( Employee) | 2 |
| $S_4$.Email | Property: *e-mail*(Employee) | 3 |
| $S_5$ | Class: Employee | |
| $S_5$.ID | Property: *ID#*( Employee) | 2 |
| $S_5$.Department | Property: *department*(Employee) | 4 |

The indices of the source properties are:

| Table LXX: Source Symbols for Seventh Example | |
|---|---|
| Table | Source Symbols |
| $S_1$ | |
| | $4o2^{-1}$ |
| $S_2$ | |
| | $3o2^{-1}$ |
| $S_3$ | |
| | $1o2^{-1}$ |
| $S_4$ | |
| | $3o2^{-1}$ |
| $S_5$ | |
| | $4o2^{-1}$ |

The indices of the target properties, keyed on ID are:

| Table LXXI: Target Symbols for Seventh Example | | |
|---|---|---|
| Table | Target Symbols | Paths |
| **T** | | |
| | $1o2^{-1}$ | $(1o2^{-1})$ |
| | $3o2^{-1}$ | $(3o2^{-1})$ |
| | $4o2^{-1}$ | $(4o2^{-1})$ |

Based on the paths given in Table LXXI, the desired SQL query is:

```
INSERT INTO T(ID, Name, Email, Department)
(SELECT
            S1.ID AS ID, S3.Name AS Name,
            S2.Email AS Email,
            S1.Department AS Department
FROM
            S1, S2, S3
WHERE
            S2.ID = S1.ID AND S3.ID = S1.ID
UNION
SELECT
            S1.ID AS ID,
            S3.Name AS Name,
            S4.Email AS Email,
            S1.Department AS Department
FROM
            S1, S3, S4
WHERE
            S3.ID = S1.ID AND S4.ID = S1.ID
UNION
SELECT
            S1.ID AS ID,
            S3.Name AS Name,
            S2.Email AS Email,
            S5.Department AS Department
FROM
            S1, S2, S3, S5
WHERE
            S2.ID = S1.ID AND S3.ID = S1.ID AND S5.ID = S1.ID
UNION
SELECT
            S1.ID AS ID,
            S3.Name AS Name,
            S4.Email AS Email,
            S5.Department AS Department
FROM
            S1, S3, S4, S5
WHERE
            S2.ID = S1.ID AND S3.ID = S1.ID AND
            S4.ID = S1.ID AND S5.ID = S1.ID);
```

In general,

**Rule 5:** When a source symbol used to represent a target symbol is present in multiple source tables, each such table must be referenced in an SQL query and the resultant queries joined.

When applied to the following sample source data, Tables LXXII, LXXIII, LXXIV, LXXV and LXXVI, the above SQL query produces the target data in Table LXXVII.

Table LXXII: Sample Source Table $S_1$ for Seventh Example

| ID | Department |
|---|---|
| 123 | SW |
| 456 | PdM |
| 789 | SW |

Table LXXIII: Sample Source Table $S_2$ for Seventh Example

| ID | Email |
|---|---|
| 123 | jack@company |
| 456 | jan@ company |
| 789 | jill@ company |

Table LXXIV: Sample Source Table $S_3$ for Seventh Example

| ID | Name |
|---|---|
| 123 | Jack |
| 456 | Jan |
| 789 | Jill |
| 999 | Joe |
| 111 | Jim |
| 888 | Jeffrey |

Table LXXV: Sample Source Table $S_4$ for Seventh Example

| ID | Email |
|---|---|
| 999 | joe@ company |
| 111 | jim@ company |
| 888 | jeffrey@ company |

| Table LXXVI: Sample Source Table $S_5$ for Seventh Example | |
|---|---|
| ID | Department |
| 999 | Sales |
| 111 | Business_Dev |
| 888 | PdM |

| Table LXXVII: Sample Target Table **T** for Seventh Example | | | |
|---|---|---|---|
| ID | Name | Email | Department |
| 123 | Jack | jack@company | SW |
| 456 | Jan | jan@company | PdM |
| 789 | Jill | jill@company | SW |
| 111 | Jim | jim@company | Business_Dev |
| 888 | Jeffrey | jeffrey@company | PdM |
| 999 | Joe | joe@company | Sales |

**An Eighth Example: Employees**

In an eighth example, a target table is of the following form:

| Table LXXVIII: Target Table **T** for Eighth Example | | |
|---|---|---|
| Emp_Name | Emp_Division | Emp_Tel_No |
| | | |
| | | |

Two source tables are given as follows:

| Table LXXIX: Source Table $S_1$ for Eighth Example | | | |
|---|---|---|---|
| Employee_Division | Employee_Tel# | Employee_Name | Room# |
| | | | |
| | | | |

| Table LXXX: Source Table $S_2$ for Eighth Example | | |
|---|---|---|
| Name | Employee_Tel | Division |
| | | |
| | | |

The underlying ontology is illustrated in FIG. 18. The dotted portions of the ontology in FIG. 18 are additional ontology structure that is transparent to the relational database schema. The unique properties of the ontology are:

| Table LXXXI: Unique Properties within Ontology for Eighth Example | |
|---|---|
| Property | Property Index |
| *name*(Employee) | 1 |

The mapping of the target schema into the ontology is as follows:

| Table LXXXII: Mapping from Target schema to Ontology for Eighth Example | | |
|---|---|---|
| schema | Ontology | Property Index |
| **T** | Class: Employee | |
| **T**.Emp_Name | Property: *name*(Employee) | 1 |
| **T**.Emp_Division | Property: *division*(Employee) | 4 |
| **T**.Emp_Tel_No | Property: *telephone_number*(Employee) | 2 |

The mapping of the source schema into the ontology is as follows:

| Table LXXXIII: Mapping from Source schema to Ontology for Eighth Example | | |
|---|---|---|
| schema | Ontology | Property Index |
| **$S_1$** | Class: Employee | |
| **$S_1$**.Employee_Division | Property: *division*( Employee) | 4 |
| **$S_1$**.Employee_Tel# | Property: *telephone_number*(Employee) | 2 |
| **$S_1$**.Employee_Name | Property: *name*(Employee) | 1 |
| **$S_1$**.Employee_Room# | Property: *room_number*(Employee) | 3 |
| **$S_2$** | Class: Employee | |
| **$S_2$**.Name | Property: *name*(Employee) | 1 |
| **$S_2$**.Employee_Tel | Property: *telephone_number*(Employee) | 2 |
| **$S_2$**.Division | Property: *division*(Employee) | 4 |

The indices of the source properties are:

| Table LXXXIV: Source Symbols for Eighth Example | |
|---|---|
| Table | Source Symbols |
| **$S_1$** | |
| | $4o1^{-1}$ |
| | $2o1^{-1}$ |
| | $3o1^{-1}$ |
| **$S_2$** | |
| | $2o1^{-1}$ |
| | $4o1^{-1}$ |

The indices of the target properties, keyed on Emp_Name are:

| Table LXXXV: Target Symbols for Eighth Example | | |
|---|---|---|
| Table | Target Symbols | Paths |
| **T** | | |
| | $4o1^{-1}$ | $(4o1^{-1})$ |
| | $2o1^{-1}$ | $(2o1^{-1})$ |

Since each of the source tables $S_1$ and $S_2$ suffice to generate the target table T, the desired SQL is a union of a query involving $S_1$ alone and a query involving $S_2$ alone. Specifically, based on the paths given in Table LXXXV, the desired SQL query is:

```
INSERT INTO T(Emp_Name, Emp_Division, Emp_Tel_No)
(SELECT
            S1.Employee_Name AS Emp_Name,
            S1.Employee_Division AS Emp_Division,
            S1.Employee_Tel# AS Emp_Tel_No
FROM
            S1
UNION

SELECT
            S2.Employee_Name AS Emp_Name,
            S2.Employee_Division AS Emp_Division,
            S2.Employee_Tel# AS Emp_Tel_No
FROM S2);
```

In general,

**Rule 6:** When one or more source tables contain source symbols sufficient to generate all of the target symbols, then each such source table must be used alone in an SQL query, and the resultant queries joined. (Note that Rule 6 is consistent with Rule 5.)

When applied to the following sample source data, Tables LXXXVI and LXXXVII, the above SQL query produces the target data in Table LXXXVIII.

Table LXXXVI: Sample Source Table $S_1$ for Eighth Example

| Employee_Division | Employee_Tel# | Employee_Name | Room# |
|---|---|---|---|
| Engineering | 113 | Richard | 10 |
| SW | 118 | Adrian | 4 |
| Engineering | 105 | David | 10 |

Table LXXXVII: Sample Source Table $S_2$ for Eighth Example

| Name | Employee_Tel | Division |
|---|---|---|
| Henry | 117 | SW |
| Robert | 106 | IT |
| William | 119 | PdM |
| Richard | 113 | Engineering |

| Table LXXXVIII: Sample Target Table **T** for Eighth Example | | |
|---|---|---|
| Emp_Name | Emp_Division | Emp_Tel_No |
| Tom | Engineering | 113 |
| Adrian | SW | 118 |
| David | Engineering | 105 |
| Henry | SW | 117 |
| Robert | IT | 106 |
| William | PdM | 119 |

**A Ninth Example: Data Constraints**

In a ninth example, a target table is of the following form:

| Table LXXXIX: Target Table **T** for Ninth Example | |
|---|---|
| City | Temperature |
| | |
| | |

Two source tables are given as follows:

| Table XC: Source Table $S_1$ for Ninth Example | |
|---|---|
| City | Temperature |
| | |
| | |

| Table XCI: Source Table $S_2$ for Ninth Example | |
|---|---|
| City | C_Temperature |
| | |
| | |

The underlying ontology is illustrated in FIG. 19. The dotted portions of the ontology in FIG. 19 are additional ontology structure that is transparent to the relational database schema. The properties *temperature_in_Centrigade* and *temperature_in_Fahrenheit* are related by the constraint:

*Temperature_in_Centrigade*(City) =

5/9 * ( *Temperature_in_Fahrenheit*(City)- 32)

The unique properties of the ontology are:

| Table XCII: Unique Properties within Ontology for Ninth Example | |
|---|---|
| Property | Property Index |
| *name*(City) | 1 |

The mapping of the target schema into the ontology is as follows:

| Table XCIII: Mapping from Target schema to Ontology for Ninth Example | | |
|---|---|---|
| schema | Ontology | Property Index |
| **T** | Class: City | |
| **T**.City | Property: *name*(City) | 1 |
| **T**.Temperature | Property: *temperature_in_Centigrade*(City) | 2 |

The mapping of the source schema into the ontology is as follows:

| Table XCIV: Mapping from Source schema to Ontology for Ninth Example | | |
|---|---|---|
| schema | Ontology | Property Index |
| $S_1$ | Class: City | |
| $S_1$.City | Property: *name*(City) | 1 |
| $S_1$.Temperature | Property: *temperature_in_Fahrenheit*(City) | 3 |
| $S_2$ | Class: City | |
| $S_2$.City | Property: *name*(City) | 1 |
| $S_2$.C_Temperature | Property: *temperature_in_Centrigade* (City) | 2 |

The indices of the source properties are:

| Table XCV: Source Symbols for Ninth Example | |
|---|---|
| Table | Source Symbols |
| **$S_1$** | |
| | $3o1^{-1}$ |
| **$S_2$** | |
| | $2o1^{-1}$ |

The indices of the target properties, keyed on City are:

| Table XCVI: Target Symbols for Ninth Example | | |
|---|---|---|
| Table | Target Symbols | Paths |
| **T** | | |
| | $2o1^{-1}$ | $5/9 * ((3o1^{-1}) - 32)$ |
| | | $(2o1^{-1})$ |

Since each of the source tables $S_1$ and $S_2$ suffice to generate the target table T, the desired SQL is a union of a query involving $S_1$ alone and a query involving $S_2$ alone. Specifically, based on the paths given in Table XCVI, the desired SQL query is:

```
INSERT INTO T(City, Temperature)
(SELECT
            S1.City AS City,
            5/9 * (S1.Temperature – 32) AS Temperature
FROM
            S1
UNION
SELECT
            S2.City AS City, S2.Temperature AS Temperature
FROM
            S2);
```

In general,

**Rule 7:** When a target symbol can be expressed in terms of one or more source symbols by a dependency constraint, then such constraint must appear in the list of target symbols.

When applied to the following sample source data, Tables XCVII and XCVIII, the above SQL query produces the target data in Table XCIX.

| Table XCVII: Sample Source Table $S_1$ for Ninth Example | |
|---|---|
| City | Temperature |
| New York | 78 |
| Phoenix | 92 |
| Anchorage | 36 |
| Boston | 72 |

| Table XCVIII: Sample Source Table $S_2$ for Ninth Example | |
|---|---|
| City | C_Temperature |
| Moscow | 12 |
| Brussels | 23 |
| Tel Aviv | 32 |
| London | 16 |

| Table XCIX: Sample Target Table **T** for Ninth Example | |
|---|---|
| City | Temperature |
| New York | 25.5 |
| Phoenix | 33.3 |
| Anchorage | 2.22 |
| Boston | 22.2 |
| Moscow | 12 |
| Brussels | 23 |
| Tel Aviv | 32 |
| London | 16 |

**A Tenth Example: Pricing**

In a tenth example, a target table is of the following form:

| Table C: Target Table **T** for Tenth Example | |
|---|---|
| Product | Price |
| | |
| | |

Two source tables are given as follows:

| Table CI: Source Table $S_1$ for Tenth Example | |
|---|---|
| SKU | Cost |
| | |
| | |

| Table CII: Source Table $S_2$ for Tenth Example | |
|---|---|
| Item | Margin |
| | |
| | |

The underlying ontology is illustrated in FIG. 20. The dotted portions of the ontology in FIG. 20 are additional ontology structure that is transparent to the relational database schema. The properties *price*, *cost_of_production* and *margin* are related by the constraint:

*price*(Product) = *cost_of_production*(Product) * *margin*(Product).

The unique properties of the ontology are:

| Table CIII: Unique Properties within Ontology for Tenth Example | |
|---|---|
| Property | Property Index |
| *SKU*(Product) | 1 |

The mapping of the target schema into the ontology is as follows:

| Table CIV: Mapping from Target schema to Ontology for Tenth Example | | |
|---|---|---|
| schema | Ontology | Property Index |
| **T** | Class: Product | |
| **T**.Product | Property: *SKU*(Product) | 1 |
| **T**.Price | Property: *price*(Product) | 4 |

The mapping of the source schema into the ontology is as follows:

| Table CV: Mapping from Source schema to Ontology for Tenth Example | | |
|---|---|---|
| schema | Ontology | Property Index |
| $\mathbf{S_1}$ | Class: Product | |
| $\mathbf{S_1}$.SKU | Property: *SKU*(Product) | 1 |
| $\mathbf{S_1}$.Cost | Property: *cost_of_production*(Product) | 2 |
| $\mathbf{S_2}$ | Class: Product | |
| $\mathbf{S_2}$.Item | Property: *SKU*(Product) | 1 |
| $\mathbf{S_2}$.Margin | Property: *margin*(Product) | 3 |

The indices of the source properties are:

| Table CVI: Source Symbols for Tenth Example | |
|---|---|
| Table | Source Symbols |
| $\mathbf{S_1}$ | |
| | $2o1^{-1}$ |
| $\mathbf{S_2}$ | |
| | $3o1^{-1}$ |

The indices of the target properties, keyed on Product are:

| Table CVII: Target Symbols for Tenth Example | | |
|---|---|---|
| Table | Target Symbols | Paths |
| **T** | | |
| | $4o1^{-1}$ | $(2o1^{-1}) * (3o1^{-1})$ |

Based on the paths given in Table CVII, the desired SQL query is:

```
INSERT INTO T(Product, Price)
(SELECT
        S1.SKU AS Product, (S1.Cost) * (S2.Margin) AS Price
FROM
        S1, S2
WHERE
        S2.Item = S1.SKU);
```

When applied to the following sample source data, Tables CVIII and CVIX, the above SQL query produces the target data in Table CX.

| Table CVIII: Sample Source Table $S_1$ for Tenth Example | |
|---|---|
| SKU | Cost |
| 123 | 2.2 |
| 234 | 3.3 |
| 345 | 4.4 |
| 456 | 5.5 |

| Table CIX: Sample Source Table $S_2$ for Tenth Example | |
|---|---|
| Item | Margin |
| 123 | 1.2 |
| 234 | 1.1 |
| 345 | 1.04 |
| 456 | 1.3 |

| Table CX: Sample Target Table **T** for Tenth Example | |
|---|---|
| Product | Price |
| 123 | 2.86 |
| 234 | 3.96 |
| 345 | 4.84 |
| 456 | 5.72 |

**An Eleventh Example: String Concatenation**

In an eleventh example, a target table is of the following form:

| Table CXI: Target Table **T** for Eleventh Example | |
|---|---|
| ID# | Full_Name |
| | |
| | |

One source table is given as follows:

| Table CXII: Source Table **S** for Eleventh Example | | |
|---|---|---|
| ID# | First_Name | Last_Name |
| | | |
| | | |

The underlying ontology is illustrated in FIG. 21. The dotted portions of the ontology in FIG. 21 are additional ontology structure that is transparent to the relational database schema. The properties *full_name, first_name* and *last_name* are related by the constraint:

$$full_name(\text{Person}) = first_name(\text{Person}) \| last_name(\text{Person}),$$

where || denotes string concatenation.

The unique properties of the ontology are:

| Table CXIII: Unique Properties within Ontology for Eleventh Example | |
|---|---|
| Property | Property Index |
| *ID#*(Product) | 1 |

The mapping of the target schema into the ontology is as follows:

| Table CXIV: Mapping from Target schema to Ontology for Eleventh Example | | |
|---|---|---|
| schema | Ontology | Property Index |
| **T** | Class: Person | |
| **T**.ID# | Property: *ID#*(Person) | 1 |
| **T**.Full_Name | Property: *full_name*(Person) | 4 |

The mapping of the source schema into the ontology is as follows:

| Table CXV: Mapping from Source schema to Ontology for Eleventh Example | | |
|---|---|---|
| schema | Ontology | Property Index |
| S | Class: Person | |
| S.ID# | Property: *ID#*(Person) | 1 |
| S.First_Name | Property: *first_name*(Person) | 2 |
| S.Last_Name | Property: *last_name*(Person) | 3 |

The indices of the source properties are:

| Table CXVI: Source Symbols for Eleventh Example | |
|---|---|
| Table | Source Symbols |
| S | |
| | $2o1^{-1}$ |
| | $2o1^{-1}$ |

The indices of the target properties, keyed on ID# are:

| Table CXVII: Target Symbols for Eleventh Example | | |
|---|---|---|
| Table | Target Symbols | Paths |
| T | | |
| | $4o1^{-1}$ | $(2o1^{-1})$ \|\| $(3o1^{-1})$ |

Based on the paths given in Table CXVII, the desired SQL query is:

```
INSERT INTO T(ID#, Full_Name)
(SELECT
            S.ID# AS ID#,
            (S.First_Name) || (S.Last_Name) AS Full_Name
FROM
            S);
```

When applied to the following sample source data, Table CXVIII, the above SQL query produces the target data in Table CXIX.

| Table CXVIII: Sample Source Table **S** for Eleventh Example | | |
|---|---|---|
| ID# | First_Name | Last_Name |
| 123 | Timothy | Smith |
| 234 | Janet | Ferguson |
| 345 | Ronald | Thompson |
| 456 | Marie | Baker |
| 567 | Adrian | Clark |

| Table CXIX: Sample Target Table **T** for Eleventh Example | |
|---|---|
| ID# | Full_Name |
| 123 | Timothy Smith |
| 234 | Janet Ferguson |
| 345 | Ronald Thompson |
| 456 | Marie Baker |
| 567 | Adrian Clark |

**A Twelfth Example: Books → Documents**

A source XML schema for books is given by:

```
<?xml version="1.0" encoding="UTF-8"?>
<xs:schema xmlns:xs="http://www.w3.org/2001/XMLschema">
 <xs:element name="book" type="Book"/>

 <xs:complexType name="Book">
     <xs:sequence>
         <xs:element name="name" type="xs:string"/>
         <xs:element name="author" type="Author"/>
     </xs:sequence>
 </xs:complexType>

 <xs:complexType name="Author">
     <xs:attribute name="name"/>
 </xs:complexType>

</xs:schema>
```

A target XML schema for documents is given by:

```
<?xml version="1.0" encoding="UTF-8"?>
<xs:schema xmlns:xs="http://www.w3.org/2001/XMLschema">
 <xs:element name="document" type="Document"/>

 <xs:complexType name="Document">
     <xs:all>
         <xs:element name="writer" type="xs:string"/>
     </xs:all>
     <xs:attribute name="title"/>
 </xs:complexType>

</xs:schema>
```

A common ontology model for the source and target XML schema is illustrated in FIG. 22. A mapping of the source XML schema into the ontology model is given by:

| Table CXX: Mapping from Source schema to Ontology for Twelfth and Thirteenth Examples | | |
|---|---|---|
| schema | Ontology | Property Index |
| complexType: book | Class: Book | |
| element: book/name/text() | Property: *name*(Book) | 1 |
| element: book/author | Property: *author*(Book) | 2 |
| complexType: author | Class: Person | |
| element: author/@name | Property: *name*(Person) | 3 |

A mapping of the target XML schema into the ontology model is given by:

| Table CXXI: Mapping from Target schema to Ontology for Twelfth Example | | |
|---|---|---|
| schema | Ontology | Property Index |
| complexType: document | Class: Book | |
| element: document/writer/text() | Property: *name*(*author*(Book)) | 3o2 |
| attribute: document/@title | Property: *name*(Book) | 1 |

Tables CXX and CXXI use XPath notation to designate XSL elements and attributes.

Based on Tables CXX and CXXI, an XSLT transformation that maps XML documents that conform to the source schema to corresponding documents that conform to the target schema should accomplish the following tasks:

1. document/@title ← book/name/text()
2. document/writer/text() ← book/author/@name

Such a transformation is given by:

```
<?xml version="1.0" encoding="UTF-8"?>
<xsl:stylesheet version="1.0" xmlns:xsl="http://www.w3.org/1999/XSL/Transform">
 <xsl:output method="xml" version="1.0" encoding="UTF-8" indent="yes"/>

 <xsl:template match="/">
     <document>
         <xsl:for-each select=".//book[position() = 1]">
             <xsl:attribute name="title">
                 <xsl:value-of select="name()"/>
             </xsl:attribute>
             <xsl:element name="writer">
                 <xsl:value-of select="author/@name" />
             </xsl:element>
         </xsl:for-each>
     </document>
 </xsl:template>

</xsl:stylesheet>
```

**A Thirteenth Example: Books → Documents**

A source XML schema for books is given by:

```
<?xml version="1.0" encoding="UTF-8"?>
<xs:schema xmlns:xs="http://www.w3.org/2001/XMLschema">
 <xs:element name="book" type="Book"/>
 <xs:complexType name="Book">
     <xs:sequence>
         <xs:element name="name" type="xs:string"/>
         <xs:element name="author" type="Author" minOccurs="0" maxOccurs="unbounded"/>
     </xs:sequence>
 </xs:complexType>

 <xs:complexType name="Author">
     <xs:attribute name="name"/>
 </xs:complexType>

</xs:schema>
```

A target XML schema for documents is given by:

```xml
<?xml version="1.0" encoding="UTF-8"?>
<xs:schema xmlns:xs="http://www.w3.org/2001/XMLschema">
 <xs:element name="document" type="Document"/>

 <xs:complexType name="Document">
    <xs:choice>
        <xs:element name="writer" type="xs:string" minOccurs="1" maxOccurs="unbounded"/>
        <xs:element name="title" type="xs:string"/>
        <xs:element name="ISBN" type="xs:string" />
    </xs:choice>
 </xs:complexType>

</xs:schema>
```

A common ontology model for the source and target XML schema is illustrated in FIG. 23. A mapping of the source XML schema into the ontology model is given by Table CXVIII above. A mapping of the target XML schema into the ontology model is given by:

| Table CXXII: Mapping from Target schema to Ontology for Thirteenth Example | | |
|---|---|---|
| schema | Ontology | Property Index |
| complexType: document | Class: Book | |
| element: document/writer/text() | Property: *name*(*author*(Book)) | 3o2 |
| element: document/title/text() | Property: *name*(Book) | 1 |
| element: document/ISBN/text() | Property: *ISBN*(Book) | 4 |

Based on Tables CXX and CXXII, an XSLT transformation that maps XML documents that conform to the source schema to corresponding documents that conform to the target schema should accomplish the following tasks:

1. document/title/text() ← book/name/text()
2. document/writer/text() ← book/author/@name

Such a transformation is given by:

```
<?xml version="1.0" encoding="UTF-8"?>
<xsl:stylesheet version="1.0" xmlns:xsl="http://www.w3.org/1999/XSL/Transform">
<xsl:output method="xml" version="1.0" encoding="UTF-8" indent="yes"/>

<xsl:template match="/">
    <document>
        <xsl:apply-templates select="book" />
    </document>
</xsl:template>

<xsl:template match="book">
    <xsl:choose>
        <xsl:when test="author">
            <xsl:for-each select="author">
                <xsl:element name="writer">
                    <xsl:value-of select="@name"/>
                </xsl:element>
            </xsl:for-each>
        </xsl:when>
        <xsl:when test="name">
            <xsl:element name="title">
                <xsl:value-of select="name/text()"/>
            </xsl:element>
        </xsl:when>
    </xsl:choose>
</xsl:template>

</xsl:stylesheet>
```

## A Fourteenth Example: Document Storage

A source XML schema for books is given by:

```
<?xml version="1.0" encoding="UTF-8"?>
<xs:schema xmlns:xs="http://www.w3.org/2001/XMLschema">
 <xs:element name="library" type="Library"/>

 <xs:complexType name="Library">
     <xs:sequence>
         <xs:element name="source" type="Source" minOccurs="0" maxOccurs="unbounded"/>
     </xs:sequence>
 </xs:complexType>

 <xs:complexType name="Source">
     <xs:sequence>
         <xs:element name="review" type="Review" minOccurs="0" maxOccurs="unbounded"/>
         <xs:element name="article" type="Article" minOccurs="0" maxOccurs="unbounded"/>
         <xs:element name="letter" type="Letter" minOccurs="0" maxOccurs="unbounded"/>
     </xs:sequence>
 </xs:complexType>

 <xs:complexType name="Review">
     <xs:sequence>
         <xs:element name="author" type="xs:string" minOccurs="0" maxOccurs="unbounded"/>
     </xs:sequence>
     <xs:attribute name="title"/>
 </xs:complexType>

 <xs:complexType name="Article">
     <xs:sequence>
         <xs:element name="writer" type="xs:string" minOccurs="0" maxOccurs="unbounded"/>
     </xs:sequence>
     <xs:attribute name="name"/>
 </xs:complexType>

 <xs:complexType name="Letter">
     <xs:sequence>
         <xs:element name="sender" type="xs:string" minOccurs="0" maxOccurs="unbounded"/>
     </xs:sequence>
     <xs:attribute name="name"/>
     <xs:attribute name="subject"/>
     <xs:attribute name="receiver"/>
 </xs:complexType>

</xs:schema>
```

A first target XML schema for documents is given by:

```xml
<?xml version="1.0" encoding="UTF-8"?>
<xs:schema xmlns:xs="http://www.w3.org/2001/XMLschema">
 <xs:element name="storage" type="Storage"/>

 <xs:complexType name="Storage">
     <xs:sequence>
         <xs:element name="articles" type="Documents"/>
         <xs:element name="reviews" type="Documents"/>
         <xs:element name="letters" type="Letters"/>
     </xs:sequence>
 </xs:complexType>

 <xs:complexType name="Documents">
     <xs:sequence>
         <xs:element name="document" type="Document" minOccurs="0"
                                                      maxOccurs="unbounded"/>
     </xs:sequence>
 </xs:complexType>

 <xs:complexType name="Letters">
     <xs:sequence>
         <xs:element name="letter" type="Letter" minOccurs="0" maxOccurs="unbounded"/>
     </xs:sequence>
 </xs:complexType>

 <xs:complexType name="Document">
     <xs:sequence>
         <xs:element name="author" type="xs:string" minOccurs="0" maxOccurs="unbounded"/>
     </xs:sequence>
     <xs:attribute name="title"/>
 </xs:complexType>

 <xs:complexType name="Letter">
     <xs:sequence>
         <xs:element name="author" type="xs:string" minOccurs="0" maxOccurs="unbounded"/>
     </xs:sequence>
     <xs:attribute name="name"/>
     <xs:attribute name="subject"/>
     <xs:attribute name="receiver"/>
 </xs:complexType>

</xs:schema>
```

A common ontology model for the source and first target XML schema is illustrated in FIG. 24. A mapping of the source XML schema into the ontology model is given by:

| Table CXXIII: Mapping from Source schema to Ontology for Fourteenth Example | | |
|---|---|---|
| schema | Ontology | Property Index |
| complexType: review | Class: Document | |
| element: review/author/text() | Property: *author*(Document) | 1 |
| attribute: review/@title | Property: *title*(Document) | 2 |
| complexType: article | Class: Document | |
| element: article/writer/text() | Property: *author*(Document) | 1 |
| attribute: article/@name | Property: *title*(Document) | 2 |
| complexType: letter | Class: Letter (inherits from Document) | |
| element: letter/sender/text() | Property: *author*(Letter) | 1 |
| attribute: letter/@name | Property: *title*(Letter) | 2 |
| attribute: letter/@subject | Property: *subject*(Letter) | 3 |
| attribute: letter/@receiver | Property: *receiver*(Letter) | 4 |
| complexType: source | Class: Storage | |
| ComplexType: library | Container Class: **set**[Storage] | |

A mapping of the first target XML schema into the ontology model is given by:

| Table CXXIV: Mapping from First Target schema to Ontology for Fourteenth Example | | |
|---|---|---|
| schema | Ontology | Property Index |
| complexType: document | Class: Document | |
| element: document/author/text() | Property: *author*(Document) | 1 |
| attribute: document/@title | Property: *title*(Document) | 2 |
| complexType: letter | Class: Letter (inherits from Document) | |
| element: letter/author/text() | Property: *author*(Letter) | 1 |
| attribute: letter/@name | Property: *title*(Letter) | 2 |
| attribute: letter/@subject | Property: *subject*(Letter) | 3 |
| attribute: letter/@receiver | Property: *receiver*(Letter) | 4 |
| complexType: storage | Class: Storage | |
| element: storage/articles | Property: *articles*(Storage) | 9 |
| element: storage/reviews | Property: *reviews*(Storage) | 10 |
| element: storage/letters | Property: *letters*(Storage) | 11 |

Based on Tables CXXIII and CXXIV, an XSLT transformation that maps XML documents that conform to the source schema to corresponding documents that conform to the target schema should accomplish the following tasks:

1. storage ← library
2. letter/author/text() ← letter/sender/text()

Such a transformation is given by:

```
<?xml version="1.0" encoding="UTF-8"?>
<xsl:stylesheet version="1.0" xmlns:xsl="http://www.w3.org/1999/XSL/Transform">

<xsl:template match="/">
 <xsl:apply-templates select="/library"/>
</xsl:template>

<xsl:template match="/library">
 <storage>
     <articles>
         <xsl:apply-templates select="source[not(letter)]/article | source[not(review)]/article"/>
     </articles>
     <reviews>
         <xsl:apply-templates select="source[not(letter)]/review"/>
     </reviews>
     <letters>
         <xsl:apply-templates select="source[not(review)]/letter"/>
     </letters>
 </storage>
</xsl:template>

<xsl:template match="article">
 <article>
     <xsl:attribute name="title"><xsl:value-of select="@name"/></xsl:attribute>
     <xsl:apply-templates select="writer"/>
 </article>
</xsl:template>

<xsl:template match="review">
 <review>
     <xsl:attribute name="title"><xsl:value-of select="@title"/></xsl:attribute>
     <xsl:apply-templates select="author"/>
 </review>
</xsl:template>

<xsl:template match="letter">
 <review>
     <xsl:attribute name="name"><xsl:value-of select="@name"/></xsl:attribute>
     <xsl:attribute name="subject"><xsl:value-of select="@subject"/></xsl:attribute>
     <xsl:attribute name="receiver"><xsl:value-of select="@receiver"/></xsl:attribute>
     <xsl:apply-templates select="sender"/>
 </review>
</xsl:template>

<xsl:template match="article/writer | review/author | letter/sender">
<author>
     <xsl:value-of select="text()"/>
</author>
</xsl:template>

</xsl:stylesheet>
```

A second target XML schema for documents is given by:

```xml
<?xml version="1.0" encoding="UTF-8"?>
<xs:schema xmlns:xs="http://www.w3.org/2001/XMLschema">
 <xs:element name="storage" type="Storage"/>

 <xs:complexType name="Storage">
     <xs:sequence>
         <xs:element name="books" type="Books"/>
         <xs:element name="magazines" type="Magazines"/>
     </xs:sequence>
 </xs:complexType>

 <xs:complexType name="Books">
     <xs:sequence>
         <xs:element name="articles" type="Documents"/>
         <xs:element name="reviews" type="Documents"/>
     </xs:sequence>
 </xs:complexType>

 <xs:complexType name="Magazines">
     <xs:sequence>
         <xs:element name="articles" type="Documents"/>
         <xs:element name="letters" type="Letters"/>
     </xs:sequence>
 </xs:complexType>

 <xs:complexType name="Documents">
     <xs:sequence>
         <xs:element name="document" type="Document" minOccurs="0"
                                                      maxOccurs="unbounded"/>
     </xs:sequence>
 </xs:complexType>

 <xs:complexType name="Letters">
     <xs:sequence>
         <xs:element name="letter" type="Letter" minOccurs="0" maxOccurs="unbounded"/>
     </xs:sequence>
 </xs:complexType>

 <xs:complexType name="Document">
     <xs:sequence>
         <xs:element name="author" type="xs:string" minOccurs="0" maxOccurs="unbounded"/>
     </xs:sequence>
     <xs:attribute name="title"/>
 </xs:complexType>

<xs:complexType name="Letter">
<xs:sequence>
     <xs:element name="author" type="xs:string" minOccurs="0" maxOccurs="unbounded"/>
     </xs:sequence>
     <xs:attribute name="name"/>
     <xs:attribute name="subject"/>
     <xs:attribute name="receiver"/>
</xs:complexType>

</xs:schema>
```

A mapping of the second target XML schema into the ontology model is given by:

| Table CXXV: Mapping from Second Target schema to Ontology for Fourteenth Example | | |
|---|---|---|
| schema | Ontology | Property Index |
| complexType: document | Class: Document | |
| element: document/author/text() | Property: *author*(Document) | 1 |
| attribute: document/@title | Property: *title*(Document) | 2 |
| complexType: letter | Class: Letter (inherits from Document) | |
| element: letter/author/text() | Property: *author*(Letter) | 1 |
| attribute: letter/@name | Property: *title*(Letter) | 2 |
| attribute: letter/@subject | Property: *subject*(Letter) | 3 |
| attribute: letter/@receiver | Property: *receiver*(Letter) | 4 |
| complexType: storage | Class: Storage | |
| element: storage/books | Property: books(Storage) | 12 |
| element: storage/magazines | Property: magazines(Storage) | 13 |
| complexType: book | Class: Book | |
| element: book/articles | Property: articles(Book) | 5 |
| element: book/reviews | Property: reviews(Book) | 6 |
| complexType: magazine | Class: Magazine | |
| element: magazine/articles | Property: articles(Magazine) | 7 |
| element: magazine/letters | Property: letters(Magazine) | 8 |

Based on Tables CXXIII and CXXV, an XSLT transformation that maps XML documents that conform to the source schema to corresponding documents that conform to the target schema should accomplish the following tasks:

1. storage ← library
2. letter/author/text() ← letter/sender/text()

Such a transformation is given by:

```xml
<?xml version="1.0" encoding="UTF-8"?>
<xsl:stylesheet version="1.0" xmlns:xsl="http://www.w3.org/1999/XSL/Transform">

<xsl:template match="/">
 <xsl:apply-templates select="/library"/>
</xsl:template>

<xsl:template match="/library">
 <storage>
    <books>
        <articles>
            <xsl:apply-templates select="source[not(letter)]/article"/>
        </articles>
        <reviews>
            <xsl:apply-templates select="source[not(letter)]/review"/>
        </reviews>
    </books>
    <magazines>
        <articles>
            <xsl:apply-templates select="source[not(review)]/article"/>
        </articles>
        <letters>
            <xsl:apply-templates select="source[not(review)]/letter"/>
        </letters>
    </magazines>
 </storage>
</xsl:template>

<xsl:template match="article">
 <article>
    <xsl:attribute name="title"><xsl:value-of select="@name"/></xsl:attribute>
    <xsl:apply-templates select="writer"/>
 </article>
</xsl:template>

<xsl:template match="review">
 <review>
    <xsl:attribute name="title"><xsl:value-of select="@title"/></xsl:attribute>
    <xsl:apply-templates select="author"/>
 </review>
</xsl:template>

<xsl:template match="letter">
 <review>
    <xsl:attribute name="name"><xsl:value-of select="@name"/></xsl:attribute>
    <xsl:attribute name="subject"><xsl:value-of select="@subject"/></xsl:attribute>
    <xsl:attribute name="receiver"><xsl:value-of select="@receiver"/></xsl:attribute>
    <xsl:apply-templates select="sender"/>
 </review>
</xsl:template>

<xsl:template match="article/writer | review/author | letter/sender">
 <author>
    <xsl:value-of select="text()"/>
 </author>
</xsl:template>

</xsl:stylesheet>
```

A third target XML schema for documents is given by:

```
<?xml version="1.0" encoding="UTF-8"?>
<xs:schema xmlns:xs="http://www.w3.org/2001/XMLschema">
 <xs:element name="storage" type="Storage"/>

 <xs:complexType name="Storage">
     <xs:sequence>
         <xs:element name="article_from_books" type="AB" minOccurs="0"
                                                              maxOccurs="unbounded"/>
         <xs:element name="article_from_magazines" type="AM" minOccurs="0"
                                                                  maxOccurs="unbounded"/>
     </xs:sequence>
 </xs:complexType>

 <xs:complexType name="AB">
     <xs:sequence>
         <xs:element name="authors" type="xs:string" minOccurs="0" maxOccurs="unbounded"/>
     </xs:sequence>
     <xs:attribute name="title"/>
 </xs:complexType>

 <xs:complexType name="AM">
     <xs:sequence>
         <xs:element name="writers" type="xs:string" minOccurs="0" maxOccurs="unbounded"/>
     </xs:sequence>
     <xs:attribute name="name"/>
 </xs:complexType>

 </xs:schema>
```

A mapping of the third target XML schema into the ontology model is given by:

Table CXXVI: Mapping from Third Target schema to Ontology for Fourteenth Example

| schema | Ontology | Property Index |
|---|---|---|
| complexType: AB | Class: Document | |
| element: AB/author/text() | Property: *author*(Document) | 1 |
| attribute: AB/@title | Property: *title*(Document) | 2 |
| complexType: AM | Class: Document | |
| element: AM/writer/text() | Property: *author*(Document) | 1 |
| attribute: AM/@title | Property: *title*(Document) | 2 |
| complexType: storage | Complex Class: **set**[Document] × **set**[Document] | |

Based on Tables CXXIII and CXXVI, an XSLT transformation that maps XML documents that conform to the source schema to corresponding documents that conform to the target schema should accomplish the following tasks:

1. storage ← library
2. letter/author/text() ← letter/sender/text()

Such a transformation is given by:

```
<?xml version="1.0" encoding="UTF-8"?>
<xsl:stylesheet version="1.0" xmlns:xsl="http://www.w3.org/1999/XSL/Transform">

<xsl:template match="/">
 <xsl:apply-templates select="/library"/>
</xsl:template>

<xsl:template match="/library">
 <storage>
    <xsl:apply-templates select="source[not(letter)]/article" mode="AB"/>
    <xsl:apply-templates select="source[not(review)]/article" mode="AM"/>
 </storage>
</xsl:template>

<xsl:template match="article" mode="AB">
 <article_from_books>
    <xsl:attribute name="title"><xsl:value-of select="@name"/></xsl:attribute>
    <xsl:apply-templates select="writer" mode="AB"/>
 </article_from_books>
</xsl:template>

<xsl:template match="article" mode="AM">
 <article_from_magazines>
    <xsl:attribute name="name"><xsl:value-of select="@name"/></xsl:attribute>
    <xsl:apply-templates select="writer" mode="AM"/>
 </article_from_magazines>
</xsl:template>

<xsl:template match="article/writer" mode="AB">
 <author>
    <xsl:value-of select="text()"/>
 </author>
</xsl:template>

<xsl:template match="article/writer" mode="AM">
 <writer>
    <xsl:value-of select="text()"/>
 </writer>
</xsl:template>

</xsl:stylesheet>
```

## A Fifteenth Example: String Conversion

A source XML schema for people is given by:

```
<?xml version="1.0" encoding="UTF-8"?>
<xs:schema xmlns:xs="http://www.w3.org/2001/XMLschema" elementFormDefault="qualified"
                                                    attributeFormDefault="unqualified">
 <xs:element name="Person" type="Person"/>

 <xs:complexType name="Person">
     <xs:sequence>
         <xs:element name="name" type="xs:string"/>
             <!-- name expected input in format firstName#LastName -->
         <xs:element name="ID" type="xs:string"/>
             <!-- ID expected input in format XXXXXXXXX-X -->
         <xs:element name="age" type="xs:string"/>
             <!-- age expected input in exponential form XXXeX -->
     </xs:sequence>
 </xs:complexType>

</xs:schema>
```

A target XML schema for people is given by:

```
<?xml version="1.0" encoding="UTF-8"?>
<xs:schema xmlns:xs="http://www.w3.org/2001/XMLschema"
                          elementFormDefault="qualified" attributeFormDefault="unqualified">
 <xs:element name="Person" type="Person"/>

 <xs:complexType name="Person">
     <xs:sequence>
         <xs:element name="name" type="xs:string"/>
             <!-- name expected input in format LastName, FirstName -->
         <xs:element name="ID" type="xs:string"/>
             <!-- ID expected input in format 12XX-XXXXXXXX3E -->
     </xs:sequence>
 </xs:complexType>

</xs:schema>
```

An XSLT transformation that maps the source schema into the target schema is given by:

```
<?xml version="1.0" encoding="UTF-8"?>
<xsl:stylesheet version="1.0" xmlns:xsl="http://www.w3.org/1999/XSL/Transform">
 <xsl:output method="xml" version="1.0" encoding="UTF-8" indent="yes"/>

 <xsl:template match="/">
     <Person>
         <xsl:for-each select="Person">
             <xsl:element name="name">
                 <xsl:value-of select=
                             "concat(substring-after(name,'#'), ', ', substring-before(name,'#'))"/>
             </xsl:element>
             <xsl:element name="ID">
                 <xsl:variable name="plainID" select=
                         "concat(substring-before(ID/text(),'-'),substring-after(ID/text(),'-'))"/>
                 <xsl:value-of select=
                         "concat('12',substring($plainID,1,2),'-',substring($plainID,3),'3E')"/>
             </xsl:element>
             <xsl:element name="age">
                 <xsl:call-template name="exponentiate">
                     <xsl:with-param name="power" select="substring-after(age,'e')"/>
                     <xsl:with-param name="digit" select="substring-before(age,'e')"/>
                     <xsl:with-param name="ten" select="1"/>
                 </xsl:call-template>
             </xsl:element>
         </xsl:for-each>
     </Person>
 </xsl:template>

 <xsl:template name="exponentiate">
     <xsl:param name="power"/>
     <xsl:param name="digit"/>
     <xsl:param name="ten"/>
     <xsl:choose>
         <xsl:when test="$power &gt; 0">
             <xsl:call-template name="exponentiate">
                     <xsl:with-param name="power" select="$power - 1"/>
                     <xsl:with-param name="digit" select="$digit"/>
                     <xsl:with-param name="ten" select="$ten * 10"/>
             </xsl:call-template>
         </xsl:when>
         <xsl:when test="$power &lt; 0">
             <xsl:call-template name="exponentiate">
                     <xsl:with-param name="power" select="$power + 1"/>
                     <xsl:with-param name="digit" select="$digit"/>
                     <xsl:with-param name="ten" select="$ten div 10"/>
             </xsl:call-template>
         </xsl:when>
         <xsl:otherwise>
             <xsl:value-of select="format-number($digit * $ten, ',###.###') "/>
         </xsl:otherwise>
     </xsl:choose>
 </xsl:template>

</xsl:stylesheet>
```

## A Sixteenth Example: String Conversion

A source XML schema for people is given by:

```
<?xml version="1.0" encoding="UTF-8"?>
<xs:schema xmlns:xs=http://www.w3.org/2001/XMLschema
                    elementFormDefault="qualified" attributeFormDefault="unqualified">
<xs:element name="Person" type="Person"/>
<xs:complexType name="Person">
    <xs:sequence>
        <xs:element name="name" type="xs:string"/>
        <xs:element name="homeTown" type="xs:string"/>
    </xs:sequence>
    <xs:attribute name="dog_name"/>
</xs:complexType>

</xs:schema>
```

A target XML schema for people is given by:

```
<?xml version="1.0" encoding="UTF-8"?>
<xs:schema xmlns:xs="http://www.w3.org/2001/XMLschema"
                    elementFormDefault="qualified" attributeFormDefault="unqualified">
<xs:element name="Person" type="Person"/>

<xs:complexType name="Person">
    <xs:sequence>
        <xs:element name="name" type="xs:string"/>
        <xs:element name="homeTown" type="xs:string"/>
    </xs:sequence>
    <xs:attribute name="dog_name"/>
</xs:complexType>

</xs:schema>
```

An XSLT transformation that maps the source schema into the target schema is given by:

```
<?xml version="1.0" encoding="UTF-8"?>
<xsl:stylesheet version="1.0" xmlns:xsl="http://www.w3.org/1999/XSL/Transform">
<xsl:output method="xml" version="1.0" encoding="UTF-8" indent="yes"/>

<xsl:template match="/">
    <Person>
        <xsl:for-each select="Person">
            <xsl:attribute name="dog">
                <xsl:value-of select="@dog_name"/>
            </xsl:attribute>
            <xsl:element name="name">
                <xsl:value-of select="name/text()"/>
            </xsl:element>
            <xsl:element name="indexOfcarString_CaseInSensitive">
                <xsl:variable name="case_neutral" select="translate(name,
                    'ABCDEFGHIJKLMNOPQRSTUVWXYZ', 'abcdefghijklmnopqrstuvwxyz')"/>
                <xsl:value-of select= "string-length(substring-before($case_neutral, 'car')) - 1"/>
            </xsl:element>
            <xsl:element name="indexOfcarString_CaseSensitive">
                <xsl:value-of select="string-length(substring-before(name, 'car')) - 1"/>
            </xsl:element>
            <xsl:element name="homeTown">
                <xsl:value-of select="homeTown" />
            </xsl:element>
        </xsl:for-each>
    </Person>
</xsl:template>

</xsl:stylesheet>
```

## A Seventeenth Example: Library → Storage

A source XML schema for libraries is given by:

```
<?xml version="1.0" encoding="UTF-8"?>
<xs:schema xmlns:xs="http://www.w3.org/2001/XMLschema">
<xs:element name="library" type="Library"/>

<xs:complexType name="Library">
    <xs:sequence>
        <xs:element name="book" type="Book" minOccurs="0" maxOccurs="unbounded"/>
    </xs:sequence>
</xs:complexType>

<xs:complexType name="Book">
    <xs:sequence>
        <xs:element name="name" type="xs:string"/>
        <xs:element name="author" type="Author" maxOccurs="unbounded"/>
    </xs:sequence>
</xs:complexType>

<xs:complexType name="Author">
    <xs:attribute name="name"/>
</xs:complexType>

</xs:schema>
```

A target XML schema for storage is given by:

```
<?xml version="1.0" encoding="UTF-8"?>
<xs:schema xmlns:xs="http://www.w3.org/2001/XMLschema">
<xs:element name="storage" type="Storage"/>

<xs:complexType name="Storage">
    <xs:sequence>
        <xs:element name="document" type="Document" minOccurs="0"
                                                maxOccurs="unbounded"/>
    </xs:sequence>
</xs:complexType>

<xs:complexType name="Document">
    <xs:sequence>
        <xs:element name="writer" type="xs:string" maxOccurs="unbounded"/>
    </xs:sequence>
    <xs:attribute name="title"/>
</xs:complexType>

</xs:schema>
```

A common ontology model for the source and target XML schema is illustrated in FIG. 22. A mapping of the source XML schema into the ontology model is given by Table CXX, with an additional correspondence between the complexType and the container class **set**[Book]. A mapping of the target XML schema into the ontology model is given by Table CXXI, with an additional correspondence between the complexType storage and the container class **set**{Book].

Based on Tables CXX and CXXI, an XSLT transformation that maps XML documents that conform to the source schema to corresponding documents that conform to the target schema should accomplish the following tasks:

1. document/@title ← book/name/text()
2. document/writer/text() ← book/author/@name

Such a transformation is given by:

```
<?xml version="1.0" encoding="UTF-8"?>
<xsl:stylesheet version="1.0" xmlns:xsl="http://www.w3.org/1999/XSL/Transform">
 <xsl:output method="xml" version="1.0" encoding="UTF-8" indent="yes"/>

 <xsl:template match="/">
     <storage>
         <xsl:for-each select=".//library">
             <xsl:for-each select="book">
                 <document>
                         <xsl:attribute name="title">
                             <xsl:value-of select="name"/>
                         </xsl:attribute>
                         <writer>
                             <xsl:for-each select="author/@name">
                                 <xsl:value-of select="."/>
                             </xsl:for-each>
                         </writer>
                     </document>
             </xsl:for-each>
         </xsl:for-each>
     </storage>
</xsl:template>

</xsl:stylesheet>
```

## An Eighteenth Example: Change Case

A source XML schema for plain text is given by:

```
<?xml version="1.0" encoding="UTF-8"?>
<xs:schema xmlns:xs=http://www.w3.org/2001/XMLschema elementFormDefault="qualified"
                                                    attributeFormDefault="unqualified">
 <xs:element name="Person" type="Person"/>

 <xs:complexType name="Person">
     <xs:sequence>
         <xs:element name="name" type="xs:string"/>
         <xs:element name="homeTown" type="xs:string"/>
     </xs:sequence>
 </xs:complexType>

</xs:schema>
```

A target XML schema for case sensitive text is given by:

```
<?xml version="1.0" encoding="UTF-8"?>
<xs:schema xmlns:xs="http://www.w3.org/2001/XMLschema" elementFormDefault="qualified"
                                                   attributeFormDefault="unqualified">
 <xs:element name="Person" type="Person"/>

 <xs:complexType name="Person">
     <xs:sequence>
          <xs:element name="name" type="xs:string"/>
          <xs:element name="homeTown" type="xs:string"/>
     </xs:sequence>
 </xs:complexType>

</xs:schema>
```

An XSLT transformation that maps the source schema into the target schema is given by:

```
<?xml version="1.0" encoding="UTF-8"?>
<xsl:stylesheet version="1.0" xmlns:xsl="http://www.w3.org/1999/XSL/Transform">
 <xsl:output method="xml" version="1.0" encoding="UTF-8" indent="yes"/>

 <xsl:template match="/">
     <Person>
          <xsl:for-each select="Person">
               <xsl:element name="low_name">
                    <xsl:value-of select="translate(name,
           'ABCDEFGHIJKLMNOPQRSTUVWXYZ',  'abcdefghijklmnopqrstuvwxyz')"/>
               </xsl:element>
               <xsl:element name="upper_homeTown">
                    <xsl:value-of select="translate(homeTown,
                         'abcdefghijklmnopqrstuvwxyz','ABCDEFGHIJKLMNOPQRSTUVWXYZ')"/>
               </xsl:element>
          </xsl:for-each
     </Person>
 </xsl:template>

</xsl:stylesheet>
```

## An Nineteenth Example: Number Manipulation

A source XML schema for list of numbers is given by:

```
<?xml version="1.0" encoding="UTF-8"?>
<xs:schema xmlns:xs="http://www.w3.org/2001/XMLschema" elementFormDefault="qualified"
                                                    attributeFormDefault="unqualified">
 <xs:element name="List_o_Numbers" type="NumList"/>

 <xs:complexType name="NumList">
     <xs:sequence>
         <xs:element name="first" type="xs:string"/>
         <xs:element name="second" type="xs:float"/>
         <xs:element name="third" type="xs:float"/>
         <xs:element name="fourth" type="xs:float"/>
         <xs:element name="fifth" type="xs:float"/>
         <xs:element name="sixth" type="xs:float"/>
         <xs:element name="seventh" type="xs:float" />
     </xs:sequence>
 </xs:complexType>

</xs:schema>
```

A target XML schema for a list of numbers is given by:

```
<?xml version="1.0" encoding="UTF-8"?>
<xs:schema xmlns:xs="http://www.w3.org/2001/XMLschema" elementFormDefault="qualified"
attributeFormDefault="unqualified">
 <xs:element name="List_o_Numbers" type="NumList"/>

 <xs:complexType name="NumList">
     <xs:sequence>
         <xs:element name="first_as_num" type="xs:decimal"/>          <!-- first_as_num - take a
                string and return a numerical value.  Exemplifies use of the operator value(string) -->
         <xs:element name="second_floor" type="xs:decimal"/>          <!-- second_floor return
                 nearest integer less than number.  Exemplifies use of the operator floor(number) -->
         <xs:element name="second_firstDecimal_floor" type="xs:decimal"/>
         <!-- second_firstDecimal_floor - return nearest first decimal place less than number.
                                    Exemplifies use of the operator floor(number, significance) -->
         <xs:element name="third_ceil" type="xs:decimal"/>          <!-- third_ceil - return nearest
                        integer greater than number.  Exemplifies use of the operator ceil(number) -->
         <xs:element name="third_secondDecimal_ceil" type="xs:decimal"/>
         <!-- third_secondDecimal_ceil - return nearest second decimal place greater than number.
                                       Exemplifies use of the operator cei(number, significance) -->
         <xs:element name="fourth_round" type="xs:decimal"/>          <!--fourth_round -  round
                          the number in integers.  Exemplifies use of the operator round(number) -->
         <xs:element name="fourth_thirdDecimal_round" type="xs:decimal"/>
         <!-- fourth_thirdDecimal_round - round the number up to third decimal.
                                    Exemplifies use of the operator round(number, significance) -->
         <xs:element name="fifth_roundToThousand" type="xs:decimal"/>
         <!-- fifth_roundToThousand - round the number up to nearest ten to the third.
                               Exemplifies use of the operator roundToPower(number, power) -->
         <xs:element name="abs_sixth" type="xs:decimal"/>          <!-- abs_sixth – return
                             absolute value of number.  Exemplifies use of operator abs(number) -->
         <xs:element name="seventh" type="xs:string" />          <!-- seventh - return number as
                                           string.  Exemplifies use of operator string(number) -->
     </xs:sequence>
 </xs:complexType>

</xs:schema>
```

An XSLT transformation that maps the source schema into the target schema is given by:

```
<?xml version="1.0" encoding="UTF-8"?>
<xsl:stylesheet version="1.0" xmlns:xsl="http://www.w3.org/1999/XSL/Transform">
 <xsl:output method="xml" version="1.0" encoding="UTF-8" indent="yes"/>

 <xsl:template match="/">
     <List_o_Numbers>
         <xsl:for-each select="List_o_Numbers">
             <xsl:element name="first_as_num">
                 <xsl:value-of select="number(first)"/>
             </xsl:element>              <!-- first_as_num - take a string and return a numerical value.
                                              Exemplifies use of the operator value(string) -->
             <xsl:element name="second_floor">
                 <xsl:value-of select="floor(second)"/>
             </xsl:element>              <!-- second_floor return nearest integer less than number.
                                              Exemplifies use of the operator floor(number) -->
             <xsl:element name="second_firstDecimal_floor">
                 <xsl:value-of select="floor(second*10) div 10"/>
             </xsl:element>              <!-- second_firstDecimal_floor - return nearest first decimal
            place less than number. Exemplifies use of the operator floor(number, significance) -->
            <xsl:element name="third_ceil">
                 <xsl:value-of select="ceiling(third)"/>
             </xsl:element>
             <xsl:element name="third_secondDecimal_ceil">
                 <xsl:value-of select="ceiling(third*100) div 100"/>
             </xsl:element>              <!-- third_ceil - return nearest integer greater than number.
                                              Exemplifies use of the operator ceil(number) -->
             <xsl:element name="fourth_round">
                 <xsl:value-of select="round(fourth)"/>
             </xsl:element>              <!-- fourth_round - round the number in integers.
                                              Exemplifies use of the operator round(number) -->
             <xsl:element name="fourth_thirdDecimal_round">
                 <xsl:value-of select="round(fourth*1000) div 1000" />
             </xsl:element>              <!-- fourth_thirdDecimal_round - round the number up to
                    third decimal. Exemplifies use of the operator round(number, significance) -->
             <xsl:element name="fifth_roundToThousand">
                 <xsl:value-of select="round(fifth div 1000) * 1000" />
             </xsl:element>              <!-- fifth_roundToThousand - round the number up to nearest
                 ten to the third. Exemplifies use of the operator roundToPower(number, power) -->
             <xsl:element name="abs_sixth">
                 <xsl:choose>
                     <xsl:when test="sixth &lt; 0">
                         <xsl:value-of select="sixth * -1"/>
                     </xsl:when>
                     <xsl:otherwise>
                         <xsl:value-of select="sixth"/>
                     </xsl:otherwise>
                 </xsl:choose>
             </xsl:element>              <!-- abs_sixth - return absolute value of number.
                                              Exemplifies use of operator abs(number) -->
             <xsl:element name="seventh">
                 <xsl:value-of select="concat(' ',string(seventh),' ')"/>
             </xsl:element>              <!-- seventh - return number as string.
                                              Exemplifies use of operator string(number) -->
         </xsl:for-each>
     </List_o_Numbers>
 </xsl:template>

</xsl:stylesheet>
```

## A Twentieth Example: String Manipulation

A source XML schema for a person is given by:

```
<?xml version="1.0" encoding="UTF-8"?>
<xs:schema xmlns:xs="http://www.w3.org/2001/XMLschema" elementFormDefault="qualified"
                                                        attributeFormDefault="unqualified">
 <xs:element name="Person" type="Person"/>
 <xs:complexType name="Person">
     <xs:sequence>
         <xs:element name="name" type="xs:string"/>
         <xs:element name="homeTown" type="xs:string"/>
     </xs:sequence>
     <xs:attribute name="dog_name" />
 </xs:complexType>

</xs:schema>
```

A target XML schema for a person is given by:

```
<?xml version="1.0" encoding="UTF-8"?>
<xs:schema xmlns:xs="http://www.w3.org/2001/XMLschema" elementFormDefault="qualified"
                                                        attributeFormDefault="unqualified">
 <xs:element name="Person" type="Person"/>

 <xs:complexType name="Person">
     <xs:sequence>
         <xs:element name="four_name" type="xs:string"/>
         <xs:element name="capital_homeTown" type="xs:string"/>
                 <!-- four-Name is only four characters long, please.
                 This exemplifies use of the substring(string, start, length) operator-->
                 <!-- capital_homeTown - we must insist you capitalize the first letter of a town,
                 out of respect. This exemplifies use of the capital operator-->
     </xs:sequence>
     <xs:attribute name="dog_trim"/>
     <xs:attribute name="dog_length"/>
                 <!-- dog_trim - keep your dog trim - no blank spaces in front or after the name.
                 This exemplifies use of the trim operator -->
                 <!--dog_length - gives the number of characters (in integers, not dog years) in your
                 dog's name. This exemplifies use of the length(string) operator -->
 </xs:complexType>

</xs:schema>
```

An XSLT transformation that maps the source schema into the target schema is given by:

```
<?xml version="1.0" encoding="UTF-8"?>
<xsl:stylesheet version="1.0" xmlns:xsl="http://www.w3.org/1999/XSL/Transform">
 <xsl:output method="xml" version="1.0" encoding="UTF-8" indent="yes"/>

 <xsl:template match="/">
     <Person>
         <xsl:for-each select="Person">
             <xsl:attribute name="dog_trim">
                 <xsl:value-of select="normalize-space(@dog_name)"/>
             </xsl:attribute>
             <xsl:attribute name="dog_length">
                 <xsl:value-of select="string-length(normalize-space(@dog_name))"/>
             </xsl:attribute>
             <!-- dog_trim - This exemplifies use of the trim operator -->
             <!--dog_length - This exemplifies use of the length(string) operator -->

             <xsl:element name="four_name">
                 <xsl:value-of select="substring(name,1, 4)"/>
             </xsl:element>
             <xsl:element name="capital_homeTown">
                 <xsl:value-of select="concat(translate(substring(normalize-space(homeTown),1,1),
                        'abcdefghijklmnopqrstuvwxyz','ABCDEFGHIJKLMNOPQRSTUVWXYZ'),
                        substring(normalize-space(homeTown),2))" />
             </xsl:element>
             <!-- four-Name. This exemplifies use of the substring(string, start, length) operator-->
             <!-- capital_hometown. This exemplifies use of the capital operator-->
         </xsl:for-each>
     </Person>
 </xsl:template>

</xsl:stylesheet>
```

## A Twenty-First Example: Temperature Conversion

A source XML schema for temperature in Fahrenheit is given by:

```
<?xml version="1.0" encoding="UTF-8"?>
<xs:schema xmlns:xs="http://www.w3.org/2001/XMLschema" elementFormDefault="qualified"
                                                   attributeFormDefault="unqualified">
 <xs:element name="city" type="city"/>

 <xs:complexType name="city">
     <xs:sequence>
         <xs:element name="temperatureF" type="xs:string"/>
     </xs:sequence>
     <xs:attribute name="name" />
 </xs:complexType>

</xs:schema>
```

A target XML schema for temperature in Centigrade is given by:

```
<?xml version="1.0" encoding="UTF-8"?>
<xs:schema xmlns:xs="http://www.w3.org/2001/XMLschema" elementFormDefault="qualified"
                                          attributeFormDefault="unqualified">
 <xs:element name="town" type="town" />

 <xs:complexType name="town">
     <xs:sequence>
         <xs:element name="temperatureC" type="xs:string" />
     </xs:sequence>
 </xs:complexType>
 <xs:attribute name="name" />

 </xs:schema>
```

An XSLT transformation that maps the source schema into the target schema is given by:

```
<?xml version="1.0" encoding="UTF-8"?>
<xsl:stylesheet version="1.0" xmlns:xsl="http://www.w3.org/1999/XSL/Transform">
<xsl:output method="xml" version="1.0" encoding="UTF-8" indent="yes"/>

<xsl:template match="/">
     <town>
         <xsl:for-each select="city">
             <xsl:attribute name="name">
                 <xsl:value-of select="@name"/>
             </xsl:attribute>
             <xsl:element name="temperatureC">
                 <xsl:value-of select="floor( (temperatureF - 32) * (5 div 9) )" />
             </xsl:element>
         </xsl:for-each>
     </town>
</xsl:template>

</xsl:stylesheet>
```

## A Twenty-Second Example: Town with Books

A source XML schema for a town with books is given by:

```
<?xml version="1.0" encoding="UTF-8"?>
<xs:schema xmlns:xs="http://www.w3.org/2001/XMLschema" elementFormDefault="qualified"
                                                attributeFormDefault="unqualified">
 <xs:element name="town" type="Town" />

 <xs:complexType name="Town">
     <xs:sequence>
         <xs:element name="library" type="Library" minOccurs="0" maxOccurs="unbounded" />
     </xs:sequence>
     <xs:attribute name="name" type="xs:string" />
 </xs:complexType>

 <xs:complexType name="Library">
     <xs:sequence>
         <xs:element name="book" type="Book" minOccurs="0" maxOccurs="unbounded" />
     </xs:sequence>
     <xs:attribute name="name" type="xs:string" />
 </xs:complexType>

 <xs:complexType name="Book">
     <xs:sequence>
         <xs:element name="title" type="xs:string" />
         <xs:element name="author_name" type="xs:string" minOccurs="1"
                                                maxOccurs="unbounded" />
     </xs:sequence>
 </xs:complexType>

</xs:schema>
```

A target XML schema for a list of books is given by:

```
<?xml version="1.0" encoding="UTF-8"?>
<xs:schema xmlns:xs="http://www.w3.org/2001/XMLschema" elementFormDefault="qualified"
                                                attributeFormDefault="unqualified">
 <xs:element name="list_of_books" type="books"/>

 <xs:complexType name="books">
     <xs:sequence>
         <xs:element name="book" type="book" minOccurs="0" maxOccurs="unbounded" />
     </xs:sequence>
 </xs:complexType>

 <xs:complexType name="book">
     <xs:sequence>
         <xs:element name="title" type="xs:string" />
         <xs:element name="author_name" type="xs:string" minOccurs="1"
                                                maxOccurs="unbounded" />
     </xs:sequence>
 </xs:complexType>

</xs:schema>
```

A common ontology model for the source and target XML schema is illustrated in FIG. 25. A mapping of the source XML schema into the ontology model is given by:

| Table CXXVII: Mapping from Source schema to Ontology for Twenty-Second Example | | |
|---|---|---|
| schema | Ontology | Property Index |
| complexType: book | Class: Book | |
| element: book/title/text() | Property: *name*(Book) | 1 |
| element: book/author_name/text() | Property: *author*(Book) | 2 |
| complexType: library | Class: Library | |
| element: library/books | Container Class: **set**[Book] | 5 |
| element: library/name/text() | Property: name(Library) | 6 |
| complexType: town | Class: Town | |
| element: town/libraries | Container Class: **set**[Library] | 1 |
| element: town/name/text() | Property: name(Town) | 2 |

A mapping of the target XML schema into the ontology model is given by:

| Table CXXVIII: Mapping from Target schema to Ontology for Twenty-Second Example | | |
|---|---|---|
| schema | Ontology | Property Index |
| complexType: book | Class: Book | |
| element: book/title/text() | Property: *name*(Book) | 1 |
| element: book/author_name/text() | Property: *author*(Book) | 2 |
| element: list_of_books | **Set**[Book] | |

Based on Tables CXXVII and CXXVIII, an XSLT transformation that maps XML documents that conform to the source schema to corresponding documents that conform to the target schema is given by:

```
<?xml version="1.0" encoding="UTF-8"?>
<xsl:stylesheet version="1.0" xmlns:xsl="http://www.w3.org/1999/XSL/Transform">
 <xsl:output method="xml" version="1.0" encoding="UTF-8" indent="yes"/>

 <xsl:template match="/">
     <books>
         <xsl:for-each select=".//book">
             <book>
                 <xsl:element name="title">
                     <xsl:value-of select="title/text()"/>
                 </xsl:element>
                     <xsl:for-each select="author_name">
                         <xsl:element name="author_name">
                                 <xsl:value-of select="."/>
                         </xsl:element>
                     </xsl:for-each>
             </book>
         </xsl:for-each>
     </books>
</xsl:template>

</xsl:stylesheet>
```

## A Twenty-Third Example: Town with Books

A source XML schema for a town is given by:

```
<?xml version="1.0" encoding="UTF-8"?>
<xs:schema xmlns:xs="http://www.w3.org/2001/XMLschema" elementFormDefault="qualified"
                                                    attributeFormDefault="unqualified">
<xs:element name="town" type="Town"/>

<xs:complexType name="Town">
    <xs:sequence>
        <xs:element name="library" type="Library" minOccurs="0" maxOccurs="unbounded"/>
        <xs:element name="police_station" type="PoliceStation" minOccurs="0"
                                                    maxOccurs="unbounded"/>
    </xs:sequence>
    <xs:attribute name="name" type="xs:string"/>
</xs:complexType>

<xs:complexType name="Library">
    <xs:sequence>
        <xs:element name="book" type="Book" minOccurs="0" maxOccurs="unbounded"/>
    </xs:sequence>
    <xs:attribute name="name" type="xs:string"/>
</xs:complexType>

<xs:complexType name="Book">
    <xs:sequence>
        <xs:element name="title" type="xs:string"/>
        <xs:element name="author_name" type="xs:string" maxOccurs="unbounded"/>
    </xs:sequence>
</xs:complexType>

<xs:complexType name="PoliceStation">
    <xs:sequence>
        <xs:element name="Officers" type="Officers"/>
    </xs:sequence>
    <xs:attribute name="identifier" type="xs:string"/>
</xs:complexType>

<xs:complexType name="Officers">
    <xs:sequence>
        <xs:element name="name" type="xs:string" minOccurs="1" maxOccurs="unbounded"/>
    </xs:sequence>
</xs:complexType>

</xs:schema>
```


A first target XML schema for police stations is given by:

```
<?xml version="1.0" encoding="UTF-8"?>
<xs:schema xmlns:xs="http://www.w3.org/2001/XMLschema" elementFormDefault="qualified"
                                                        attributeFormDefault="unqualified">

<xs:element name="PoliceStations" type="PoliceStations"/>

<xs:complexType name="PoliceStations">
    <xs:sequence>
        <xs:element name="Station" type="Station" minOccurs="0" maxOccurs="unbounded"/>
    </xs:sequence>
</xs:complexType>

<xs:complexType name="Station">
    <xs:sequence>
        <xs:element name="Officers" type="Officers"/>
    </xs:sequence>
    <xs:attribute name="identifier" type="xs:string"/>
</xs:complexType>

<xs:complexType name="Officers">
    <xs:sequence>
        <xs:element name="name" type="xs:string" minOccurs="1" maxOccurs="10"/>
    </xs:sequence>
</xs:complexType>

</xs:schema>
```

A common ontology model for the source and target XML schema is illustrated in FIG. 26. A mapping of the source XML schema into the ontology model is given by:

| Table CXXIX: Mapping from Source schema to Ontology for Twenty-Third Example | | |
|---|---|---|
| schema | Ontology | Property Index |
| complexType: book | Class: Book | |
| element: book/title/text() | Property: *title*(Book) | 2 |
| element: book/author_name/text() | Property: *author*(Book) | 1 |
| complexType: library | Class: Library | |
| element: library/books | Container Class: **set**[Book] | 5 |
| element: library/@name | Property: name(Library) | 6 |
| complexType: officer | Class: Person | |
| element: officer/name/text() | Property: *name*(Person) | 7 |
| complexType: police_station | Class: Station | |
| element: police_station/officers | Container Class: **set**[Person] | 8 |
| element: police_station/@identifier | Property: *identifier*(Station) | 9 |
| complexType: town | Class: Town | |
| element: town/libraries | Container Class: **set**[Library] | 3 |
| element: town/police_stations | Container Class: **set**[Station] | 10 |
| element: town/@name | Property: name(Town) | 4 |

A mapping of the first target XML schema into the ontology model is given by:

| Table CXXX: Mapping from Target schema to Ontology for Twenty-Third Example | | |
|---|---|---|
| schema | Ontology | Property Index |
| complexType: officer | Class: Person | |
| element: officer/name/text() | Property: *name*(Person) | 7 |
| complexType: station | Class: Station | |
| element: station/officers | Container Class: **set**[Person] | 8 |
| element: station/@identifier | Property: *identifier*(Station) | 9 |
| complexType: police_stations | Class: **set**[Station] | |

Based on Tables CXXIX and CXXX, an XSLT transformation that maps XML documents that conform to the source schema to corresponding documents that conform to the first target schema is given by:

```
<?xml version="1.0" encoding="UTF-8"?>
<xsl:stylesheet version="1.0" xmlns:xsl="http://www.w3.org/1999/XSL/Transform">
<xsl:output method="xml" version="1.0" encoding="UTF-8" indent="yes"/>

<xsl:template match="/">
    <PoliceStations>
        <xsl:for-each select=".//PoliceStation">
            <Station>
                <xsl:attribute name="identifier">
                    <xsl:value-of select="@identifier"/>
                </xsl:attribute>
                <xsl:for-each select="Officers">
                    <Officers>
                        <xsl:for-each select="name[position() &lt; 11]">
                            <xsl:element name="name">
                                <xsl:value-of select="."/>
                            </xsl:element>
                        </xsl:for-each>
                    </Officers>
                </xsl:for-each>
            </Station>
        </xsl:for-each>
    </PoliceStations>
</xsl:template>

</xsl:stylesheet>
```

A second target XML schema for temperature in Centigrade is given by:

```
<?xml version="1.0" encoding="UTF-8"?>
<xs:schema xmlns:xs="http://www.w3.org/2001/XMLschema" elementFormDefault="qualified"
                                                      attributeFormDefault="unqualified">
<xs:element name="PoliceStations" type="PoliceStations"/>

<xs:complexType name="PoliceStations">
    <xs:sequence>
        <xs:element name="Station" type="Station" minOccurs="0" maxOccurs="unbounded"/>
    </xs:sequence>
</xs:complexType>

<xs:complexType name="Station">
    <xs:sequence>
        <xs:element name="Officers" type="Officers"/>
    </xs:sequence>
    <xs:attribute name="identifier" type="xs:string"/>
</xs:complexType>

<xs:complexType name="Officers">
    <xs:sequence>
        <xs:element name="name" type="xs:string" minOccurs="10" maxOccurs="unbounded"/>
    </xs:sequence>
</xs:complexType>

</xs:schema>
```

Based on Tables CXXIX and CXXX, an XSLT transformation that maps XML documents that conform to the source schema to corresponding documents that conform to the second target schema is given by:

```
<?xml version="1.0" encoding="UTF-8"?>
<xsl:stylesheet version="1.0" xmlns:xsl="http://www.w3.org/1999/XSL/Transform">
<xsl:output method="xml" version="1.0" encoding="UTF-8" indent="yes"/>

<xsl:template match="/">
    <PoliceStations>
        <xsl:for-each select=".//PoliceStation">
            <Station>
                <xsl:attribute name="identifier">
                    <xsl:value-of select="@identifier"/>
                </xsl:attribute>
                <xsl:for-each select="Officers">
                    <Officers>
                        <xsl:for-each select="name">
                            <xsl:element name="name">
                                <xsl:value-of select="."/>
                            </xsl:element>
                        </xsl:for-each>
                    </Officers>
                </xsl:for-each>
                <xsl:call-template name="generate_officer">
                    <xsl:with-param name="so_far" select="count(name)"/>
                </xsl:call-template>
            </Station>
        </xsl:for-each>
    </PoliceStations>
</xsl:template>

<xsl:template name="generate_officer">
    <xsl:param name="so_far"/>
        <xsl:if test="$so_far &lt; 10">
            <bar>
            </bar>
            <xsl:call-template name="generate_officer">
                <xsl:with-param name="so_far" select="$so_far + 1"/>
            </xsl:call-template>
        </xsl:if>
</xsl:template>

</xsl:stylesheet>
```

A third target XML schema for temperature in Centigrade is given by:

```
<?xml version="1.0" encoding="UTF-8"?>
<xs:schema xmlns:xs="http://www.w3.org/2001/XMLschema" elementFormDefault="qualified"
attributeFormDefault="unqualified">
 <xs:element name="PoliceStations" type="PoliceStations"/>

 <xs:complexType name="PoliceStations">
     <xs:sequence>
         <xs:element name="Station" type="Station" minOccurs="0" maxOccurs="unbounded"/>
     </xs:sequence>
 </xs:complexType>

 <xs:complexType name="Station">
     <xs:sequence>
         <xs:element name="Officers" type="Officers"/>
     </xs:sequence>
     <xs:attribute name="identifier" type="xs:string"/>
 </xs:complexType>

 <xs:complexType name="Officers">
     <xs:sequence>
         <xs:element name="name" type="xs:string" minOccurs="10" maxOccurs="20"/>
     </xs:sequence>
 </xs:complexType>

</xs:schema>
```

Based on Tables CXXIX and CXXX, an XSLT transformation that maps XML documents that conform to the source schema to corresponding documents that conform to the first target schema is given by:

```
<?xml version="1.0" encoding="UTF-8"?>
<xsl:stylesheet version="1.0" xmlns:xsl="http://www.w3.org/1999/XSL/Transform">
<xsl:output method="xml" version="1.0" encoding="UTF-8" indent="yes"/>

<xsl:template match="/">
    <PoliceStations>
        <xsl:for-each select=".//PoliceStation">
            <Station>
                <xsl:attribute name="identifier">
                    <xsl:value-of select="@identifier"/>
                </xsl:attribute>
                <xsl:for-each select="Officers">
                    <Officers>
                        <xsl:for-each select="name[position() &lt; 11]">
                            <xsl:element name="name">
                                <xsl:value-of select="."/>
                            </xsl:element>
                        </xsl:for-each>
                    </Officers>
                </xsl:for-each>
                <xsl:call-template name="generate_officer">
                    <xsl:with-param name="so_far" select="count(name)"/>
                </xsl:call-template>
            </Station>
        </xsl:for-each>
    </PoliceStations>
</xsl:template>

<xsl:template name="generate_officer">
    <xsl:param name="so_far"/>
        <xsl:if test="$so_far &lt; 20">
            <bar>
            </bar>
            <xsl:call-template name="generate_officer">
                <xsl:with-param name="so_far" select="$so_far + 1"/>
            </xsl:call-template>
        </xsl:if>
</xsl:template>

</xsl:stylesheet>
```

## Implementation Details - SQL Generation

As mentioned hereinabove, and described through the above series of examples, in accordance with a preferred embodiment of the present invention a desired transformation from a source RDBS to a target ROBS is generated by:

(i) mapping the source and target RDBS into a common ontology model;
(ii) representing fields of the source and target RDBS in terms of properties of the ontology model, using symbols for properties;
(iii) deriving expressions for target symbols in terms of source symbols; and
(iv) converting the expressions into one or more SQL queries.

Preferably the common ontology model is built by adding classes and properties to an initial ontology model, as required to encompass tables and fields from the source and target RDBS. The addition of classes and properties can be performed manually by a user, automatically by a computer, or partially automatically by a user and a computer in conjunction.

Preferably, while the common ontology model is being built, mappings from the source and target RDBS into the ontology model are also built by identifying tables and fields of the source and target RDBS with corresponding

classes and properties of the ontology model. Fields are preferably identified as being either simple properties or compositions of properties.

In a preferred embodiment of the present invention, automatic user guidance is provided when building the common ontology model, in order to accommodate the source and target RDBS mappings.. Specifically, while mapping source and target RDBS into the common ontology model, the present invention preferably automatically presents a user with the ability to create classes that corresponds to tables, if such classes are not already defined within the ontology. Similarly, the present invention preferably automatically present a user with the ability to create properties that correspond to fields, if such properties are not already defined within the ontology.

This automatic guidance feature of the present invention enables users to build a common ontology on the fly, while mapping the source and target RDBS.

In a preferred embodiment of the present invention, automatic guidance is used to provide a user with a choice of properties to which a given table column may be mapped. Preferably, the choice of properties only includes properties with target types that are compatible with a data type of the given table column. For example, if the given table column has data type VARCHAR2, then the choice of properties only includes properties with target type string. Similarly, if the given table column is a foreign key to a foreign table, then the choice of properties only includes properties whose target is the class corresponding to the foreign table.

In a preferred embodiment of the present invention, automatic guidance is provided in determining inheritance among classes of the common ontology. Conditions are identified under which the present invention infers that two tables should be mapped to classes that inherit one from another. Such a condition arises when a table, $\mathbf{T_1}$, contains a primary key that is a foreign key to a table, $\mathbf{T_2}$. In such a situation, the present invention preferably infers that the class corresponding to $\mathbf{T_1}$ inherits from the class corresponding to $\mathbf{T_2}$.

For example, $\mathbf{T_1}$ may be a table for employees with primary key Social_Security_No, which is a foreign key for a table $\mathbf{T_2}$ for citizens. The fact that Social_Security_No serves both as a primary key for $\mathbf{T_1}$ and as a foreign key for $\mathbf{T_2}$ implies that the class Employees inherits from the class Citizens.

Preferably, when the present invention infers an inheritance relation, the user is given an opportunity to confirm or decline. Alternatively, the user may not be given such an opportunity.

Preferably, representing fields of the source and target RDBS in terms of properties of the ontology model is performed by identifying a key field among the fields of a table and expressing the other fields in terms of the identified key field using an inverse property symbol for the key field. For example, if a key field corresponds to a property denoted by 1, and a second field corresponds to a property denoted by 2, then the relation of the second field to the first field is denoted by $2o1^{-1}$. If a table has more than one key field, then preferably symbols are listed for each of the key fields, indicating how the other fields relate thereto. For example, if the second field above also is a key field, then the relation of the first field to the second field is denoted by $1o2^{-1}$, and both of the symbols $2o1^{-1}$ and $1o2^{-1}$ are listed.

Preferably, deriving expressions for target symbols in terms of source symbols is implemented by a search over the source symbols for paths that result in the target symbols. For example, if a target symbol is given by $3o1^{-1}$, then chains of composites are formed starting with source symbols of the form $ao1^{-1}$, with each successive symbol added to the composite chain inverting the leftmost property in the chain. Thus, a symbol ending with $a^{-1}$ is added to the left of the symbol $ao1^{-1}$, and this continues until property 3 appears at the left end of the chain.

Preferably, converting symbol expressions into SQL queries is accomplished by use of Rules 1 - 7 described hereinabove with reference to the examples.

Preferably, when mapping a table to a class, a flag is set that indicates whether it is believed that the table contains all instances of the class.

**Implementation Details - XSLT Generation Algorithm**

1. Begin with the target schema. Preferably, the first step is to identify a candidate root element. Assume in what follows that one such element has been identified - if there are more than one such candidate, then preferably a user decides which is to be the root of the XSLT transformation. Assume that a <root> element has thus been identified. Create the following XSLT script, to establish that any document produced by the transformation will at minimum conform to the requirement that its opening and closing tags are identified by *root:*

```
<xsl:template match="/">
 <root>

 </root>
</xsl:template>
```

2. Preferably, the next step is to identify the elements in the target schema that have been mapped to ontological classes. The easiest case, and probably the one encountered most often in practice, is one in which the root itself is mapped to a class, be it a simple class, a container class or a cross-product. If not, then preferably the code-generator goes down a few levels until it comes across elements mapped to classes. The elements that are not mapped to classes should then preferably be placed in the XSLT between the <root> tags mentioned above, in the correct order, up to the places where mappings to classes begin.

```
<xsl:template match="/">
 <root>
     <sequence1>
          [ <element1> mapped to class ]
          <element2>

     </sequence1>
     <sequence2>

     </sequence2>

 </root>
</xsl:template>
```

3. Henceforth, for purposes of clarity and exposition, the XSLT script generation algorithm is described in terms of an element <fu> that is expected to appear in the target XML document and is mapped to an ontological class, whether that means the root element or a parallel set of elements inside a tree emanating from the root. The treatment is the same in any event from that point onwards.

4. Preferably the XSLT generation algorithm divides into different cases depending on a number of conditions, as detailed hereinbelow:

| Table CXXXI: Conditions for <xsl:for-each> Segments | |
|---|---|
| **Condition** | **XSLT Segment** |
| <fu> is mapped to a simple class Foo with cardinality parameters minOccurs="1" maxOccurs="1" in the XML schema and there is a corresponding element <foo> in the source document that is associated to the same class Foo. | A |
| <fu> is mapped to a simple class Foo with cardinality parameters minOccurs="0" maxOccurs="1" in the XML schema and there is a corresponding element <foo> in the source document that is associated to the same class Foo. | B |
| <fus> is mapped to a container class **set**[Foo] with cardinality parameters minOccurs="0" maxOccurs="unbounded" in the XML schema, and there are corresponding elements <foos1>, <foos2>, ... , <foos*n*> in the source document each of which is associated to the same container-class **set**[Foo]. | C |
| fus> is mapped to a container class **set**[Foo] with cardinality parameters minOccurs="0" maxOccurs="unbounded" in the XML schema, but there is no corresponding element <foos> in the source document that is associated with the same container-class **set**[Foo]. There are, however, perhaps elements <foo1>, <foo2> . . . <foo*m*> which are each individually mapped to the class Foo. | D |
| <fus> is mapped to a container class **set**[Foo] with cardinality parameters minOccurs="0" maxOccurs="*n*" in the XML schema, and there are corresponding elements <foos1>, <foos2>, ... , <foos*k*> in the source document each of which is associated to the same container-class **set**[Foo]. | E |
| <fus> is mapped to a container class **set**[Foo] with cardinality parameters minOccurs="0" maxOccurs="*n*" in the XML schema, but there is no corresponding element <foos> in the source document that is associated with the same container-class **set**[Foo]. There are, however, perhaps elements <foo1>, <foo2> . . . <foo*k*> which are each individually mapped to the class Foo. | F |
| fus> is mapped to a container class **set**[Foo] with cardinality parameters minOccurs="*m*" maxOccurs="*n*" in the XML schema, and there are corresponding elements <foos1>, <foos2>, ... , <foos*k*> in the source document each of which is associated to the same container-class **set**[Foo]. | G |
| fus> is mapped to a container class **set**[Foo] with cardinality parameters minOccurs="*m*" maxOccurs="*n*" in the XML schema, but there is no corresponding element <foos> in the source document that is associated with the same container-class **set**[Foo]. There are, however, perhaps elements <foo1>, <foo2> . . . <foo*k*> which are each individually mapped to the class Foo. | H |

For cases C and D, the XML schema code preferably looks like:

```
<xsd:complexType name="fus">
    <xsd:sequence>
        <xsd:element name="fu" type="fu_view" minOccurs="0" maxOccurs="unbounded"/>
    </xsd:sequence>
</xsd:complexType>
```

For cases E and F, the XML schema code preferably looks like:

```
<xsd:complexType name="fus">
    <xsd:sequence>
        <xsd:element name="fu" type="fu_view" minOccurs="0" maxOccurs="n">
    </xsd:sequence>
</xsd:complexType>
```

For cases G and H, the XML schema code preferably looks like:

```
<xsd:complexType name="fus">
    <xsd:sequence>
        <xsd:element name="fu" type="fu_view" minOccurs="0" maxOccurs="n">
    </xsd:sequence>
</xsd:complexType>
```

For the rules as to what should appear in between the <for-each> tags, see step 5 hereinbelow.

CASE A:

```
<fu>
    <xsl:for-each select=".//foo[position() = 1">


        </xsl:for-each>
</fu>
```

CASE B:

```
<xsl:for-each select=".//foo[position() = 1]">
    <fu>

    </fu>
</xsl:for-each>
```

CASE C:

```
<fus>
    <xsl:for-each select=".//foos1">

        <xsl:for-each select="foo">
            <fu>

            </fu>
        </xsl:for-each>
    </xsl:for-each>

    <xsl:for-each select=".//foos2">

        <xsl:for-each select="foo">
            <fu>

            </fu>
        </xsl:for-each>
    </xsl:for-each>

    <xsl:for-each select=".//foosn">

        <xsl:for-each select="foo">
            <fu>

            </fu>
        </xsl:for-each>
    </xsl:for-each>

</fus>
```

CASE D:

```
<fus>
    <xsl:for-each select=".//foo1">
        <fu>

</fu>
    </xsl:for-each>

<xsl:for-each select=".//foo2">
        <fu>

</fu>
    </xsl:for-each>

<xsl:for-each select=".//foom">
        <fu>

        </fu>
    </xsl:for-each>

</fus>
```

CASE E:

```
<xsl:template match="/">
    <fus>
        <xsl:call-template name="find_foos1">
                <xsl:with-param name="so_far" select="0"/>
        </xsl:call-template>
    </fus>
</xsl:template>

<xsl:template name="find_foos1">
    <xsl:param name="so_far"/>
        <xsl:if test="$so_far &lt; n+1">
                <xsl:for-each select=".//foos1/foo">
                    <xsl:if test="$so_far+position() &lt; n+1">
                        <fu>

                        </fu>
                    </xsl:if>
                </xsl:for-each>
        </xsl:if>
        <xsl:call-template name="find_foos2">
                <xsl:with-param name="so_far" select="$so_far+count(.//foos1/foo)"/>
        </xsl:call-template>
</xsl:template>

<xsl:template name="find_foos2">
    <xsl:param name="so_far"/>
        <xsl:if test="$so_far &lt; n+1">
                <xsl:for-each select=".//foos2/foo">
                    <xsl:if test="$so_far+position() &lt; n+1">
                        <fu>

                        </fu>
                    </xsl:if>
                </xsl:for-each>
        </xsl:if>
        <xsl:call-template name="find_foos3">
                <xsl:with-param name="so_far" select="$so_far+count(.//foos2/foo)"/>
        </xsl:call-template>
</xsl:template>

<xsl:template name="find_foosk">
    <xsl:param name="so_far"/>
        <xsl:if test="$so_far &lt; n+1">
                <xsl:for-each select=".//foosn/foo">
                    <xsl:if test="$so_far+position() &lt; n+1">
                        <fu>

                        </fu>
                    </xsl:if>
                </xsl:for-each>
        </xsl:if>
</xsl:template>
```

CASE F:

```
<xsl:template match="/">
    <fus>
        <xsl:call-template name="find_foo1">
                <xsl:with-param name="so_far" select="0"/>
        </xsl:call-template>
    </fus>
</xsl:template>

<xsl:template name="find_foo1">
    <xsl:param name="so_far"/>
        <xsl:if test="$so_far &lt; n+1">
                <xsl:for-each select=".//foo1 ">
                    <xsl:if test="$so_far+position() &lt; n+1">
                        <fu>

                        </fu>
                    </xsl:if>
                </xsl:for-each>
        </xsl:if>
        <xsl:call-template name="find_foo2">
                <xsl:with-param name="so_far" select="$so_far+count(.//foo1)"/>
        </xsl:call-template>
</xsl:template>

<xsl:template name="find_foo2">
    <xsl:param name="so_far"/>
        <xsl:if test="$so_far &lt; n+1">
                <xsl:for-each select=".//foo2">
                    <xsl:if test="$so_far+position() &lt; n+1">
                        <fu>

                        </fu>
                    </xsl:if>
                </xsl:for-each>
        </xsl:if>
        <xsl:call-template name="find_foo3">
                <xsl:with-param name="so_far" select="$so_far+count(.//foo2)"/>
        </xsl:call-template>
</xsl:template>
<xsl:template name="find_fook">
    <xsl:param name="so_far"/>
        <xsl:if test="$so_far &lt; n+1">
                <xsl:for-each select=".//fook">
                    <xsl:if test="$so_far+position() &lt; n+1">
                        <fu>

                        </fu>
                    </xsl:if>
                </xsl:for-each>
        </xsl:if
</xsl:template>
```

CASE G:

```
<xsl:template match="/">
    <fus>
        <xsl:call-template name="find_foos1">
                <xsl:with-param name="so_far" select="0"/>
        </xsl:call-template>
    </fus>
</xsl:template>

<xsl:template name="find_foos1">
    <xsl:param name="so_far"/>
        <xsl:if test="$so_far &lt; n+1">
                <xsl:for-each select=".//foos1/foo">
                    <xsl:if test="$so_far+position() &lt; n+1">
                        <fu>

                        </fu>
                    </xsl:if>
                </xsl:for-each>
        </xsl:if>
        <xsl:call-template name="find_foos2">
                <xsl:with-param name="so_far" select="$so_far+count(.//foos1/foo)"/>
        </xsl:call-template>
</xsl:template>

<xsl:template name="find_foos2">
    <xsl:param name="so_far"/>
        <xsl:if test="$so_far &lt; n+1">
                <xsl:for-each select=".//foos2/foo">
                    <xsl:if test="$so_far+position() &lt; n+1">
                        <fu>

                        </fu>
                    </xsl:if>
                </xsl:for-each>
        </xsl:if>
        <xsl:call-template name="find_foos3">
                <xsl:with-param name="so_far" select="$so_far+count(.//foos2/foo)"/>
        </xsl:call-template>
</xsl:template>

<xsl:template name="find_foosn">
    <xsl:param name="so_far"/>
        <xsl:if test="$so_far &lt; k+1">
                <xsl:for-each select=".//foosn/foo">
                    <xsl:if test="$so_far+position() &lt; n+1">
                        <fu>

                        </fu>
                    </xsl:if>
                </xsl:for-each>
        </xsl:if>
        <xsl:call-template name="generate_fus">
                <xsl:with-param name="so_far" select="$so_far+count(.//foosk/foo)"/>
        </xsl:call-template>
</xsl:template>

<xsl:template name="generate_fus">
    <xsl:param name="so_far"/>
    <xsl:if test="$so_far &lt; m">
        <fu>
        </fu>
        <xsl:call-template name="generate_fus">
                <xsl:with-param name="so_far" select="$so_far + 1"/>
        </xsl:call-template>
    </xsl:if>
</xsl:template>
```

CASE H:

```
<xsl:template match="/">
    <fus>
        <xsl:call-template name="find_foo1">
                <xsl:with-param name="so_far" select="0"/>
        </xsl:call-template>
    </fus>
</xsl:template>
<xsl:template name="find_foo1">
    <xsl:param name="so_far"/>
        <xsl:if test="$so_far &lt; n+1">
                <xsl:for-each select=".//foo1">
                    <xsl:if test="$so_far+position() &lt; n+1">
                        <fu>

                        </fu>
                    </xsl:if>
                </xsl:for-each>
        </xsl:if>
        <xsl:call-template name="find_foo2">
                <xsl:with-param name="so_far" select="$so_far+count(.//foo1)"/>
        </xsl:call-template>
</xsl:template>
<xsl:template name="find_foo2">
    <xsl:param name="so_far"/>
        <xsl:if test="$so_far &lt; n+1">
                <xsl:for-each select=".//foo2">
                    <xsl:if test="$so_far+position() &lt; n+1">
                        <fu>

                        </fu>
                    </xsl:if>
                </xsl:for-each>
        </xsl:if>
        <xsl:call-template name="find_foo3">
                <xsl:with-param name="so_far" select="$so_far+count(.//foo2)"/>
        </xsl:call-template>
</xsl:template>
<xsl:template name="find_foon">
    <xsl:param name="so_far"/>
        <xsl:if test="$so_far &lt; k+1">
                <xsl:for-each select=".//foon">
                    <xsl:if test="$so_far+position() &lt; n+1">
                        <fu>

                        </fu>
                    </xsl:if>
                </xsl:for-each>
        </xsl:if>
        <xsl:call-template name="generate_fus">
                <xsl:with-param name="so_far" select="$so_far+count(.//fook)"/>
        </xsl:call-template>
</xsl:template>
<xsl:template name="generate_fus">
    <xsl:param name="so_far"/>
    <xsl:if test="$so_far &lt; m">
        <fu>
        </fu>
        <xsl:call-template name="generate_fus">
                <xsl:with-param name="so_far" select="$so_far + 1"/>
        </xsl:call-template>
    </xsl:if>
</xsl:template>
```

5. Next assume that the classes have been taken care of as detailed hereinabove in step 4. Preferably, from this point onwards the algorithm proceeds by working with properties rather than classes. Again, the algorithm is divided up into cases. Assume that the <fu> </fu> tags have been treated, and that the main issue now is dealing with the elements <bar> that are properties of <fu>.

**Sequence Lists**

Suppose that the properties of <fu> are listed in a sequence complex-type in the target schema. Assume, for the sake of definitiveness, that a complexType fu is mapped to an ontological class Foo, with elements $bar_i$ mapped to respective property, Foo.$bar_i$. Assume further that the source XML schema has an Xpath pattern fu1 that maps to the ontological class Foo, with further children patterns fu1/barr1, fu1/barr2, etc., mapping to the relevant property paths.

In a preferred embodiment of the present invention, specific pieces of code are generated to deal with different maximum and minimum occurrences. Such pieces of code are generated inside the <fu> </fu> tags that were generated as described hereinabove. Preferably, the general rule for producing such pieces of code is as follows:

Table CXXXI: Conditions for Filling in <xsl:for-each> Segments

| Condition | XSLT Segment |
|---|---|
| The target XML code says <xs:element name="bar" minOccurs="1" maxOccurs="1"/> or equivalently <xs:element name="bar" />, and the source has an associated tag <barr>. | I |
| The target XML code says <xs:element name="bar" minOccurs="0" maxOccurs="unbounded"/> and the source has an associated tag <barr>. | J |
| The XML code says <xs:element name="bar" minOccurs="0" maxOccurs="*n*"/> and the source has an associated tag <barr>. | L |
| The XML code says <xs:element name="bar" minOccurs="*m*" maxOccurs="unbounded"/> where $m > 0$, and the source has an associated tag <barr>. | M |
| The XML code says <xs:element name="bar" minOccurs="*m*" maxOccurs="*n*"/> where $m > 0$, and $n$ is a finite integer, and the source has an associated tag <barr>. | N |
| The target sequence includes a line <xs:element name="bar" minOccurs="*m*" maxOccurs="*n*"/> where $m > 0$, but the source has no associated tag. | O |

CASE I:

```
<bar>
    <xsl:value-of select="barr"/>
</bar>
```

CASE J:

```
<xsl:for-each select="barr">
        <bar>
            <xsl:value-of select="."/>
        </bar>
</xsl:for-each>
```

CASE K:

```
<xsl:for-each select="barr[position() &lt; n+1]">
        <bar>
            <xsl:value-of select="."/>
        </bar>
</xsl:for-each>
```

CASE L:

```
<xsl:for-each select="barr">
            <bar>
                <xsl:value-of select="."/>
            </bar>
</xsl:for-each>
<xsl:call-template name="generate_bar">
        <xsl:with-param name="so_far" select="count(barr)"/>
</xsl:call-template>

<xsl:template name="generate_bar">
<xsl:param name="so_far"/>
<xsl:if test="$so_far &lt; m">
    <bar>
    </bar>
    <xsl:call-template name="generate_bar">
        <xsl:with-param name="so_far" select="$so_far + 1"/>
    </xsl:call-template>
</xsl:if>
</xsl:template>
```

CASE M:

```
<xsl:for-each select="barr[position() &lt; n+1]">
            <bar>
                <xsl:value-of select="."/>
            </bar>
</xsl:for-each>
<xsl:call-template name="generate_bar">
        <xsl:with-param name="so_far" select="count(barr)"/>
</xsl:call-template>

<xsl:template name="generate_bar">
<xsl:param name="so_far"/>
<xsl:if test="$so_far &lt; m">
    <bar>
    </bar>
    <xsl:call-template name="generate_bar">
        <xsl:with-param name="so_far" select="$so_far + 1"/>
    </xsl:call-template>
</xsl:if>
</xsl:template>
```

CASE N:

```
<bar>
</bar>
```

As an exemplary illustration, suppose the complexType appears in the target schema as follows:

```
<xs:complexType name="fu">
 <xs:sequence>
     <xs:element name="bar1" type="xs:string" />
     <xs:element name="bar2" type="xs:string" minOccurs="0" maxOccurs="7"/>
     <xs:element name="bar3" type="xs:string" minOccurs="1" maxOccurs="8"/>
     <xs:element name="bar4" type="xs:string" minOccurs="3" maxOccurs="unbounded"/>
     <xs:element name="bar5" type="xs:string" minOccurs="0" maxOccurs="unbounded"/>

     <xs:element name="barn" type="xs:string" />
 </xs:sequence>
</xs:complexType>
```

Then, based on the above cases, the following XSLT script is generated.

```
    <fu>
        <barr1>
                <xsl:value-of select="bar1"/>
        </barr1>

        <xsl:for-each select="bar2[position() &lt; 5]">
                <barr2>
                    <xsl:value-of select="."/>
                </barr2>
        </xsl:for-each>

        <xsl:for-each select="bar3[position() &lt; 9]">

                <barr3>
                        <xsl:value-of select="."/>
                </barr3>

        </xsl:for-each>
        <xsl:call-template name="generate_barr3">
                <xsl:with-param name="so_far" select="count(bar3)"/>
        </xsl:call-template>
        <xsl:for-each select="bar4">
                    <barr4>
                        <xsl:value-of select="."/>
                    </barr4>
        </xsl:for-each>
        <xsl:call-template name="generate_barr4">
                <xsl:with-param name="so_far" select="count(bar4)"/>
        </xsl:call-template>
        <xsl:for-each select="bar5">
                <barr5>
                    <xsl:value-of select="."/>
                </barr5>
        </xsl:for-each>
    </xsl:if>
</fu>
</xsl:template>

<xsl:template match="text()|@*"/>

<xsl:template name="generate_barr3">
    <xsl:param name="so_far"/>
    <xsl:if test="$so_far &lt; 1">
        <barr3>
        </barr3>
        <xsl:call-template name="generate_barr3">
            <xsl:with-param name="so_far" select="$so_far + 1"/>
        </xsl:call-template>
    </xsl:if>
</xsl:template>

<xsl:template name="generate_barr4">
    <xsl:param name="so_far"/>
    <xsl:if test="$so_far &lt; 3">
        <barr4>
        </barr4>
        <xsl:call-template name="generate_barr4">
            <xsl:with-param name="so_far" select="$so_far + 1"/>
        </xsl:call-template>
    </xsl:if>
</xsl:template>
```

**Choice Lists**

Suppose that the properties of <fu> are listed in a choice complex-type in the target schema. Assume again, as above, that fu is mapped to an ontological class Foo, with each of $bar_i$ mapped to a property, Foo.$bar_i$ . Assume further, as above, that the source XML schema has an Xpath pattern foo that maps to the ontological class Foo, with further children patterns foo/barr1, foo/barr2, etc., mapping to the relevant property paths.

Preferably, the general rule for producing XSLT script associated with a target choice bloc is as follows. Start with the tags <xsl:choose> </xsl:choose>. For each element in the choice sequence, insert into the choose bloc <xsl: when test="barr"> </xsl:when> and within that bloc insert code appropriate to the cardinality restrictions of that element, exactly as above for sequence blocs, including the creation of new templates if needed. Finally, if there are no elements with minOccurs="0" in the choice bloc, select any tag <barr> at random in the choice bloc, and insert into the XSLT, right before the closing </xsl:choose>, <xsl:otherwise> <barr> </barr> </xsl:otherwise>.

As an exemplary illustration, suppose the complexType appears I the target schema as follows:

```
<xs:choice>
    <xs:element name="bar1" type="xs:string" />
    <xs:element name="bar2" type="xs:string" minOccurs="0" maxOccurs="7"/>
    <xs:element name="bar3" type="xs:string" minOccurs="1" maxOccurs="8"/>
    <xs:element name="bar4" type="xs:string" minOccurs="3" maxOccurs="unbounded"/>
    <xs:element name="bar5" type="xs:string" minOccurs="0" maxOccurs="unbounded"/>

    <xs:element name="barn" type="xs:string" />
</xs:choice>
```

Then, based on the above cases, the following XSLT script is generated.

```
<fu>

    <xsl:choose>
        <xsl:when test="bar1">
            <barr1>
                <xsl:value-of select="bar1"/>
            </barr1>
        </xsl:when>
        <xsl:when test="bar2">
            <xsl:for-each select="bar2[position() &lt; 8]">
                <barr2>
                    <xsl:value-of select="."/>
                </barr2>

        </xsl:for-each>
        </xsl:when>
        <xsl:when test="bar3">
            <xsl:for-each select="bar3[position() &lt; 9]">
                    <barr3>
```

```
                    <xsl:value-of select="."/>
                </barr3>
            </xsl:for-each>
            <xsl:call-template name="generate_barr3">
                <xsl:with-param name="so_far" select="count(bar3)"/>
            </xsl:call-template>
        </xsl:when>
        <xsl:when test="bar4">
            <xsl:for-each select="bar4">
                    <barr4>
                        <xsl:value-of select="."/>
                    </barr4>
            </xsl:for-each>
            <xsl:call-template name="generate_barr4">
                <xsl:with-param name="so_far" select="count(bar4)"/>
            </xsl:call-template>
        </xsl:when>
        <xsl:when test="bar5">
        <xsl:for-each select="bar5">
                <barr5>
                    <xsl:value-of select="."/>
                </barr5>
        </xsl:for-each>

        </xsl:when>

        <xsl:otherwise>
        </xsl:otherwise>
    </xsl:choose>
    </fu>
</xsl:template>

<xsl:template match="text()|@*"/>

<xsl:template name="generate_barr3">
    <xsl:param name="so_far"/>
    <xsl:if test="$so_far &lt; 1">
        <barr3>
        </barr3>
        <xsl:call-template name="generate_barr3">
            <xsl:with-param name="so_far" select="$so_far + 1"/>
        </xsl:call-template>
    </xsl:if>
</xsl:template>

<xsl:template name="generate_barr4">
    <xsl:param name="so_far"/>
    <xsl:if test="$so_far &lt; 3">
        <barr4>
        </barr4>
        <xsl:call-template name="generate_barr4">
            <xsl:with-param name="so_far" select="$so_far + 1"/>
        </xsl:call-template>
    </xsl:if>
</xsl:template>
```

**All Lists**

Suppose that the properties of <fu> are listed in an all complex-type in the target schema. Assume again, as

above, that foo is mapped to an ontological class Foo, with each of $bar_i$ mapped to a property, Foo.$bar_i$. Assumer further that the source XML schema has an Xpath pattern foo that maps to the ontological class Foo, with further children patterns foo/barr1, foo/barr2, etc., mapping to the relevant property paths.

In a preferred embodiment of the present invention, a general rule is to test for the presence of each of the source tags associated with the target tags, by way of

```
<xsl:if test="foo">
    <fu>
        <xsl:value-of select="foo"/>
    </fu>
</xsl:if>
```

Preferably, if any of the elements has minOccurs="1" then the negative test takes place as well:

```
<xsl:if test="not (foo)">
    <fu>
    </fu>
</xsl:if>
```

As an exemplary illustration, suppose the complexType appears I the target schema as follows:

```
    <xs:complexType name="bar">
        <xs:all>
            <xs:element name="bar2" type="xs:string" minOccurs="0" maxOccurs="1"/>
            <xs:element name="bar3" type="xs:string" minOccurs="1" maxOccurs="1"/>

    </xs:all>
</xs:complexType>
```

Then the following XSLT script is generated.

```
    <fu>

<xsl:template match="foo">
    <xsl:if test="position() = 1">

        <xsl:if test="bar1">
            <barr1>
                <xsl:value-of select="bar1"/>
            </barr1>
        </xsl:if>

        <xsl:if test="bar2">
            <barr2>
                <xsl:value-of select="bar2"/>
            </barr2>
        </xsl:if>

        <xsl:if test="not (bar2)">
            <barr2>
            </barr2>
        </xsl:if>

    </xsl:if>

</xsl:template>
```

6. In a preferred embodiment of the present invention, when the elements of foo/bar1, foo/bar2, etc. have been processed as above in step 5, everything repeats in a recursive manner for properties that are related to each of the $bar_i$ elements. That is, if the target XML schema has further tags that are children of bar1, bar2, etc., then preferably each of those is treated as properties of the respective target classes of bar1, bar2, and so on, and the above rules apply recursively.

## Additional Considerations

In reading the above description, persons skilled in the art will realize that there are many apparent variations that can be applied to the methods and systems described. A first variation to which the present invention applies is a setup where source relational database tables reside in more than one database. The present invention preferably operates by using Oracle's cross-database join, if the source databases are Oracle databases. In an alternative embodiment, the present invention can be applied to generate a first SQL query for a first source database, and use the result to generate a second SQL query for a second source database. The two queries taken together can feed a target database.

In the foregoing specification, the invention has been described with reference to specific exemplary embodiments thereof. It will, however, be evident that various modifications and changes may be made to the specific exemplary embodiments without departing from the broader spirit and scope of the invention as set forth in the appended claims. Accordingly, the specification and drawings are to be regarded in an illustrative rather than a restrictive sense.

## Claims

**1.** A method for deriving transformations for transforming data from one data schema to another, comprising:

receiving a source data schema and a target data schema;
mapping the source data schema into an ontology model;
mapping the target data schema into the ontology model; and
deriving a transformation for transforming data conforming to the source data schema into data conforming to the target data schema, using the ontology model.

**2.** The method of claim 1 further comprising converting at least one of the source data schema and the target schema from an external format to an internal format.

**3.** The method of claim 1 further comprising receiving the ontology model.

**4.** The method of claim 3 further comprising converting the ontology model from an external format to an internal format.

**5.** The method of claim 1 further comprising generating the ontology model.

**6.** The method of claim 5 further comprising receiving an initial ontology model, wherein said generating generates the ontology model from the initial ontology model.

**7.** The method of claim 6 further comprising converting the initial ontology model from an external format to an internal format.

**8.** The method of claim 1 further comprising generating executable program code that transforms data conforming to the source data schema into data conforming to the target data schema.

**9.** The method of claim 1 wherein the source data schema is a source table schema describing source data tables, wherein the target data schema is a target table schema describing target data tables, and wherein the source table schema and the target table schema each describes at least one table having columns.

**10.** The method of claim 9 wherein the source table schema is a source relational database schema describing source relational database tables, wherein the target table schema is a target relational database schema describing target relational database tables, and wherein the transformation is an SQL query.

**11.** The method of claim 10 wherein said mapping a source data schema and said mapping a target data schema each comprise:

identifying at least one class in the ontology model corresponding to at least one table; and
identifying at least one property or composition of properties in the ontology model corresponding to at least one table column.

**12.** The method of claim 11 wherein said deriving comprises:

labeling properties of the ontology model with symbols;
converting at least one column in the source relational database schema into at least one source symbol;
converting at least one column in the target relational database schema into at least one target symbol; and
expressing the at least one target symbol in terms of at least one source symbol.

**13.** The method of claim 12 wherein said expressing uses expressions involving composition of properties.

**14.** The method of claim 12 wherein at least one dependency exists among properties in the ontology model, and wherein said deriving further comprises translating the at least one dependency among properties in the ontology model as at least one dependency between target relational database columns and source relational database columns, and wherein said expressing incorporates the at least one dependency between target relational database columns and source relational database columns.

**15.** The method of claim 14 wherein said expressing uses expressions involving arithmetic operations.

**16.** The method of claim 14 wherein said expressing uses expressions involving character string operations.

**17.** The method of claim 10 further comprising applying the query to at least one source relational database table to populate at least one target relational database table.

**18.** The method of claim 17 wherein the at least one source relational database table reside in a single database.

**19.** The method of claim 17 wherein the at least one source relational database table reside in multiple databases.

**20.** The method of claim 1 wherein the source data schema is a source document schema describing source documents, and wherein the target data schema is a target document schema describing target documents.

**21.** The method of claim 20 wherein the source document schema is a source DTD describing source XML documents, wherein the target document schema is a target DTD describing target XML documents, and wherein the source DTD and the target DTD each describes at least one XML element or XML attribute.

**22.** The method of claim 21 wherein the transformation is an XQuery.

**23.** The method of claim 21 wherein the transformation is an XSLT script.

**24.** The method of claim 20 wherein the source document schema is a source XML schema describing source XML documents, wherein the target document schema is a target XML schema describing target XML documents, and wherein the source XML schema and the target XML schema each describes at least one XML complexType having at least one XML element or XML attribute.

**25.** The method of claim 24 wherein the transformation is an XQuery.

**26.** The method of claim 24 wherein the transformation is an XSLT script.

**27.** The method of claim 24 wherein said mapping a source data schema and said mapping a target data schema each comprise:

identifying at least one class in the ontology model corresponding to at least one XML complexType; and
identifying at least one property or composition of properties in the ontology model corresponding to at least one XML element or XML attribute.

**28.** The method of claim 24 wherein said deriving comprises expressing XML elements and XML attributes of the target XML schema in terms of XML elements and XML attributes of the source XML schema.

**29.** The method of claim 28 wherein said expressing is performed recursively through XPath paths.

**30.** The method of claim 27 wherein at least one dependency exists among properties in the ontology model, and wherein said deriving further comprises translating the at least one dependency among properties in the ontology model as at least one dependency between target XML elements and source XML elements.

**31.** The method of claim 26 further comprising applying the XSLT script to at least one source XML document to generate at least one target XML document.

**32.** The method of claim 31 wherein the at least one source XML document reside in a single database.

**33.** The method of claim 31 wherein the at least one source XML document reside in multiple databases.

**34.** A system for deriving transformations for transforming data from one data schema to another, comprising:

a schema receiver receiving a source data schema and a target data schema;
a mapping processor mapping a data schema into an ontology model; and
a transformation processor deriving a transformation for transforming data conforming to the source data schema into data conforming to the target data schema, based on respective source and target mappings generated by said mapping processor for mapping said source data schema and said target data schema into a common ontology model.

**35.** The system of claim 34 further comprising a schema format convertor, converting at least one of the source data schema and the target data schema from an external format to an internal format.

**36.** The system of claim 34 further comprising an ontology receiver receiving the ontology model.

**37.** The system of claim 36 further comprising an ontology format convertor, converting the ontology model from an external format to an internal format.

**38.** The system of claim 34 further comprising an ontology builder generating the ontology model.

**39.** The system of claim 38 further comprising an ontology receiver receiving an initial ontology model, wherein said ontology builder generates the ontology model from the initial ontology model.

**40.** The system of claim 39 further comprising an ontology format convertor, converting the initial ontology model from an external format to an internal format.

**41.** The system of claim 34 further comprising a program code generator generating executable program code that transforms data conforming to the source data schema into data conforming to the target data schema.

**42.** The system of claim 34 wherein the source data schema is a source table schema describing source data tables, wherein the target data schema is a target table schema describing target data tables, and wherein the source table schema and the target table schema each describes at least one data table having columns.

**43.** The system of claim 42 wherein the source table schema is a source relational database schema describing source relational database tables, wherein the target table schema is a target relational database schema describing target database tables, and wherein the transformation is an SQL query.

**44.** The system of claim 43 wherein said mapping processor comprises:

a class identifier identifying at least one class in the common ontology model corresponding to at least one table; and
a property identifier identifying at least one property or composition of properties in the common ontology model corresponding to at least one table column.

**45.** The system of claim 44 wherein said property identifier presents a user with a choice of at least one property in the common ontology model that may correspond to a given table column.

**46.** The system of claim 45 wherein the choice of at least one property only includes properties having targets that are compatible with a data type of the given table column.

**47.** The system of claim 46 wherein, for a given table column that is a foreign key to a foreign table, the choice of at least one property only includes properties whose target is a class corresponding to the foreign table.

**48.** The system of claim 43 wherein said transformation processor comprises:

an ontology labeller labeling properties of the common ontology model with symbols;
a column converter converting at least one column in the source relational database schema into at least one source symbol, and converting at least one column in the target relational database schema into at least one target symbol; and
a symbol processor expressing the at least one target symbol in terms of at least one source symbol.

**49.** The system of claim 48 wherein said symbol processor uses expressions involving composition of properties.

**50.** The system of claim 48 wherein at least one dependency exists among properties in the ontology model, and wherein said transformation processor further comprises a dependency processor translating the at least one dependency among properties in the ontology model as at least one dependency between target relational database columns and source relational database columns, and wherein said symbol processor incorporates the at least one dependency between target relational database columns and source relational database columns.

**51.** The system of claim 50 wherein said symbol processor uses expressions involving arithmetic operations.

**52.** The system of claim 50 wherein said symbol processor uses expressions involving character string operations.

**53.** The system of claim 43 further comprising:

a data receiver receiving at least one source relational database table; and
a data processor applying the query to the at least one source relational database table to populate at least one target relational database table.

**54.** The system of claim 53 wherein the at least one source relational database table reside in a single database.

**55.** The system of claim 53 wherein the at least one source relational database table resides in multiple databases.

**56.** The system of claim 34 wherein the source data schema comprises a source document schema describing source documents, and wherein the target data schema comprises a target document schema describing target documents.

**57.** The system of claim 56 wherein the source document schema is a source DTD describing source XML documents, wherein the target document schema is a target DTD describing target XML documents, and wherein the source DTD and the target DTD each describes at least one XML element or XML attribute.

**58.** The system of claim 57 wherein the transformation is an XQuery.

**59.** The system of claim 57 wherein the transformation is an XSLT script.

**60.** The system of claim 56 wherein the source document schema comprises a source XML schema that describes XML source documents, wherein the target document schema comprises a target XML schema that describes XML target documents, and wherein the source XML schema and the target XML schema each comprises at least one XML complexType having at least one XML element or XML attribute.

**61.** The system of claim 60 wherein the transformation is an XQuery.

**62.** The system of claim 60 wherein the transformation is an XSLT script.

**63.** The system of claim 60 wherein said mapping processor comprises:

a class identifier identifying at least one class in the ontology model corresponding to at least one XML complexType; and
an property identifier identifying at least one property or composition of properties in the ontology model corresponding to at least one XML element or XML attribute.

**64.** The system of claim 60 wherein said transformation processor comprises an XML processor expressing XML elements and XML attributes of said target XML schema in terms of XML elements and XML attributes of said source XML schema.

**65.** The system of claim 64 wherein said XML processor operates recursively through XPath paths.

**66.** The system of claim 64 wherein at least one dependency exists among properties in the ontology model, and wherein said transformation processor further comprises a dependency processor translating the at least one dependency among properties in the ontology model as at least one dependency between target XML elements or attributes, and source XML elements or attributes, and wherein said XML processor incorporates the at least one dependency between target XML elements or attributes, and source XML elements or attributes.

**67.** The system of claim 60 further comprising
a data receiver receiving at least one source XML document; and
a data processor applying the XSLT script to the at least one source XML document to generate at least one target XML document.

**68.** The system of claim 67 wherein the at least one source XML document reside in a single database.

**69.** The system of claim 67 wherein the at least one source XML document reside in multiple databases.

**70.** A method for building an ontology model into which data schema can be embedded, comprising:

receiving at least one data schema; and
building an ontology model into which the at least one data schema can be embedded.

**71.** The method of claim 70 further comprising converting at least one of the at least one data schema from an external format to an internal format.

**72.** The method of claim 70 wherein the at least one data schema is at least one table schema describing data tables having columns.

**73.** The method of claim 72 wherein the at least one table schema is at least one relational database schema describing relational database tables.

**74.** The method of claim 73 wherein said building an ontology model comprises:

providing an initial ontology model;
adding classes to the initial ontology model corresponding to tables described in the at least one relational database schema; and
adding properties to the initial ontology model corresponding to columns described in the at least one relational database schema.

**75.** The method of claim 74 wherein the initial ontology model is empty.

**76.** The method of claim 74 wherein the initial ontology model is non-empty.

**77.** The method of claim 76 further comprising converting the initial ontology model from an external format to an internal format.

**78.** The method of claim 74 wherein said adding classes is performed by a computer in conjunction with a user.

**79.** The method of claim 78 wherein said adding classes prompts a user to add a class to the ontology model when there is a table described in the at least one relational database schema that does not correspond to an existing class in the ontology model.

**80.** The method of claim 74 wherein said adding classes is performed automatically by a computer.

**81.** The method of claim 80 wherein said adding classes automatically adds a class to the ontology model when there is a table described in the at least one relational database schema that does not correspond to an existing class in the ontology model.

**82.** The method of claim 74 wherein said adding properties is performed by a computer in conjunction with a user.

**83.** The method of claim 82 wherein said adding properties prompts a user to add a property to the ontology model when there is a table column described in the at least one relational database schema that does not correspond to an existing property or composition of properties in the ontology model.

**84.** The method of claim 74 wherein said adding properties is performed automatically by a computer.

**85.** The method of claim 84 wherein said adding properties automatically adds a property to the ontology model when there is a table column described in the at least one relational database schema that does not correspond to an existing property or composition of properties in the ontology model.

**86.** The method of claim 70 wherein said building an ontology model comprises inferring inheritance relationships between classes in the ontology model based on relationships between tables described in the at least one relational database schema.

**87.** The method of claim 86 wherein a first class in the ontology model is inferred to inherit from a second class in the

ontology model when a table corresponding to the first class has a primary key that is a foreign key to a table corresponding to the second class.

**88.** The method of claim 86 wherein said inferring inheritance relationships includes prompting a user to confirm an inferred inheritance relationship.

**89.** The method of claim 70 wherein the at least one data schema is at least one document schema describing documents.

**90.** The method of claim 89 wherein the at least one document schema is an XML schema describing XML documents having at least one XML complexType with at least one XML element or XML attribute.

**91.** The method of claim 90 wherein said building an ontology model comprises:

providing an initial ontology model;
adding classes to the initial ontology model corresponding to XML complexTypes described in the at least one XML schema; and
adding properties to the initial ontology model corresponding to XML elements and XML attributes described in the at least one XML schema.

**92.** The method of claim 91 wherein the initial ontology model is empty.

**93.** The method of claim 92 wherein the initial ontology model is non-empty.

**94.** The method of claim 91 wherein said adding classes is performed by a computer in conjunction with a user.

**95.** The method of claim 94 wherein said adding classes prompts a user to add a class to the ontology model when there is an XML complexType described in the at least one XML schema that does not correspond to an existing class in the ontology model.

**96.** The method of claim 91 wherein said adding classes is performed automatically by a computer.

**97.** The method of claim 96 wherein said adding classes automatically adds a class to the ontology model when there is an XML complexType described in the at least one XML schema that does not correspond to an existing class in the ontology model.

**98.** The method of claim 91 wherein said adding properties is performed by a computer in conjunction with a user.

**99.** The method of claim 98 wherein said adding properties prompts a user to add a property to the ontology model when there is an XML element or an XML attribute described in the at least one XML schema that does not correspond to an existing property or composition of properties in the ontology model.

**100.** The method of claim 91 wherein said adding properties is performed automatically by a computer.

**101.** The method of claim 100 wherein said adding properties automatically adds a property to the ontology model when there is an XML element or an XML attribute described in the at least one relational database schema that does not correspond to an existing property or composition of properties in the ontology model.

**102.** A system for building an ontology model into which data schema can be embedded, comprising:

a schema receiver receiving at least one data schema; and
a model builder building an ontology model into which the at least one data schema can be embedded.

**103.** The system of claim 102 further comprising a schema format convertor, converting at least one of the at least one data schema from an external format to an internal format.

**104.** The system of claim 102 wherein the at least one data schema is at least one table schema describing data tables having columns.

**105.** The system of claim 104 wherein the at least one table schema is at least one relational database schema describing relational database tables.

**106.** The system of claim 105 further comprising an ontology receiver receiving an initial ontology model, and wherein said model builder comprises:

a class adder adding classes to the initial ontology model corresponding to tables described in the at least one relational database schema; and
a property adder adding properties to the initial ontology model corresponding to table columns described in the at least one relational database schema.

**107.** The system of claim 106 wherein the initial ontology model is empty.

**108.** The system of claim 106 wherein the initial ontology model is non-empty.

**109.** The system of claim 108 further comprising an ontology format convertor, converting the initial ontology model from an external format to an internal format.

**110.** The system of claim 106 wherein said class adder is guided by a user in conjunction with a computer.

**111.** The system of claim 110 wherein said class adder prompts a user to add a class to the ontology model when there is a table described in the at least one relational database schema that does not correspond to an existing class in the ontology model.

**112.** The system of claim 106 wherein said class adder is automatically guided by a computer.

**113.** The system of claim 112 wherein said class adder automatically adds a class to the ontology model when there is a table described in the at least one relational database schema that does not correspond to an existing class in the ontology model.

**114.** The system of claim 106 wherein said property adder is guided by a user in conjunction with a computer.

**115.** The system of claim 114 wherein said property adder prompts a user to add a property to the ontology model when there is a table column described in the at least one relational database schema that does not correspond to an existing property or composition of properties in the ontology model.

**116.** The system of claim 106 wherein said property adder is automatically guided by a computer.

**117.** The system of claim 116 wherein said property adder automatically adds a property to the ontology model when there is a table column described in the at least one relational database schema that does not correspond to an existing property or composition of properties in the ontology model.

**118.** The system of claim 105 wherein said model builder comprises an inheritance processor inferring inheritance relationships between classes in the ontology model based on relationships between tables in the at least one relational database schema.

**119.** The system of claim 118 wherein said inheritance processor infers that a first class in the ontology model inherits from a second class in the ontology model when a table corresponding to the first class has a primary key that is a foreign key to a table corresponding to the second class.

**120.** The system of claim 118 wherein said model builder ensures that classes corresponding to tables in the at least one relational database schema obey the inferred inheritance relationships.

**121.** The system of claim 120 wherein said inheritance processor prompts a user to confirm an inferred inheritance relationship.

**122.** The system of claim 102 wherein the at least one data schema comprises at least one document schema describing documents.

**123.** The system of claim 122 wherein the at least one document schema comprises at least one XML schema that describes XML documents, wherein having at least one XML complexType with at least one XML element or XML attribute.

**124.** The system of claim 123 further comprising an ontology receiver receiving an initial ontology model, and wherein said model builder comprises:

a class adder adding classes to the initial ontology model corresponding to XML complexTypes described in the at least one XML schema; and
a property adder adding properties to the initial ontology model corresponding to table columns in the at least one relational database schema.

**125.** The system of claim 124 wherein the initial ontology model is empty.

**126.** The system of claim 124 wherein the initial ontology model is non-empty.

**127.** The system of claim 124 wherein said class adder is guided by a user in conjunction with a computer.

**128.** The system of claim 127 wherein said class adder prompts a user to add a class to the ontology model when there is an XML complexType described in the at least one XML schema that does not correspond to an existing class in the ontology model.

**129.** The system of claim 124 wherein said class adder is automatically guided by a computer.

**130.** The system of claim 129 wherein said class adder automatically adds a class to the ontology model when there is an XML complexType described in the at least one XML schema that does not correspond to an existing class in the ontology model.

**131.** The system of claim 124 wherein said property adder is guided by a user in conjunction with a computer.

**132.** The system of claim 131 wherein said property adder prompts a user to add a property to the ontology model when there is an XML element or XML attribute described in the at least one XML schema that does not correspond to an existing property or composition of properties in the ontology model.

**133.** The system of claim 124 wherein said property adder is automatically guided by a computer.

**134.** The system of claim 133 wherein said property adder automatically adds a property to the ontology model when there is an XML element or XML attribute described in the at least one XML schema that does not correspond to an existing property or composition of properties in the ontology model.

**135.** An article of manufacture including one or more computer-readable media that embody a program of instructions for transforming data from one schema to another, wherein the program of instructions, when executed by a processing system, causes the processing system to:

receive a source data schema and a target data schema;
map the source data schema into an ontology model;
map the target data schema into the ontology model; and
derive a transformation for transforming data conforming to the source data schema into data conforming to the target relational database schema, using the ontology model.

**136.** The article of claim 135 wherein the one or more computer-readable media include one or more non-volatile storage devices.

**137.** The article of claim 135 wherein the one or more compute-readable media include a carrier wave modulated with a data signal.

**138.** An article of manufacture including one or more computer-readable media that embody a program of instructions for building a common ontology model into which data schema can be embedded, wherein the program of instructions, when executed by a processing system, causes the processing system to:

receive at least one data schema; and
build an ontology model into which the at least one data schema can be embedded.

**139.** The article of claim 138 wherein the one or more computer-readable media include one or more non-volatile storage devices.

**140.** The article of claim 138 wherein the one or more compute-readable media include a carrier wave modulated with a data signal.

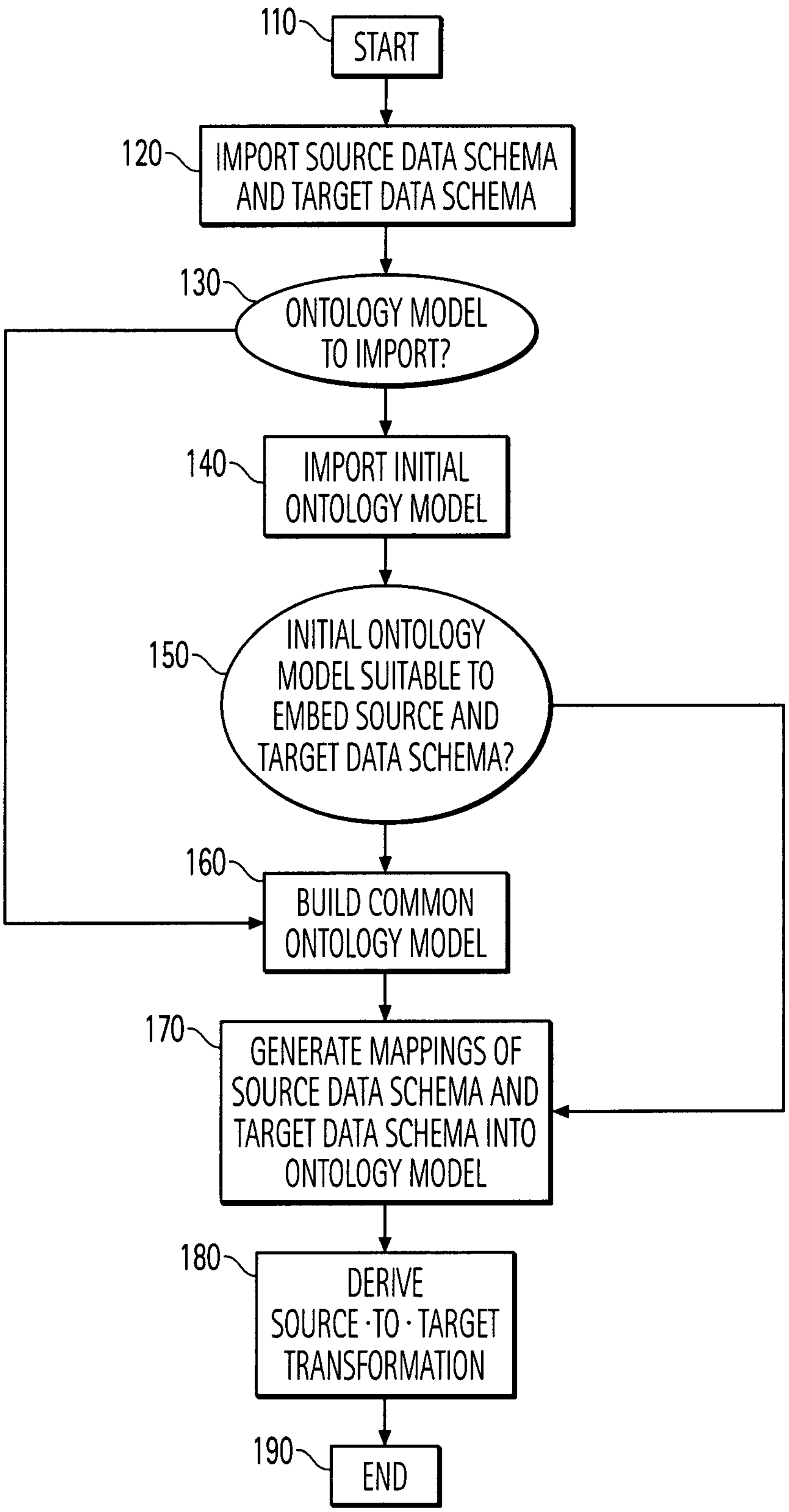
110
START
120
IMPORT SOURCE DATA SCHEMA AND TARGET DATA SCHEMA
130
ONTOLOGY MODEL TO IMPORT?
140
IMPORT INITIAL ONTOLOGY MODEL
150
INITIAL ONTOLOGY MODEL SUITABLE TO EMBED SOURCE AND TARGET DATA SCHEMA?
160
BUILD COMMON ONTOLOGY MODEL
170
GENERATE MAPPINGS OF SOURCE DATA SCHEMA AND TARGET DATA SCHEMA INTO ONTOLOGY MODEL
180
DERIVE SOURCE-TO-TARGET TRANSFORMATION
190
END

Fig. 1

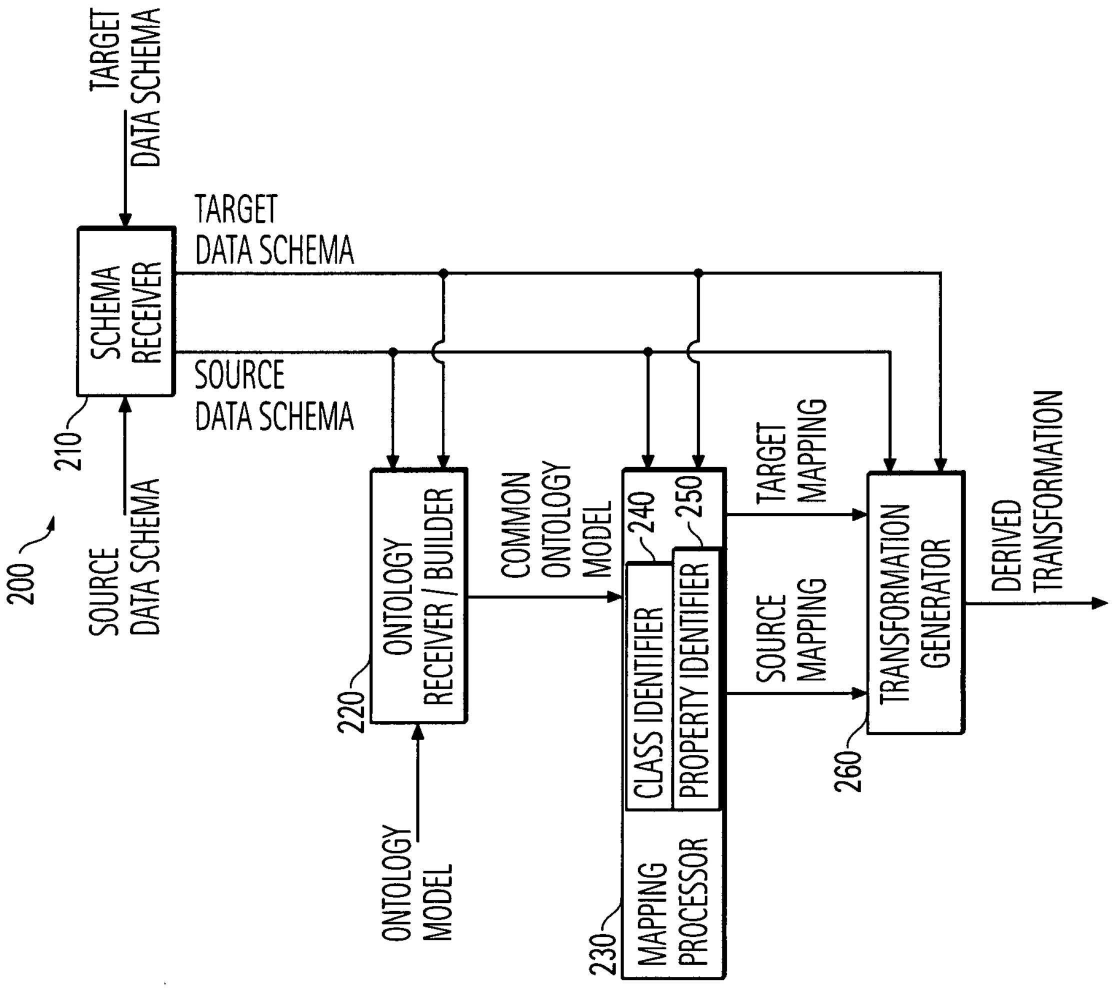
200
210
SOURCE DATA SCHEMA
TARGET DATA SCHEMA
SCHEMA RECEIVER
TARGET DATA SCHEMA
SOURCE DATA SCHEMA
220
ONTOLOGY RECEIVER / BUILDER
ONTOLOGY MODEL
COMMON ONTOLOGY MODEL
230
MAPPING PROCESSOR
240
CLASS IDENTIFIER
250
PROPERTY IDENTIFIER
TARGET MAPPING
SOURCE MAPPING
260
TRANSFORMATION GENERATOR
DERIVED TRANSFORMATION

Fig. 2

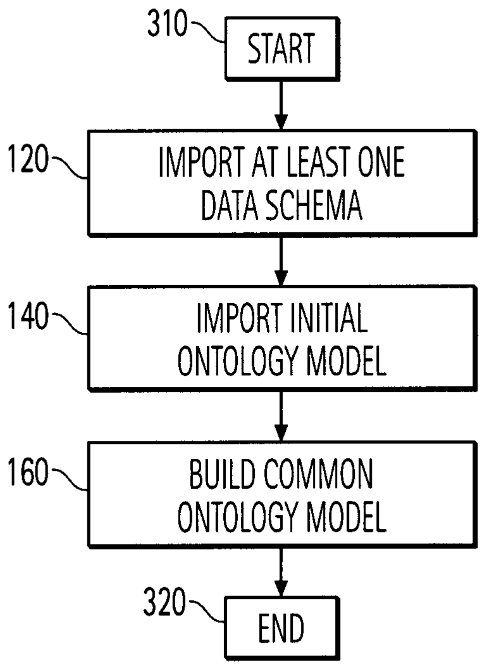
310
START
120
IMPORT AT LEAST ONE
DATA SCHEMA
140
IMPORT INITIAL
ONTOLOGY MODEL
160
BUILD COMMON
ONTOLOGY MODEL
320
END

Fig. 3

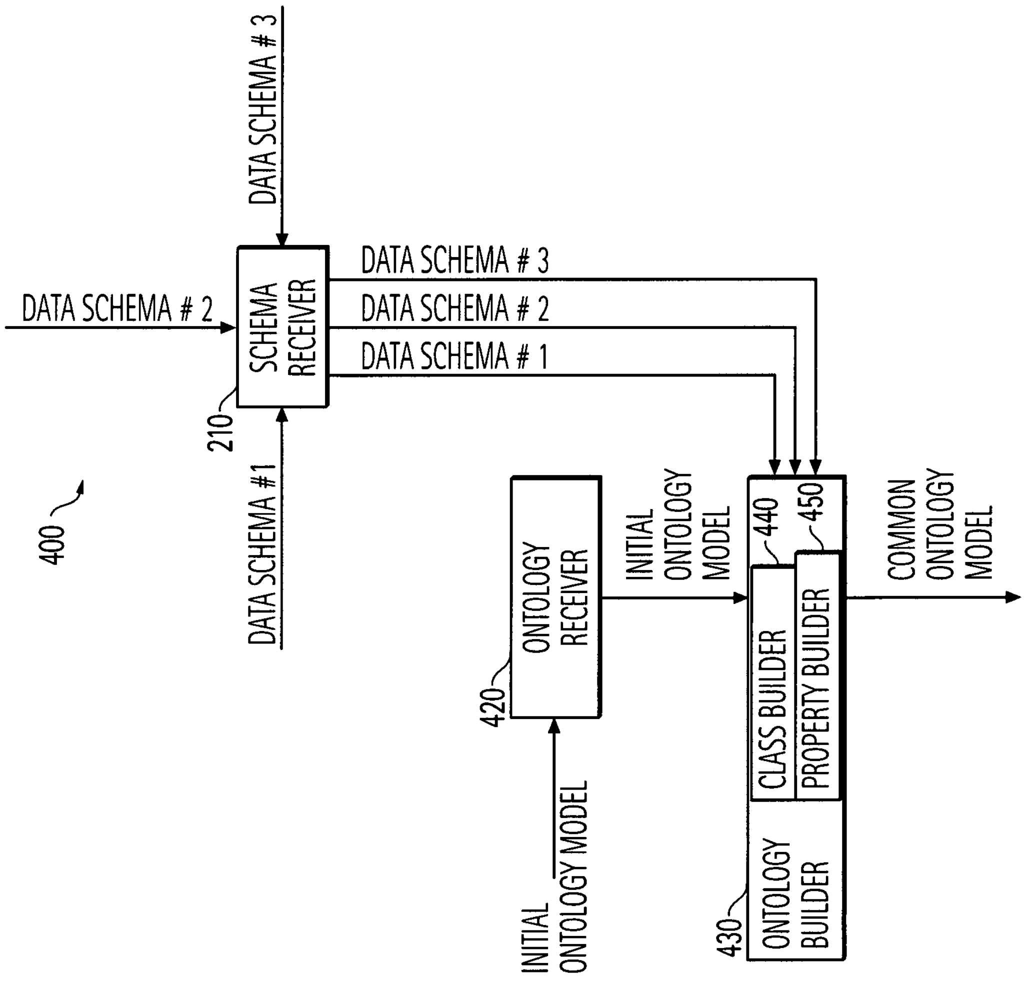
400
DATA SCHEMA # 3
DATA SCHEMA # 2
DATA SCHEMA #1
SCHEMA RECEIVER
210
DATA SCHEMA # 3
DATA SCHEMA # 2
DATA SCHEMA # 1
INITIAL ONTOLOGY MODEL
ONTOLOGY RECEIVER
420
INITIAL ONTOLOGY MODEL
ONTOLOGY BUILDER
430
CLASS BUILDER
440
PROPERTY BUILDER
450
COMMON ONTOLOGY MODEL

Fig. 4

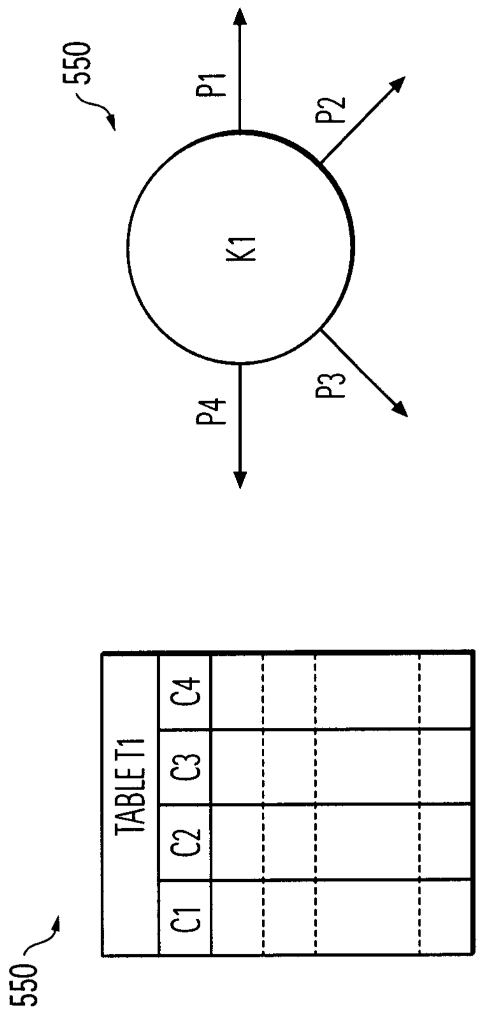


Fig. 5

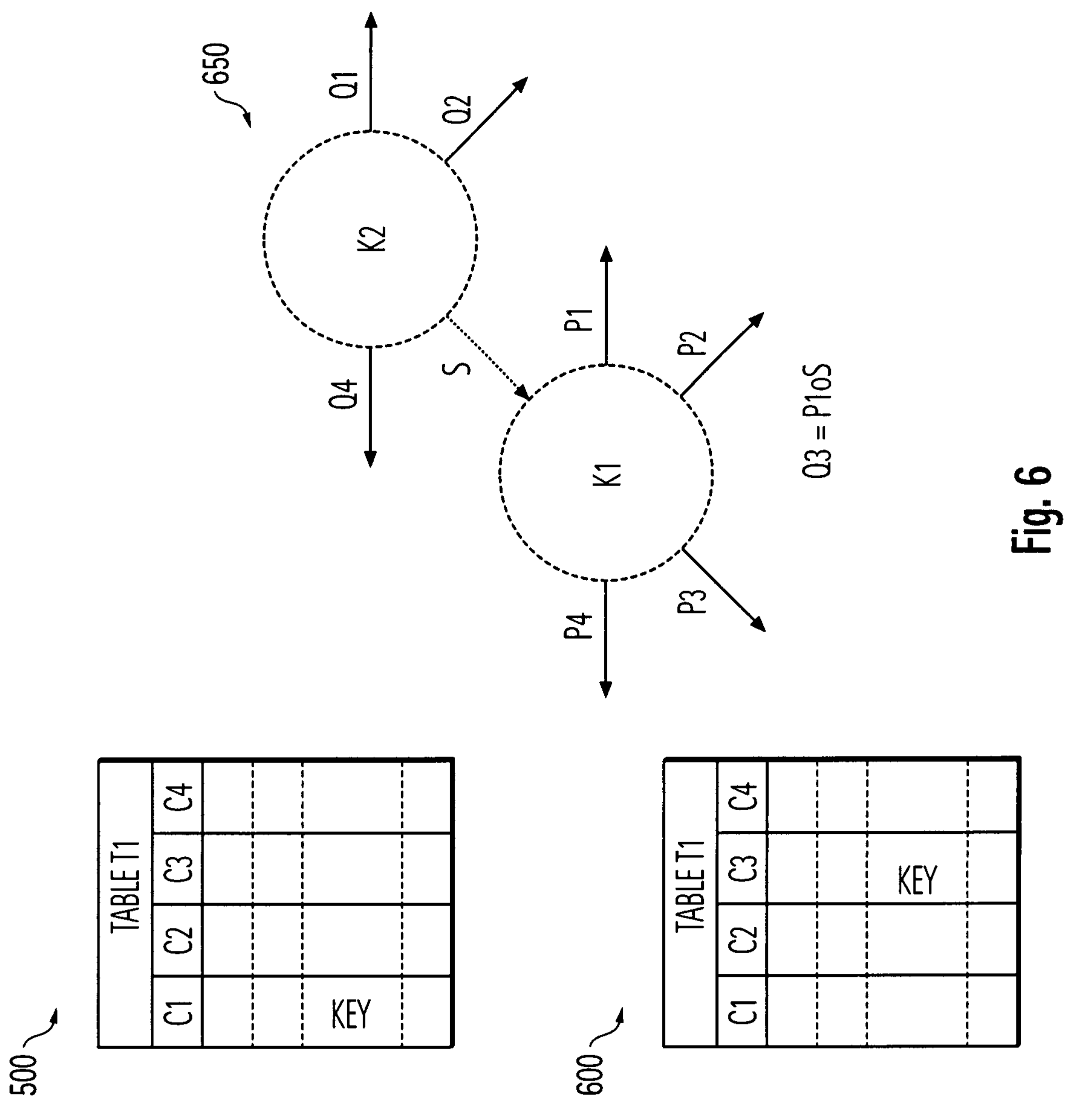
650
K2
Q1
Q2
Q4
S
K1
P1
P2
P3
P4
Q3 = P1oS
500
TABLE T1
C1
C2
C3
C4
KEY
600
TABLE T1
C1
C2
C3
C4
KEY

Fig. 6

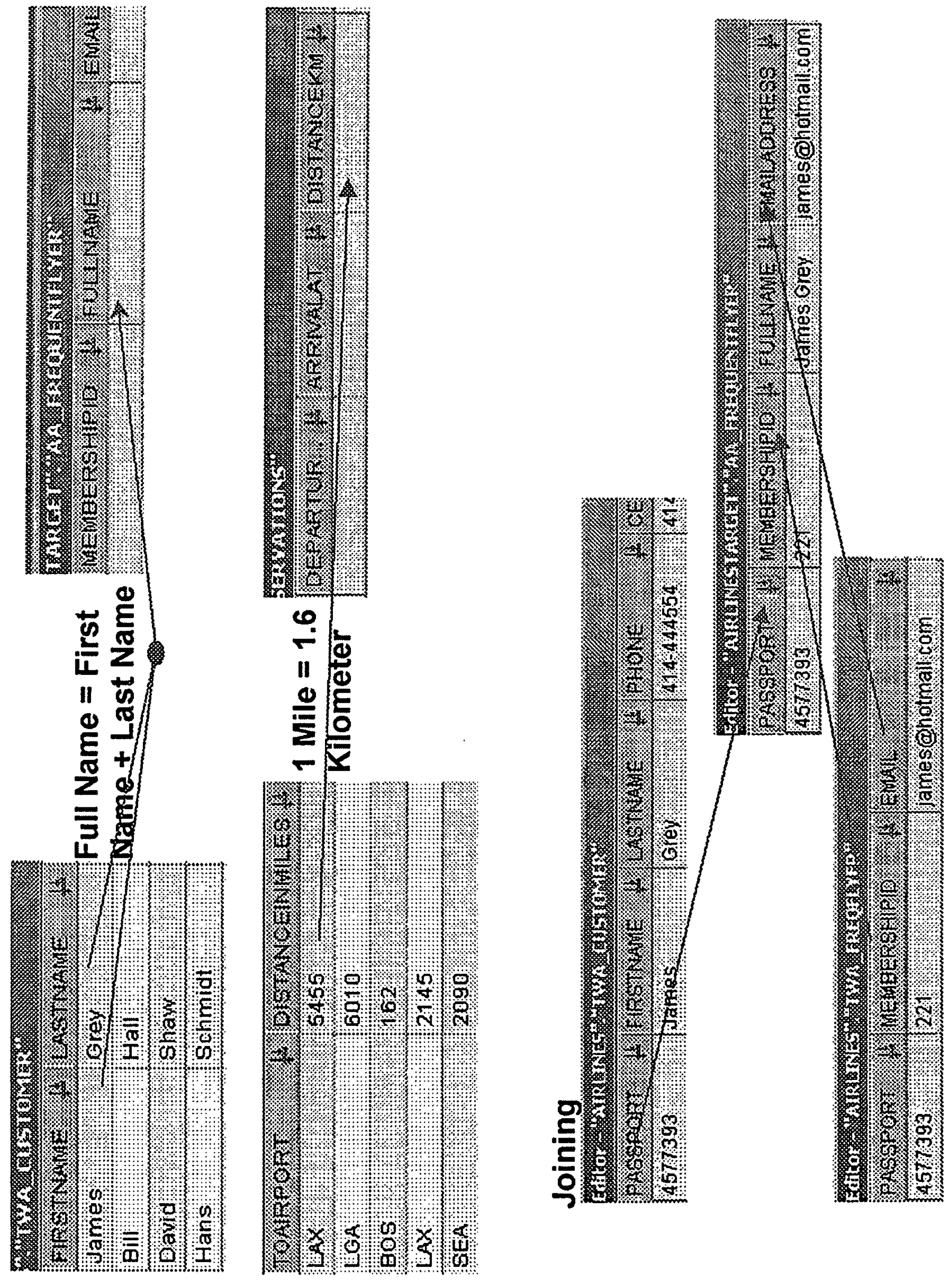
"TWA_CUSTOMER"
FIRSTNAME
LASTNAME
James
Grey
Bill
Hall
David
Shaw
Hans
Schmidt
TARGET" "AA_FREQUENTFLYER"
MEMBERSHIPID
FULLNAME
EMAIL
Full Name = First Name + Last Name
TOAIRPORT
DISTANCEINMILES
LAX
5455
LGA
6010
BOS
162
LAX
2145
SEA
2090
SERVATIONS"
DEPARTUR...
ARRIVALAT
DISTANCEKM
1 Mile = 1.6 Kilometer
Joining
Editor - "AIRLINES" "TWA_CUSTOMER"
PASSPORT
FIRSTNAME
LASTNAME
PHONE
4577393
James
Grey
414-444554
Editor - "AIRLINESTARGET" "AA_FREQUENTFLYER"
PASSPORT
MEMBERSHIPID
FULLNAME
EMAILADDRESS
4577393
221
James Grey
james@hotmail.com
Editor - "AIRLINES" "TWA_FREQFLYER"
PASSPORT
MEMBERSHIPID
EMAIL
4577393
221
james@hotmail.com

Fig. 7

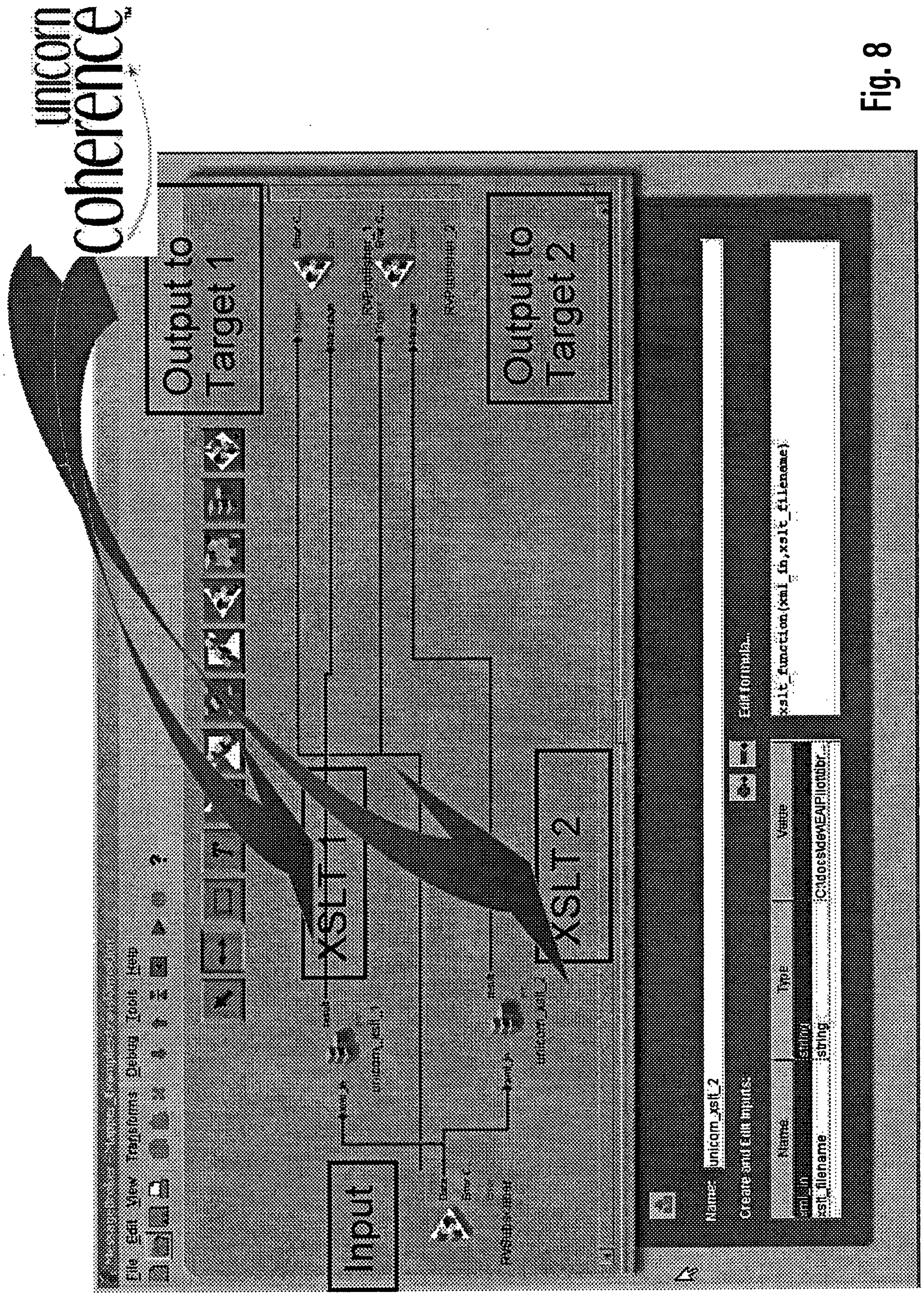
unicorn
coherence
File Edit View Transforms Debug Tools Help
Input
XSLT 1
XSLT 2
Output to Target 1
Output to Target 2
Name: unicorn_xslt_2
Create and Edit Inputs:
Name
Type
Value
xml_fn
string
xslt_filename
string
Edit formula...
xslt_function(xml_fn,xslt_filename)

Fig. 8

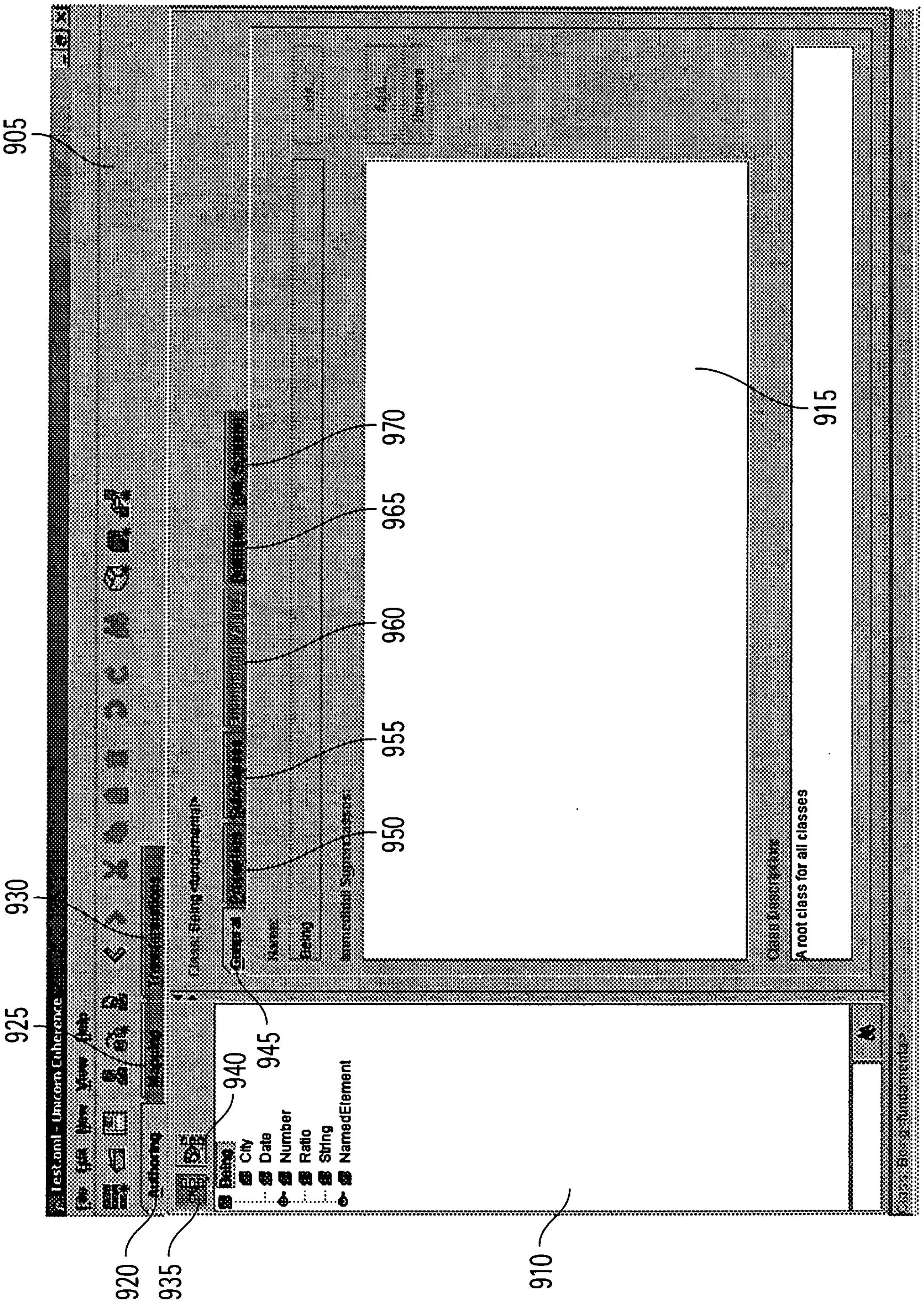
905
910
915
920
925
930
935
940
945
950
955
960
965
970
Being
City
Date
Number
Ratio
String
NamedElement
General
A root class for all classes

Fig. 9A

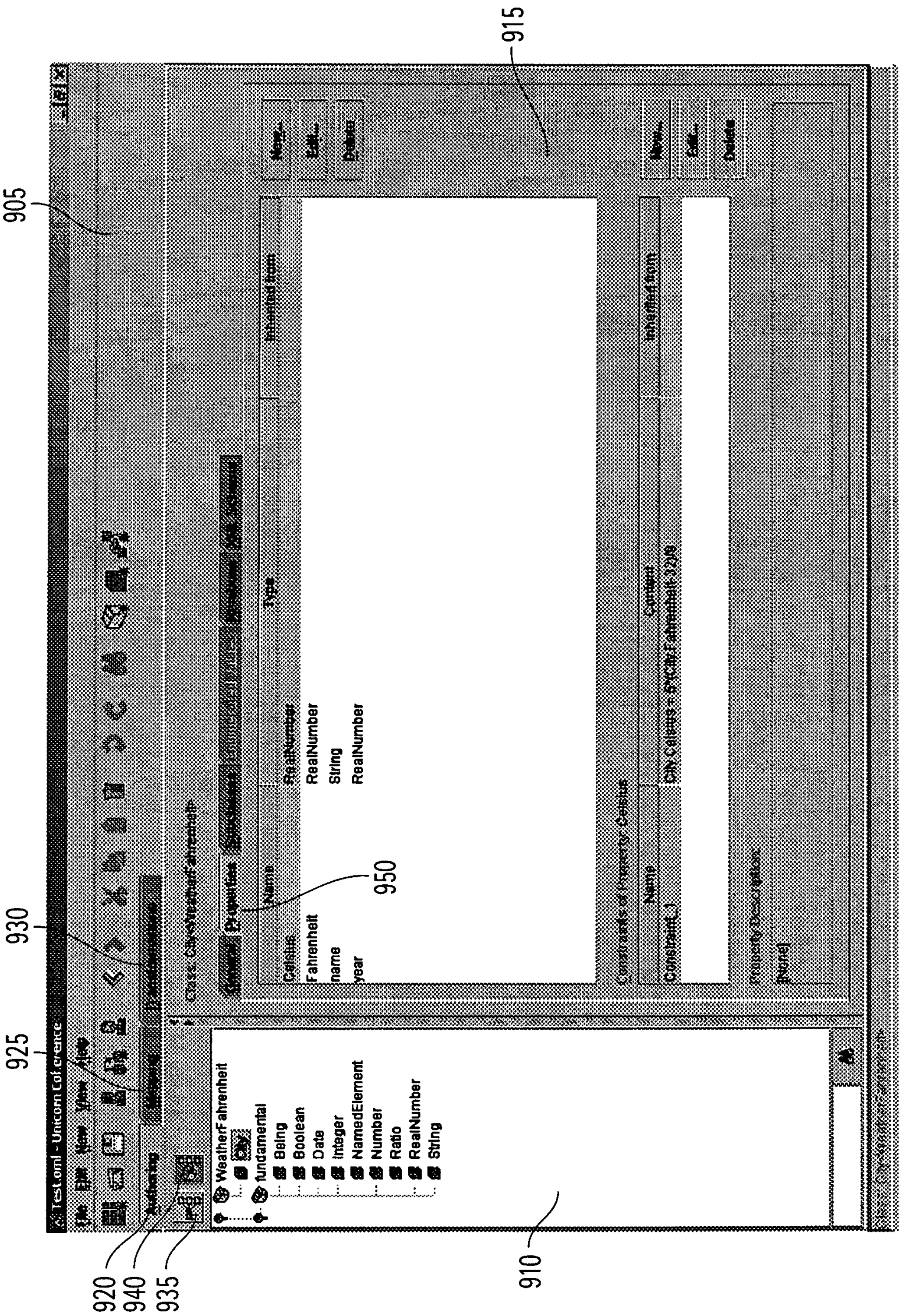
905
910
915
920
925
930
935
940
950
Class: City<WeatherFahrenheit>
Name
Type
Inherited from
Celsius
RealNumber
Fahrenheit
RealNumber
name
String
year
RealNumber
Constraints of Property: Celsius
Content
Constraint_1
City.Celsius = 5*(City.Fahrenheit-32)/9
Property Description:
[none]
New...
Edit...
Delete
WeatherFahrenheit
City
fundamental
Being
Boolean
Date
Integer
NamedElement
Number
Ratio
RealNumber
String

Fig. 9B

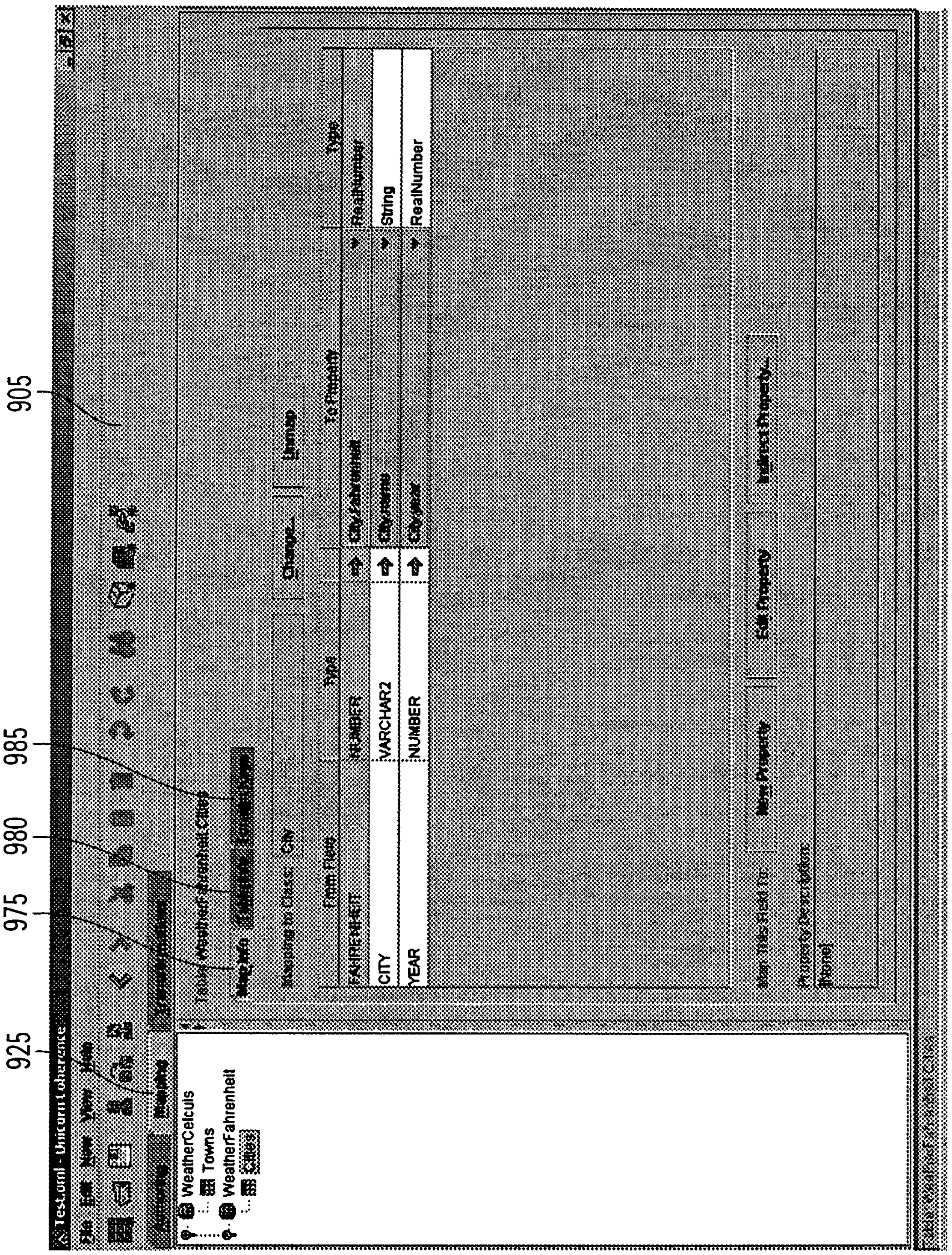
905
985
980
975
925
WeatherCelcuis
Towns
WeatherFahrenheit
Cities
Mapping to Class: City
From Field
Type
To Property
Type
FAHRENHEIT
NUMBER
RealNumber
CITY
VARCHAR2
String
YEAR
NUMBER
RealNumber
New Property
Edit Property
Indirect Property...
Property Description:
[None]

Fig. 9C

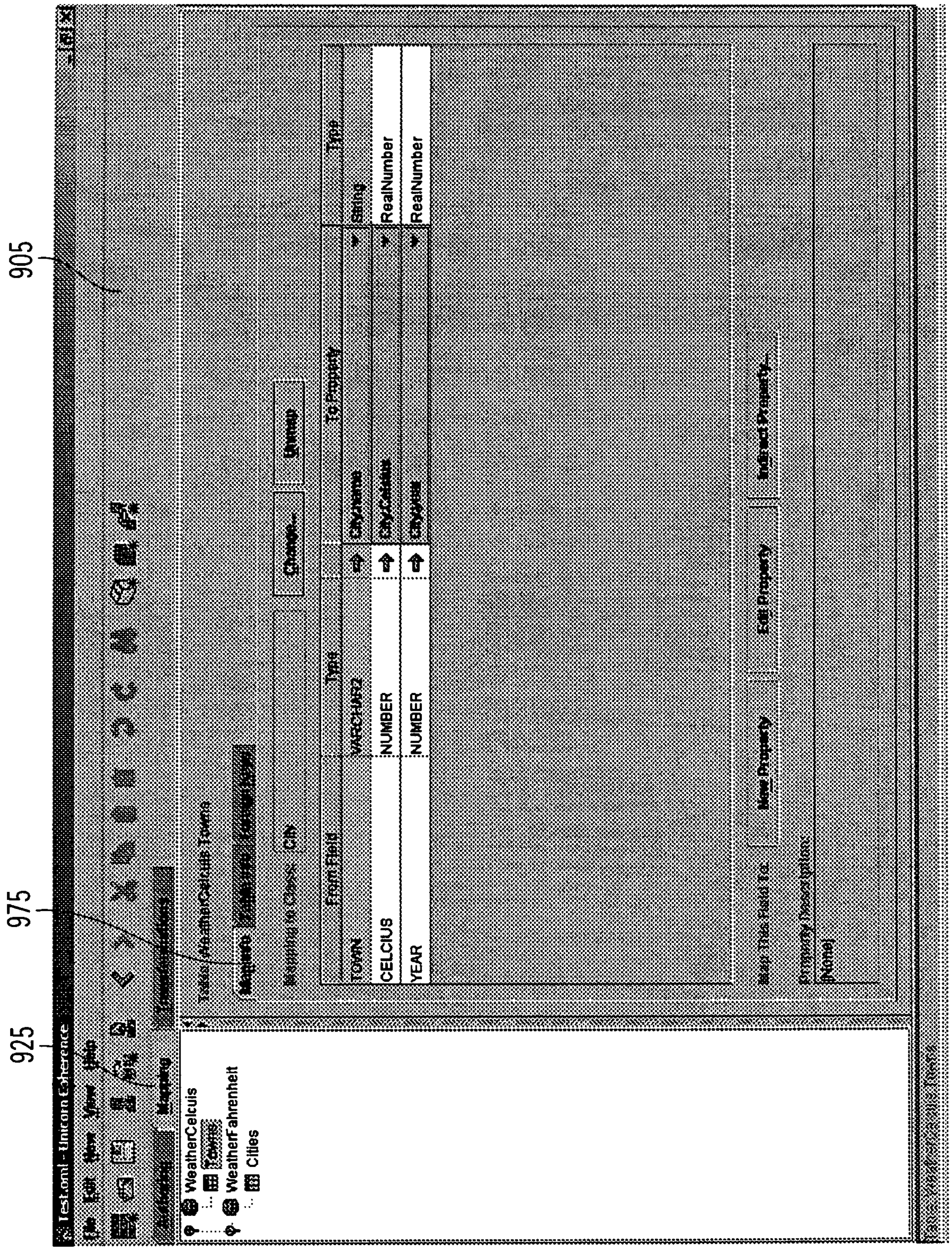


Fig. 9D

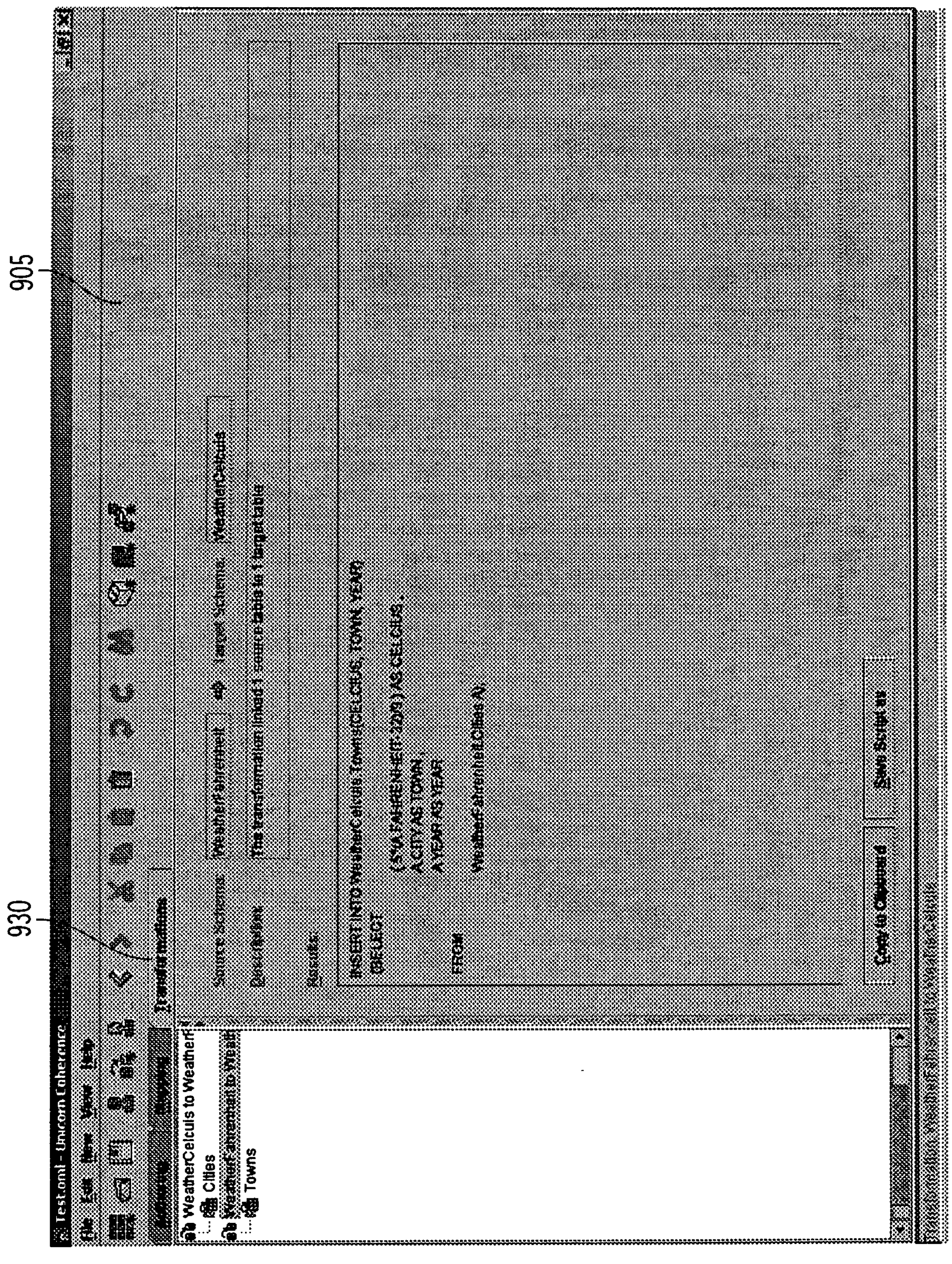


Fig. 9E

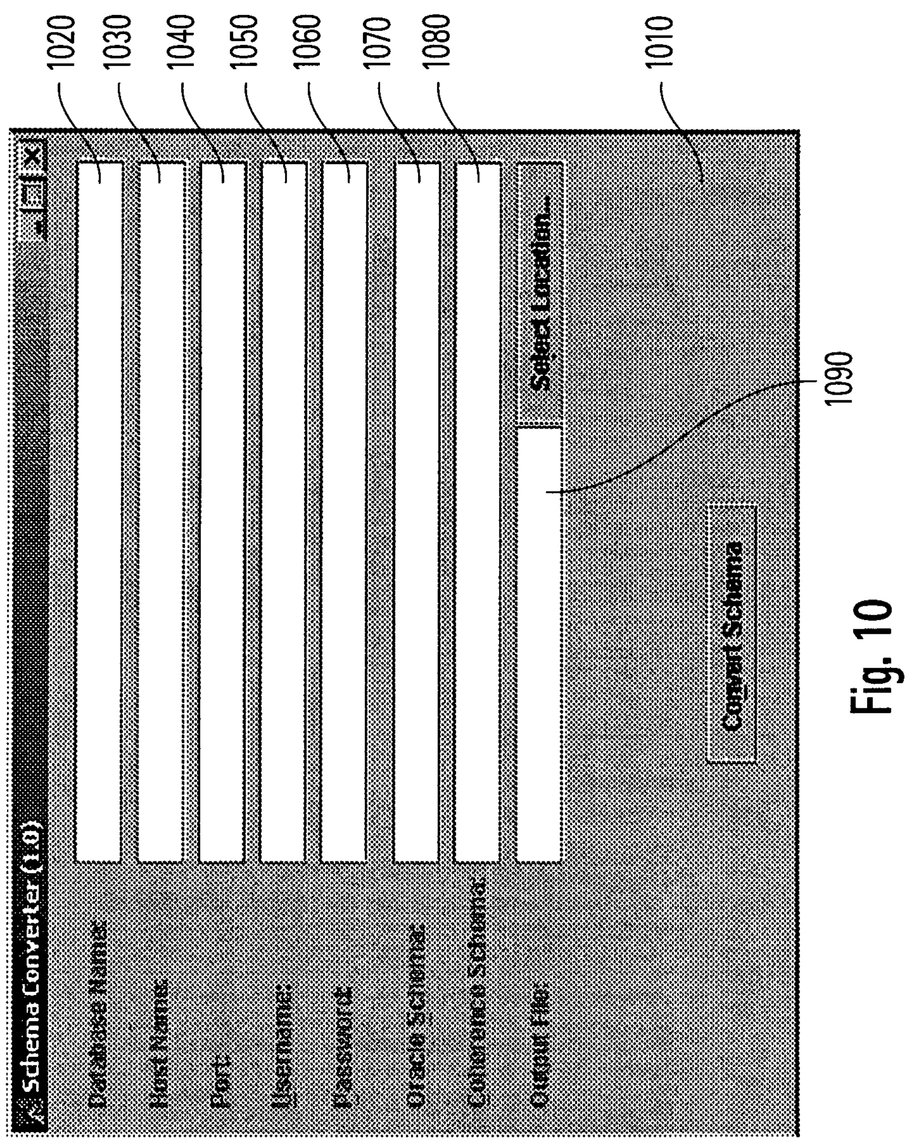
Schema Converter (1.0)
Database Name:
Host Name:
Port:
Username:
Password:
Oracle Schema:
Coherence Schema:
Output File:
Select Location...
Convert Schema
1010
1020
1030
1040
1050
1060
1070
1080
1090

Fig. 10

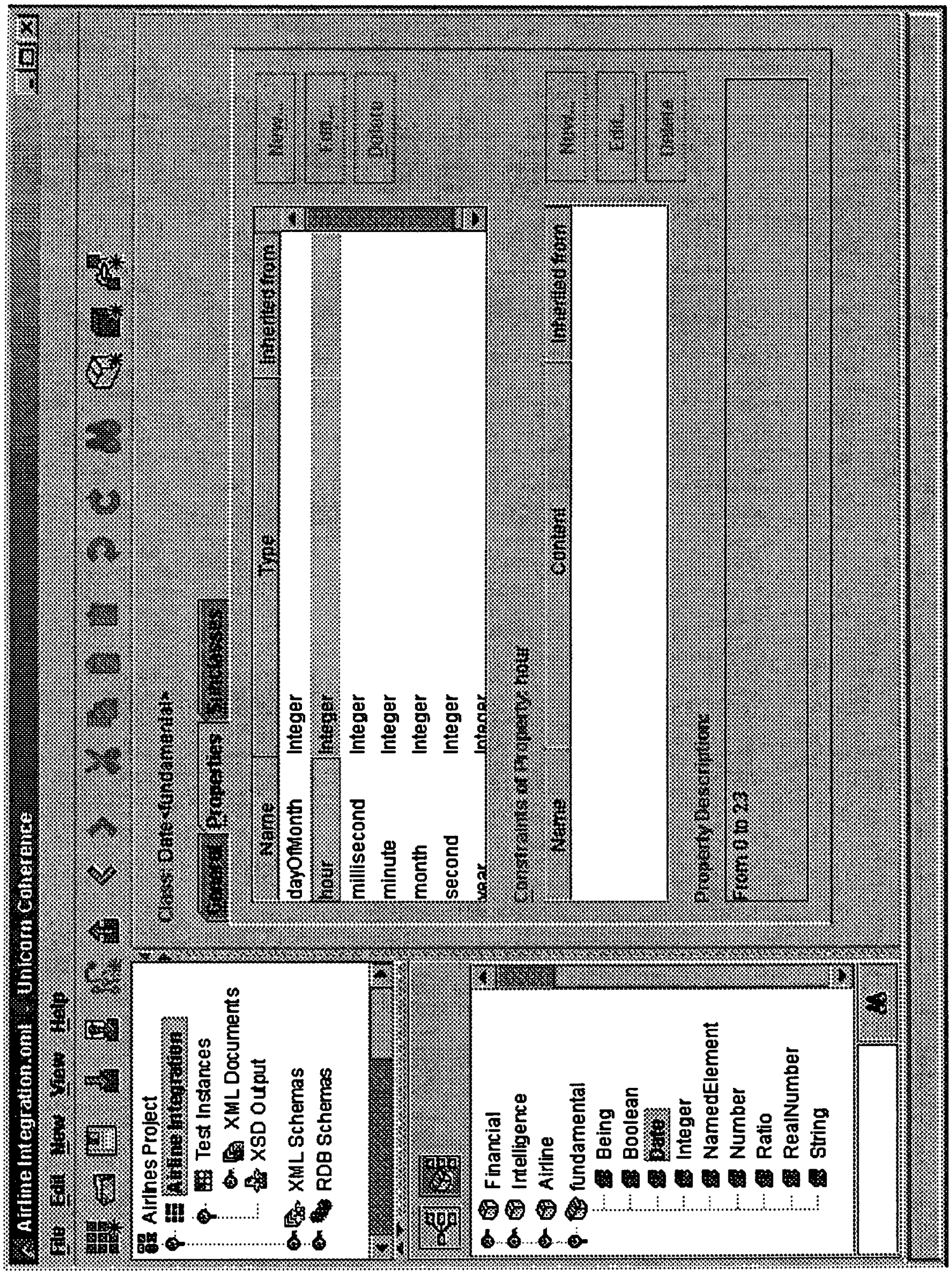

Airline Integration.oml - Unicorn Coherence
File Edit New View Help
Airlines Project
Airline Integration
Test Instances
XML Documents
XSD Output
XML Schemas
RDB Schemas
Financial
Intelligence
Airline
fundamental
Being
Boolean
Date
Integer
NamedElement
Number
Ratio
RealNumber
String
Class: Date<fundamental>
General
Properties
Subclasses
Name
Type
Inherited from
dayOfMonth
Integer
hour
Integer
millisecond
Integer
minute
Integer
month
Integer
second
Integer
New...
Edit...
Delete
Constraints of Property: hour
Name
Content
Inherited from
Property Description:
From 0 to 23


Fig. 11A

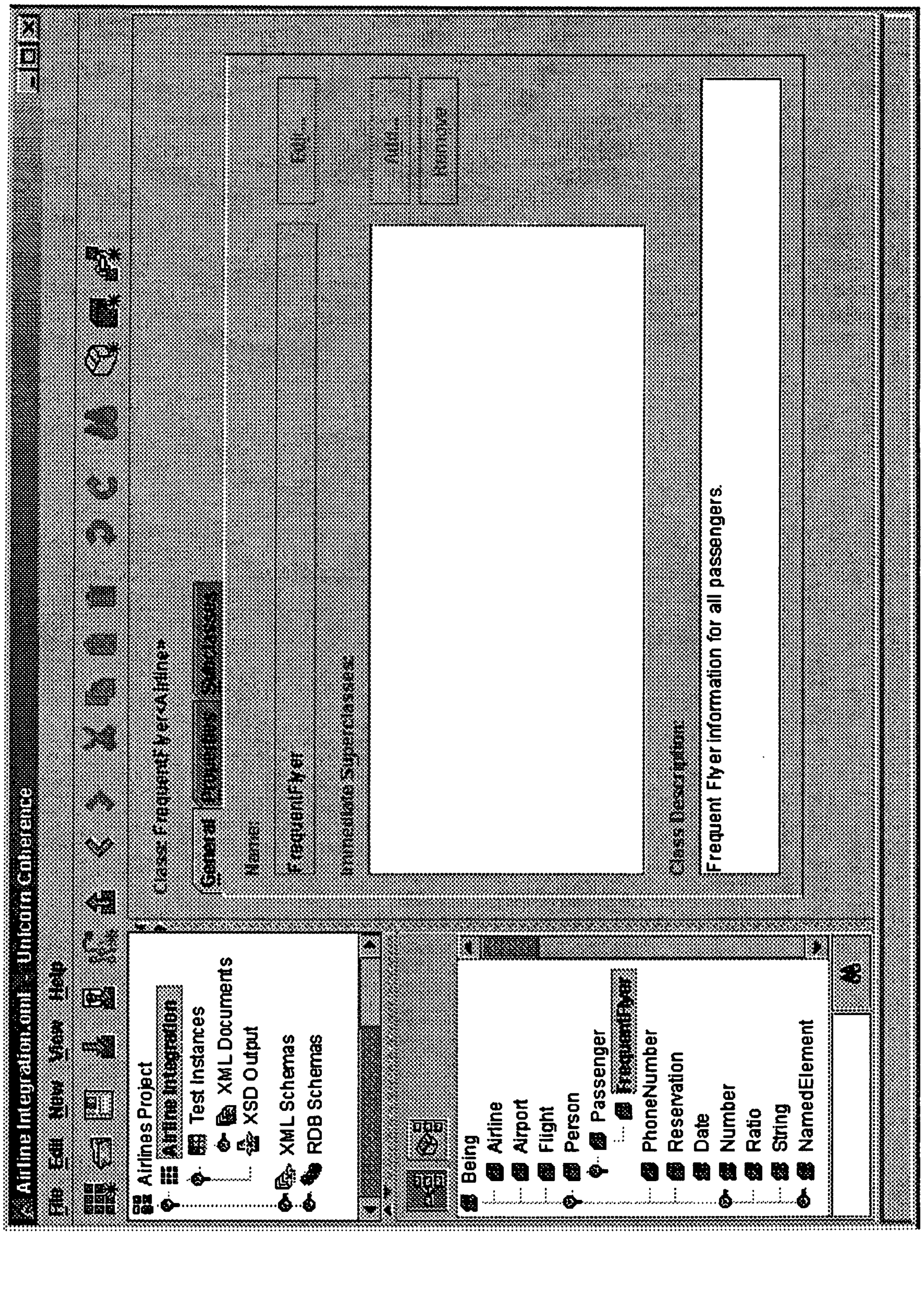
Airline Integration.omt - Unicorn Coherence
File
Edit
New
View
Help
Airlines Project
Airline Integration
Test Instances
XML Documents
XSD Output
XML Schemas
RDB Schemas
Being
Airline
Airport
Flight
Person
Passenger
FrequentFlyer
PhoneNumber
Reservation
Date
Number
Ratio
String
NamedElement
General
Properties
Subclasses
Name:
FrequentFlyer
Immediate Superclasses:
Class Description:
Frequent Flyer information for all passengers.
Edit...
Add...
Remove

Fig. 11B

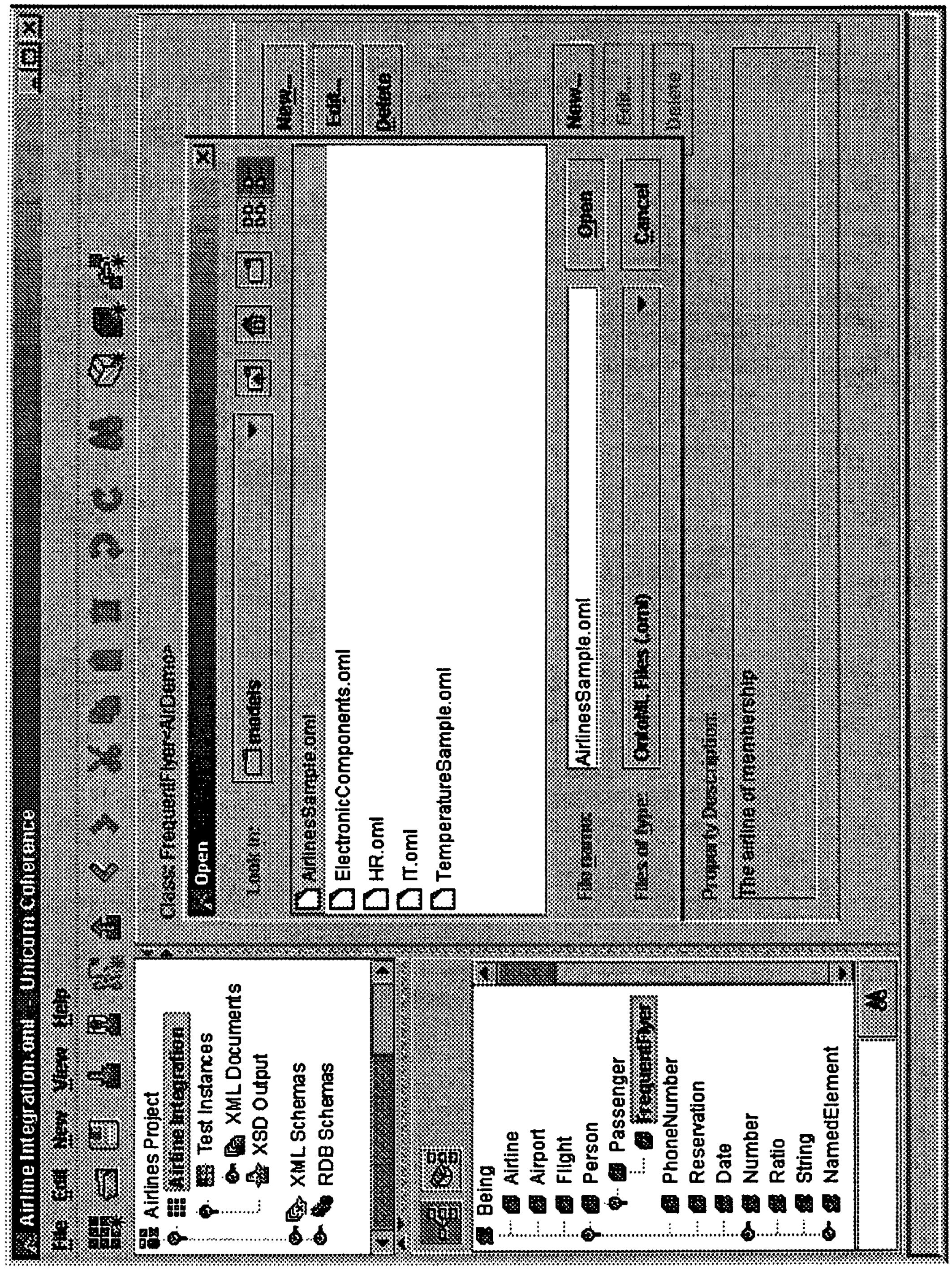
Airline Integration.oml - Unicorn Coherence
File Edit New View Help
Airlines Project
Airline Integration
Test Instances
XML Documents
XSD Output
XML Schemas
RDB Schemas
Being
Airline
Airport
Flight
Person
Passenger
FrequentFlyer
PhoneNumber
Reservation
Date
Number
Ratio
String
NamedElement
Class: FrequentFlyer<AirDemo>
Open
Look in:
models
AirlinesSample.oml
ElectronicComponents.oml
HR.oml
IT.oml
TemperatureSample.oml
File name:
AirlinesSample.oml
Files of type:
Ontology Files (.oml)
Open
Cancel
New...
Edit...
Delete
New...
Edit...
Delete
Property Description:
The airline of membership

Fig. 11C

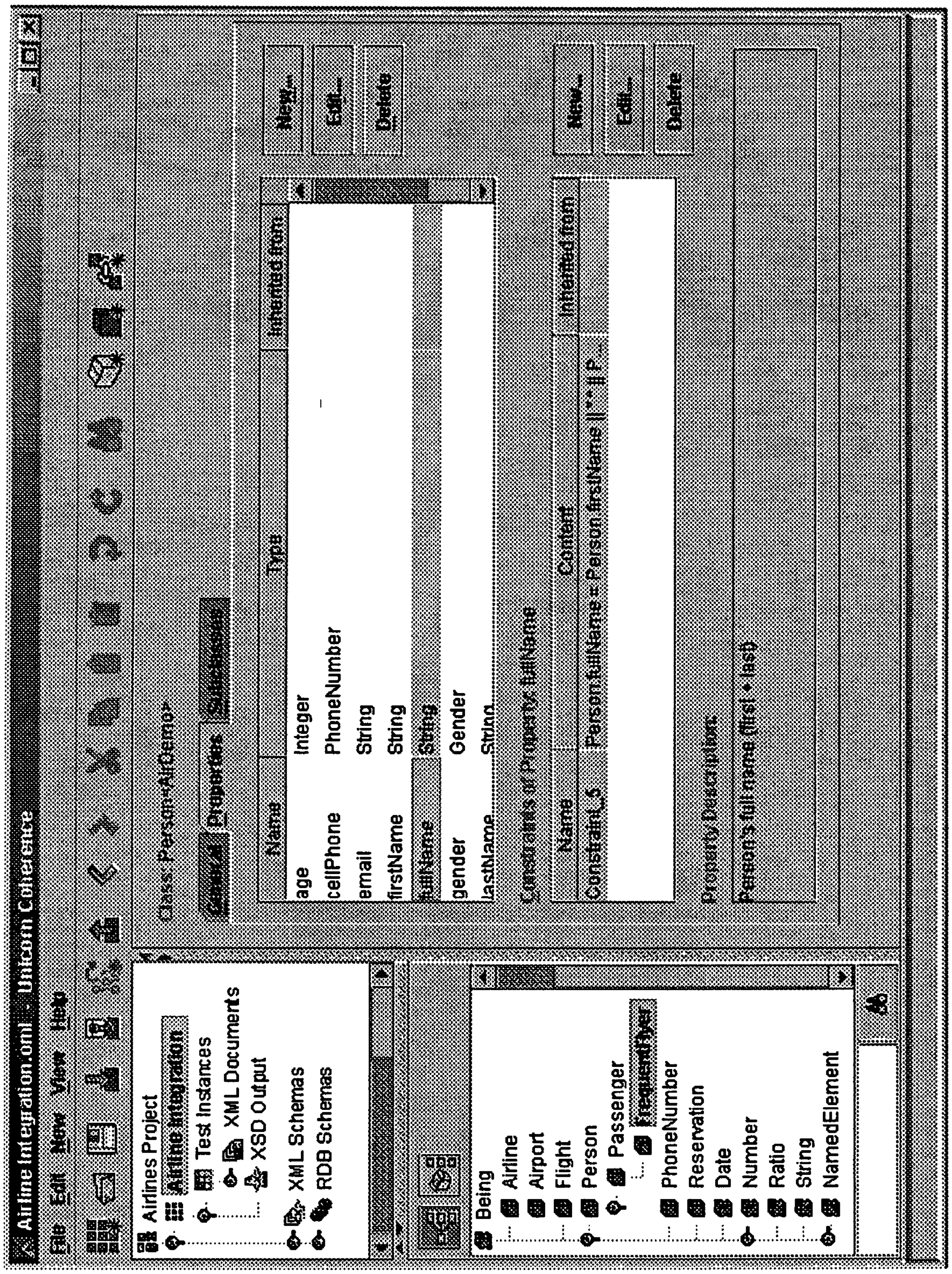
Airline Integration.oml - Unicorn Coherence
File Edit New View Help
Airlines Project
Airline Integration
Test Instances
XML Documents
XSD Output
XML Schemas
RDB Schemas
Being
Airline
Airport
Flight
Person
Passenger
FrequentFlyer
PhoneNumber
Reservation
Date
Number
Ratio
String
NamedElement
Class: Person<AirDemo>
General
Properties
Subclasses
Name
Type
Inherited from
age
Integer
cellPhone
PhoneNumber
email
String
firstName
String
fullName
String
gender
Gender
lastName
String
New...
Edit...
Delete
Constraints of Property: fullName
Name
Content
Inherited from
Constraint_5
Person.fullName = Person.firstName || " " || P...
Property Description:
Person's full name (first + last)

Fig. 11D

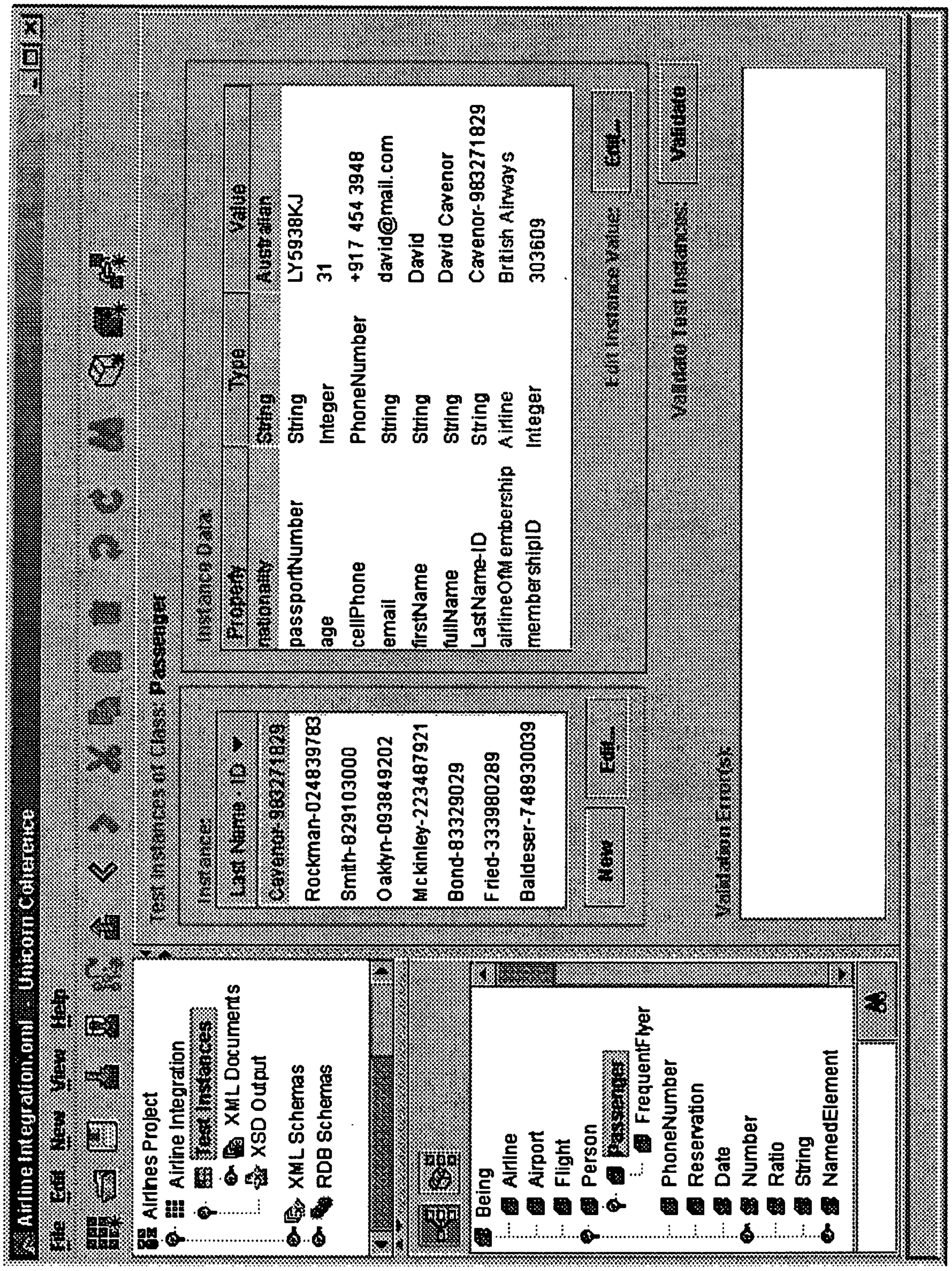

Airline Integration.onl - Unicorn Coherence
File Edit New View Help
Airlines Project
Airline Integration
Test Instances
XML Documents
XSD Output
XML Schemas
RDB Schemas
Being
Airline
Airport
Flight
Person
Passenger
FrequentFlyer
PhoneNumber
Reservation
Date
Number
Ratio
String
NamedElement
Test Instances of Class: Passenger
Instance:
Last Name - ID
Cavenor-983271829
Rockman-024839783
Smith-829103000
Oaklyn-093849202
Mckinley-223487921
Bond-83329029
Fried-333980289
Baldeser-748930039
New
Edit...
Instance Data:
Property
Type
Value
nationality
String
Australian
passportNumber
String
LY5938KJ
age
Integer
31
cellPhone
PhoneNumber
+917 454 3948
email
String
david@mail.com
firstName
String
David
fullName
String
David Cavenor
LastName-ID
String
Cavenor-983271829
airlineOfMembership
Airline
British Airways
membershipID
Integer
303609
Edit Instance Value:
Edit...
Validate Test Instances:
Validate
Validation Error(s):


Fig. 11E

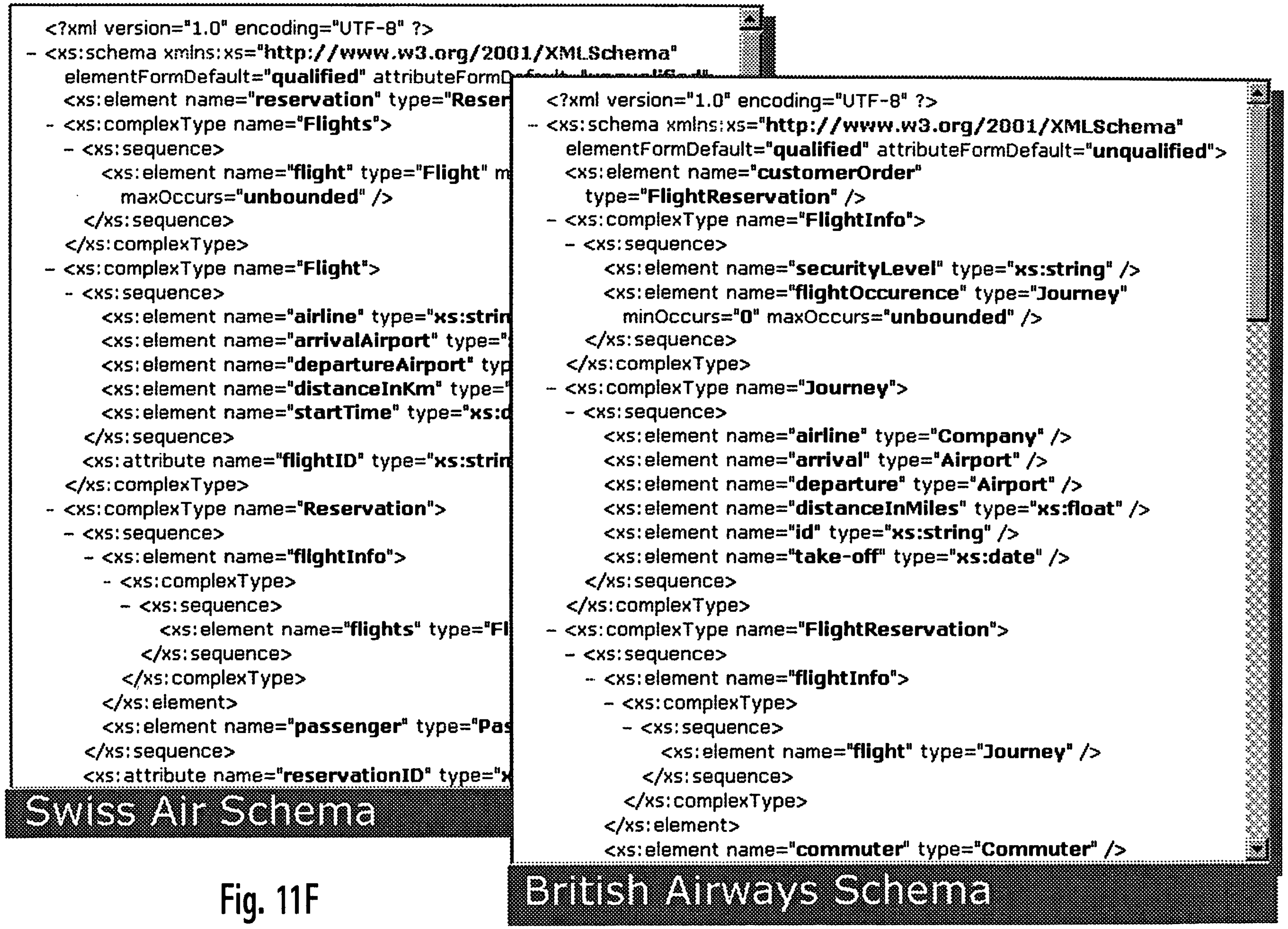
<?xml version="1.0" encoding="UTF-8" ?>
- <xs:schema xmlns:xs="http://www.w3.org/2001/XMLSchema"
elementFormDefault="qualified" attributeFormD
<xs:element name="reservation" type="Reser
- <xs:complexType name="Flights">
- <xs:sequence>
<xs:element name="flight" type="Flight" m
maxOccurs="unbounded" />
</xs:sequence>
</xs:complexType>
- <xs:complexType name="Flight">
- <xs:sequence>
<xs:element name="airline" type="xs:strin
<xs:element name="arrivalAirport" type="
<xs:element name="departureAirport" typ
<xs:element name="distanceInKm" type="
<xs:element name="startTime" type="xs:d
</xs:sequence>
<xs:attribute name="flightID" type="xs:strin
</xs:complexType>
- <xs:complexType name="Reservation">
- <xs:sequence>
- <xs:element name="flightInfo">
- <xs:complexType>
- <xs:sequence>
<xs:element name="flights" type="Fl
</xs:sequence>
</xs:complexType>
</xs:element>
<xs:element name="passenger" type="Pas
</xs:sequence>
<xs:attribute name="reservationID" type="x
Swiss Air Schema
<?xml version="1.0" encoding="UTF-8" ?>
- <xs:schema xmlns:xs="http://www.w3.org/2001/XMLSchema"
elementFormDefault="qualified" attributeFormDefault="unqualified">
<xs:element name="customerOrder"
type="FlightReservation" />
- <xs:complexType name="FlightInfo">
- <xs:sequence>
<xs:element name="securityLevel" type="xs:string" />
<xs:element name="flightOccurence" type="Journey"
minOccurs="0" maxOccurs="unbounded" />
</xs:sequence>
</xs:complexType>
- <xs:complexType name="Journey">
- <xs:sequence>
<xs:element name="airline" type="Company" />
<xs:element name="arrival" type="Airport" />
<xs:element name="departure" type="Airport" />
<xs:element name="distanceInMiles" type="xs:float" />
<xs:element name="id" type="xs:string" />
<xs:element name="take-off" type="xs:date" />
</xs:sequence>
</xs:complexType>
- <xs:complexType name="FlightReservation">
- <xs:sequence>
- <xs:element name="flightInfo">
- <xs:complexType>
- <xs:sequence>
<xs:element name="flight" type="Journey" />
</xs:sequence>
</xs:complexType>
</xs:element>
<xs:element name="commuter" type="Commuter" />
British Airways Schema

Fig. 11F

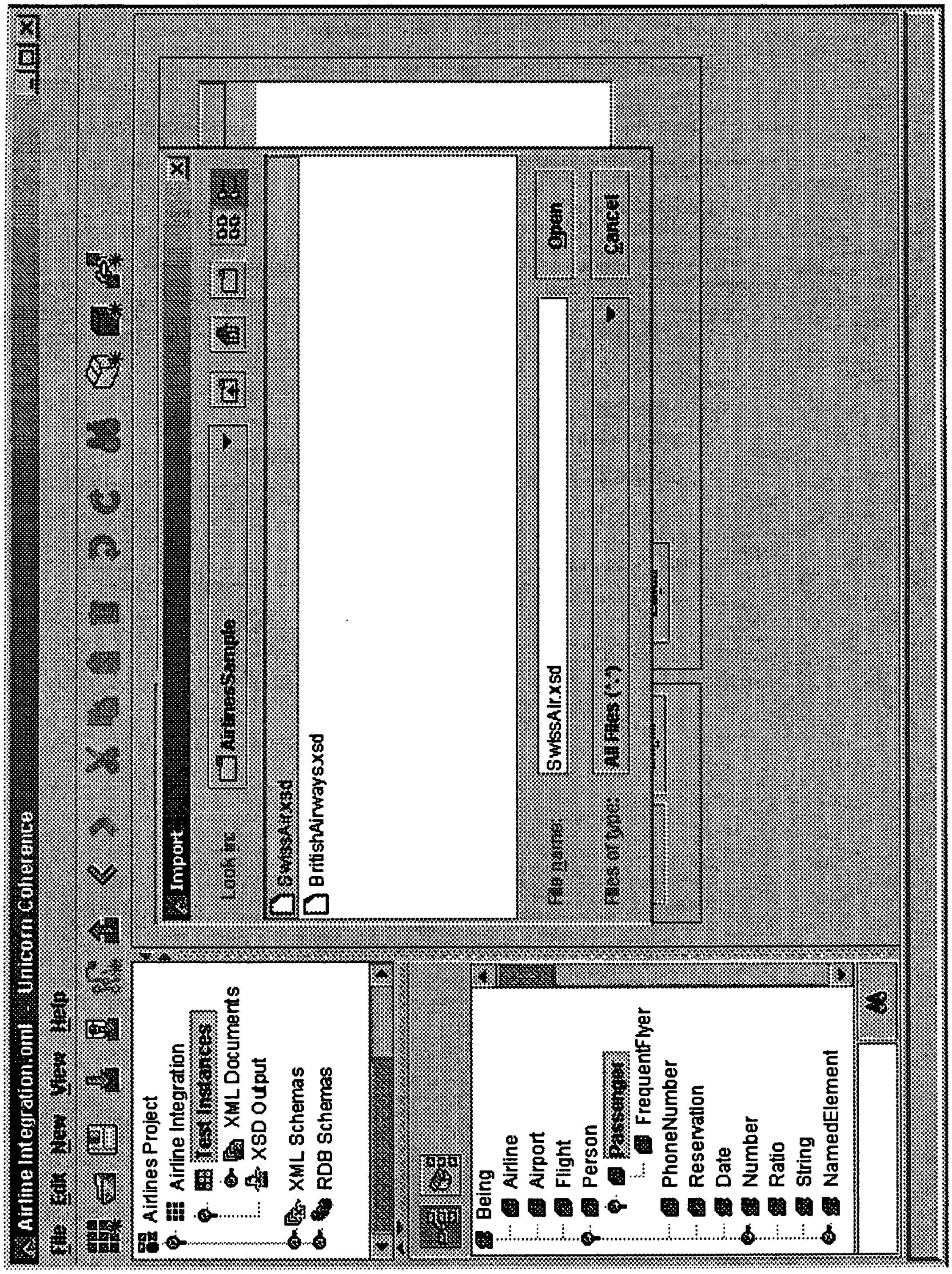
Airline Integration.oml - Unicorn Coherence
File
Edit
New
View
Help
Airlines Project
Airline Integration
Test Instances
XML Documents
XSD Output
XML Schemas
RDB Schemas
Being
Airline
Airport
Flight
Person
Passenger
FrequentFlyer
PhoneNumber
Reservation
Date
Number
Ratio
String
NamedElement
Import
Look in:
AirlinesSample
SwissAir.xsd
BritishAirways.xsd
File name:
SwissAir.xsd
Files of type:
All Files (*.*)
Open
Cancel

Fig. 11G

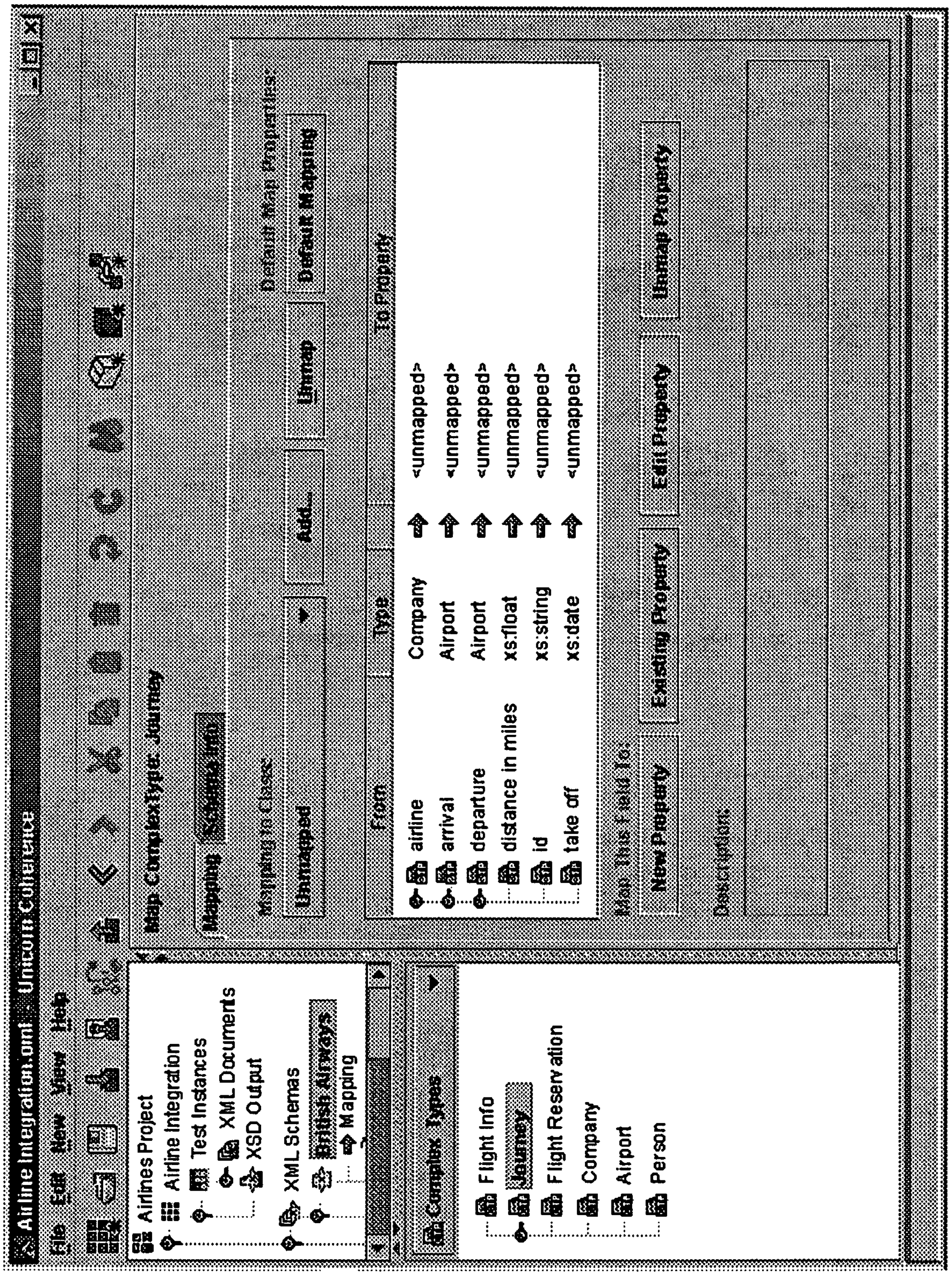
Airline Integration.onl - Unicorn Coherence
File Edit New View Help
Airlines Project
Airline Integration
Test Instances
XML Documents
XSD Output
XML Schemas
British Airways
Mapping
Complex Types
Flight Info
Journey
Flight Reservation
Company
Airport
Person
Map ComplexType: Journey
Mapping
Schema Info
Mapping to Class:
Unmapped
Add...
Unmap
Default Map Properties:
Default Mapping
From
Type
To Property
airline
Company
<unmapped>
arrival
Airport
<unmapped>
departure
Airport
<unmapped>
distance in miles
xs:float
<unmapped>
id
xs:string
<unmapped>
take off
xs:date
<unmapped>
Map This Field To:
New Property
Existing Property
Edit Property
Unmap Property
Description:

Fig. 11H

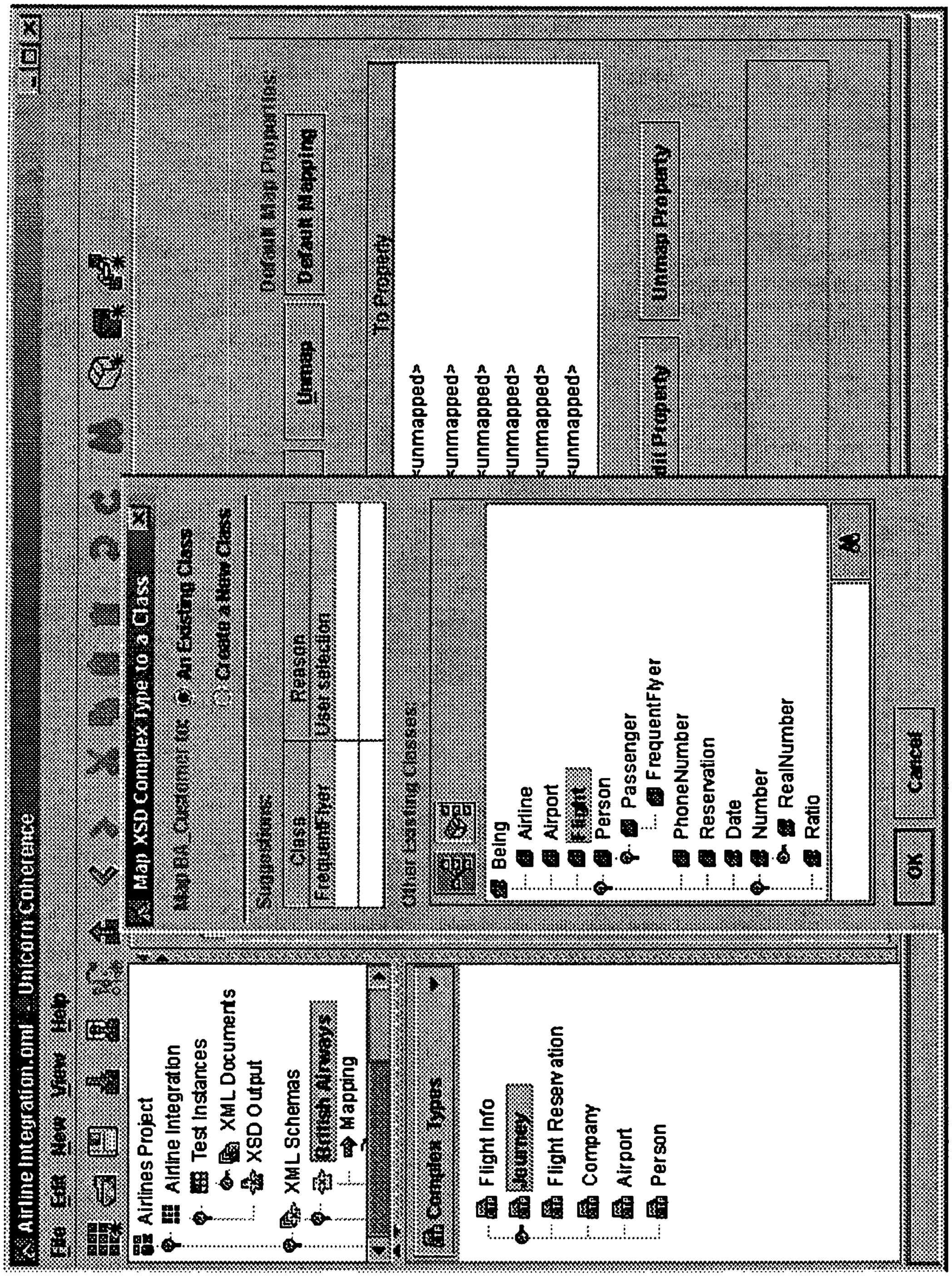
Airline Integration.oml - Unicorn Coherence
File
Edit
New
View
Help
Airlines Project
Airline Integration
Test Instances
XML Documents
XSD Output
XML Schemas
British Airways
Mapping
Complex Types
Flight Info
Journey
Flight Reservation
Company
Airport
Person
Map XSD Complex Type to a Class
Map BA_Customer to:
An Existing Class
Create a New Class
Suggestions:
Class
Reason
FrequentFlyer
User selection
Other Existing Classes:
Being
Airline
Airport
Flight
Person
Passenger
FrequentFlyer
PhoneNumber
Reservation
Date
Number
RealNumber
Ratio
OK
Cancel
<unmapped>
<unmapped>
<unmapped>
<unmapped>
<unmapped>
<unmapped>
To Property
Unmap
Default Map Properties:
Default Mapping
Unmap Property

Fig. 11I

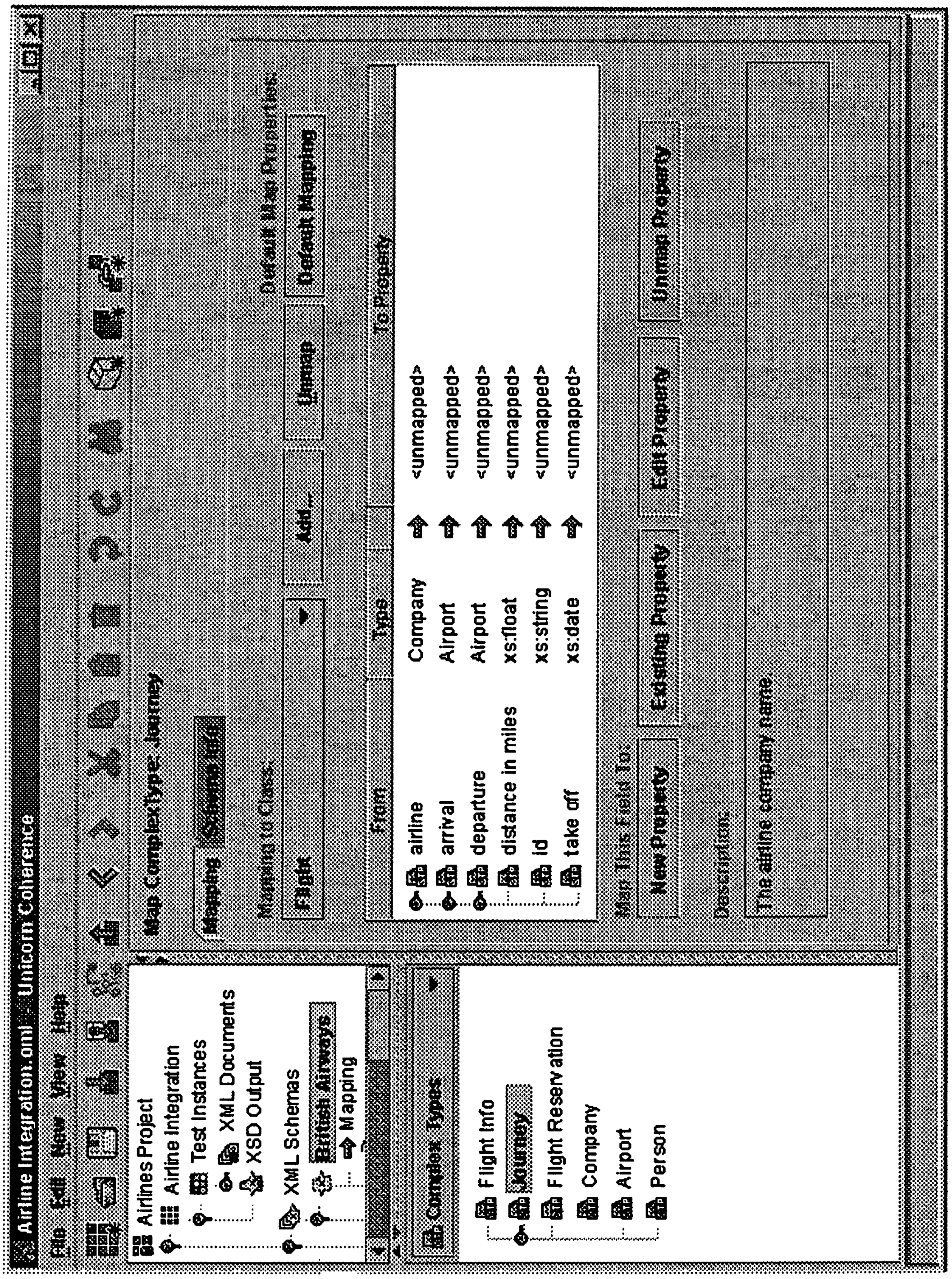
Airline Integration.onl - Unicorn Coherence
File
Edit
New
View
Help
Airlines Project
Airline Integration
Test Instances
XML Documents
XSD Output
XML Schemas
British Airways
Mapping
Complex Types
Flight Info
Journey
Flight Reservation
Company
Airport
Person
Map ComplexType: Journey
Mapping
Schema Info
Mapping to Class:
Flight
Add...
Unmap
Default Map Properties:
Default Mapping
From
Type
To Property
airline
Company
<unmapped>
arrival
Airport
<unmapped>
departure
Airport
<unmapped>
distance in miles
xs:float
<unmapped>
id
xs:string
<unmapped>
take off
xs:date
<unmapped>
Map This Field To:
New Property
Existing Property
Edit Property
Unmap Property
Description:
The airline company name.

Fig. 11J

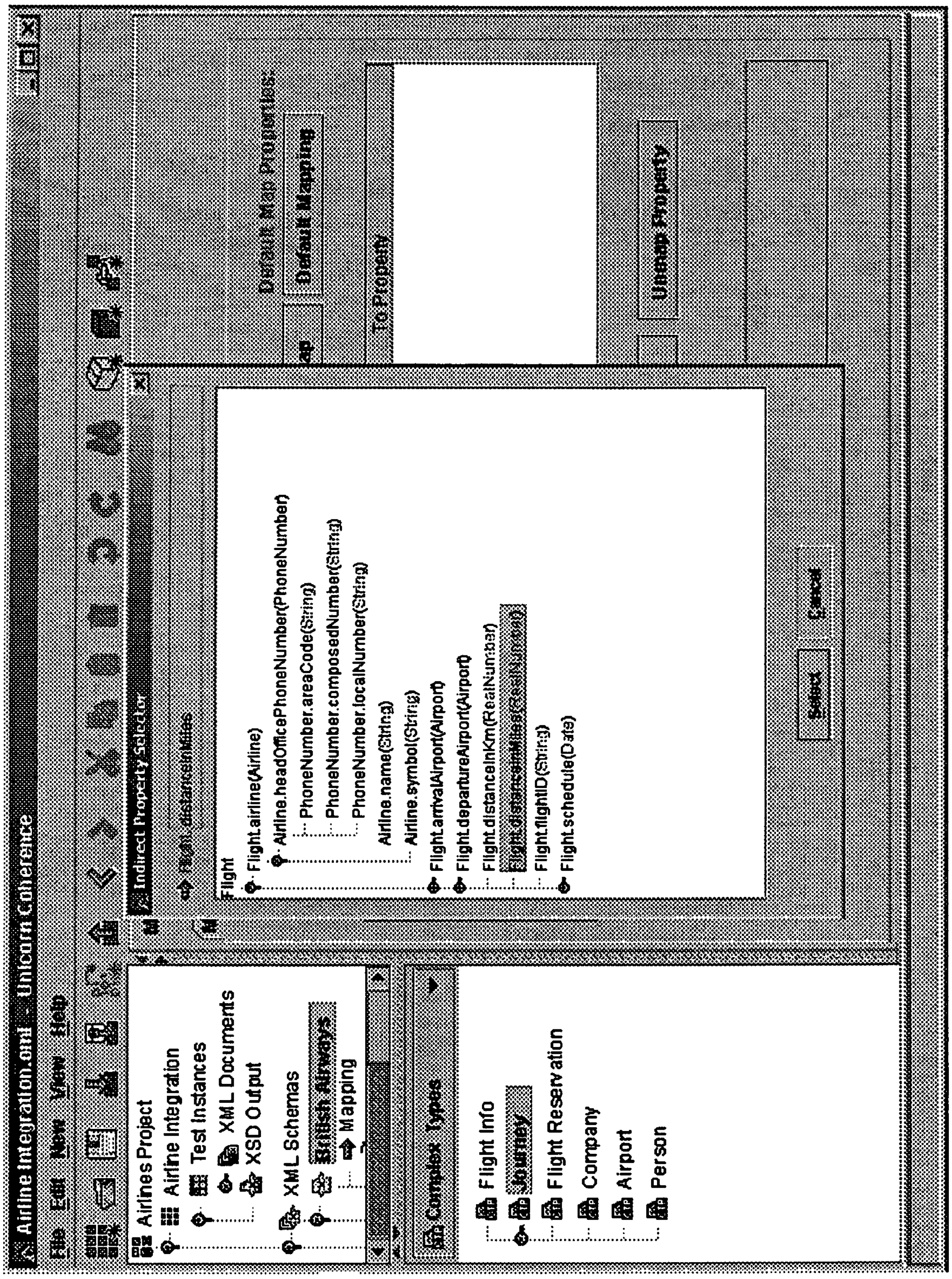
Airline Integration.cml - Unicorn Coherence
File Edit New View Help
Airlines Project
Airline Integration
Test Instances
XML Documents
XSD Output
XML Schemas
British Airways
Mapping
Complex Types
Flight Info
Journey
Flight Reservation
Company
Airport
Person
Indirect Property Selector
Flight.distanceInMiles
Flight
Flight.airline(Airline)
Airline.headOfficePhoneNumber(PhoneNumber)
PhoneNumber.areaCode(String)
PhoneNumber.composedNumber(String)
PhoneNumber.localNumber(String)
Airline.name(String)
Airline.symbol(String)
Flight.arrivalAirport(Airport)
Flight.departureAirport(Airport)
Flight.distanceInKm(RealNumber)
Flight.distanceInMiles(RealNumber)
Flight.flightID(String)
Flight.schedule(Date)
Select
Cancel
Default Map Properties:
Default Mapping
To Property
Unmap Property

Fig. 11K

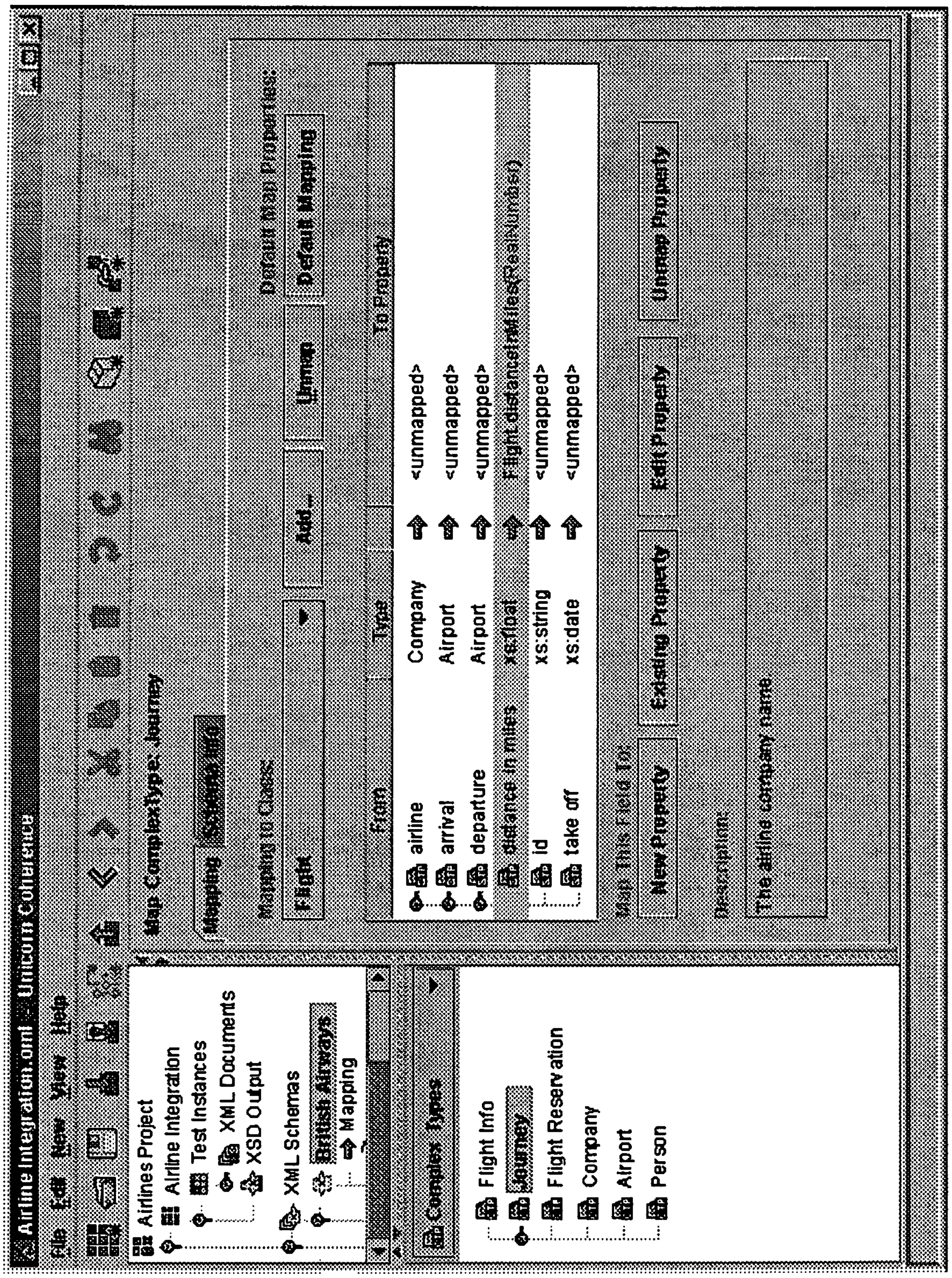
Airline Integration.oml - Unicorn Coherence
File Edit New View Help
Airlines Project
Airline Integration
Test Instances
XML Documents
XSD Output
XML Schemas
British Airways
Mapping
Complex Types
Flight Info
Journey
Flight Reservation
Company
Airport
Person
Map ComplexType: Journey
Mapping
Schema Info
Mapping to Class:
Flight
Add...
Unmap
Default Map Properties:
Default Mapping
From
Type
To Property
airline Company <unmapped>
arrival Airport <unmapped>
departure Airport <unmapped>
distance in miles xs:float Flight.distanceInMiles(RealNumber)
id xs:string <unmapped>
take off xs:date <unmapped>
Map This Field To:
New Property
Existing Property
Edit Property
Unmap Property
Description:
The airline company name.

Fig. 11L

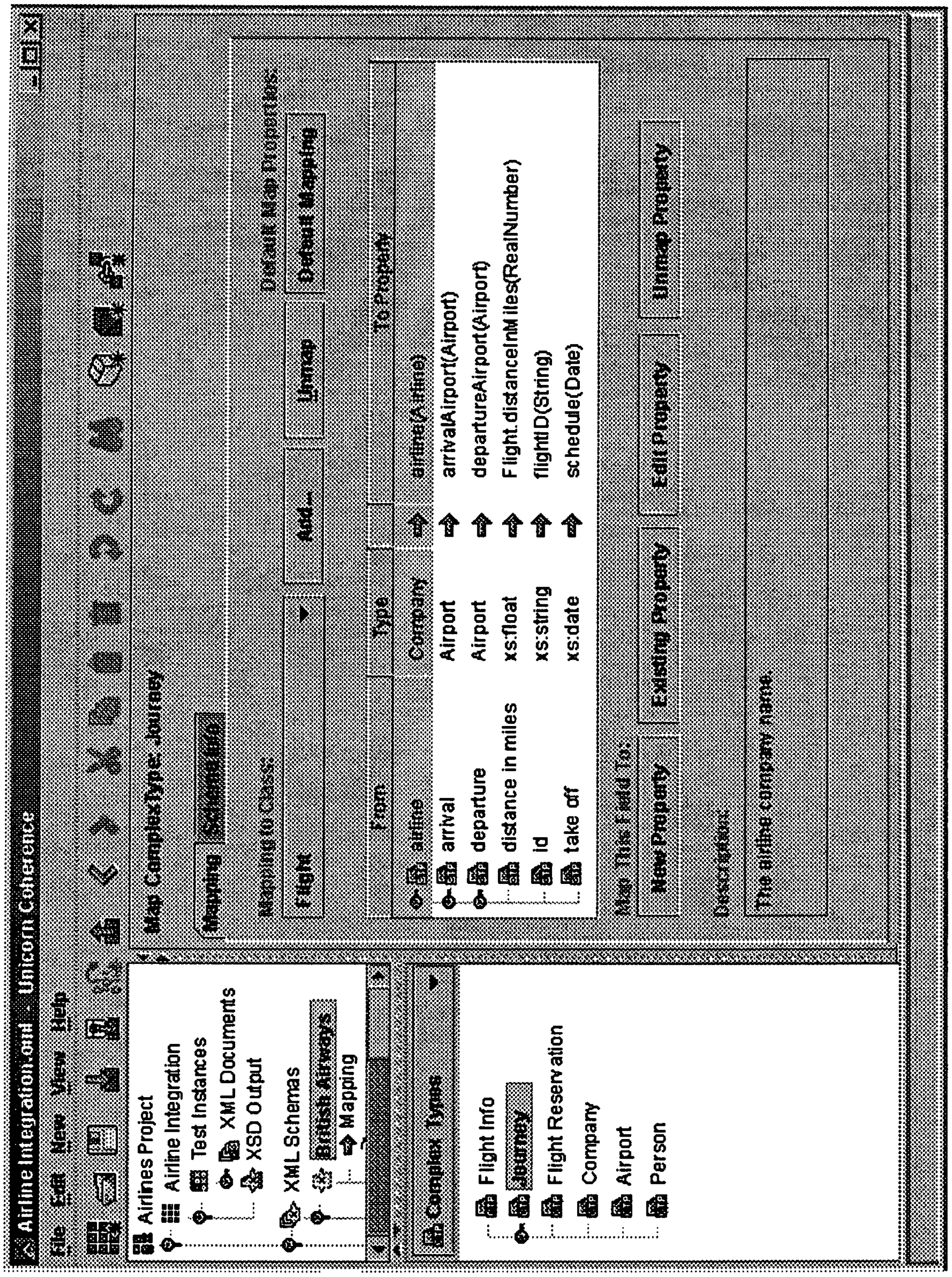
Airline Integration.oml - Unicorn Coherence
File
Edit
New
View
Help
Airlines Project
Airline Integration
Test Instances
XML Documents
XSD Output
XML Schemas
British Airways
Mapping
Complex Types
Flight Info
Journey
Flight Reservation
Company
Airport
Person
Map ComplexType: Journey
Mapping
Schema Info
Mapping to Class:
Flight
Add...
Unmap
Default Map Properties:
Default Mapping
From
Type
To Property
airline
Company
airline(Airline)
arrival
Airport
arrivalAirport(Airport)
departure
Airport
departureAirport(Airport)
distance in miles
xs:float
Flight.distanceInMiles(RealNumber)
id
xs:string
flightID(String)
take off
xs:date
schedule(Date)
Map This Field To:
New Property
Existing Property
Edit Property
Unmap Property
Description:
The airline company name.

Fig. 11M

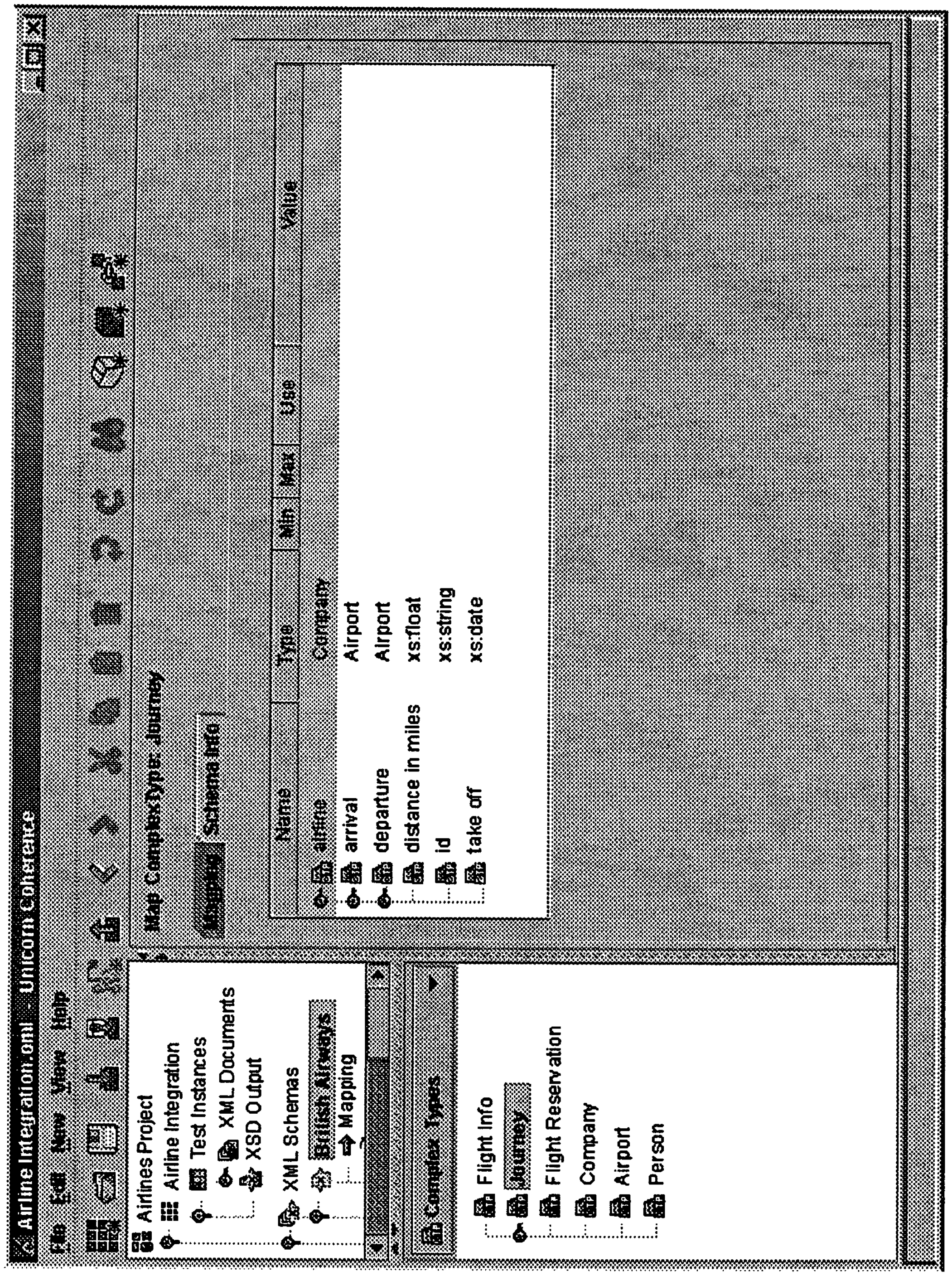

Airline Integration.oml - Unicorn Coherence
File Edit New View Help
Airlines Project
Airline Integration
Test Instances
XML Documents
XSD Output
XML Schemas
British Airways
Mapping
Complex Types
Flight Info
Journey
Flight Reservation
Company
Airport
Person
Map ComplexType: Journey
Mapping
Schema Info
Name
Type
Min
Max
Use
Value
airline
Company
arrival
Airport
departure
Airport
distance in miles
xs:float
id
xs:string
take off
xs:date


Fig. 11N

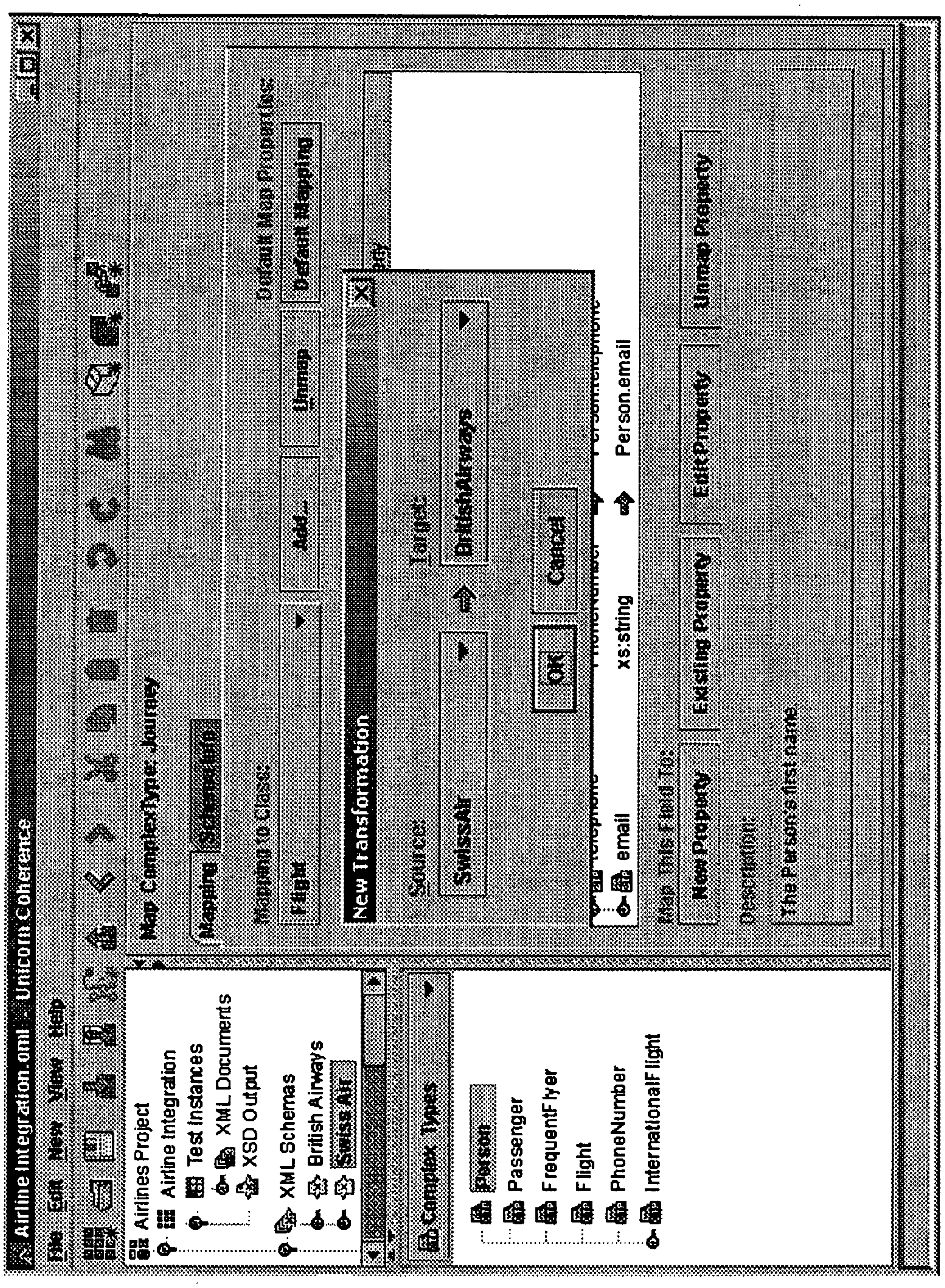
Airline Integration.onti - Unicorn Coherence
File Edit New View Help
Airlines Project
Airline Integration
Test Instances
XML Documents
XSD Output
XML Schemas
British Airways
Swiss Air
Complex Types
Person
Passenger
FrequentFlyer
Flight
PhoneNumber
InternationalFlight
Map ComplexType: Journey
Mapping
Schema Info
Mapping to Class:
Flight
Add...
Unmap
Default Map Properties:
Default Mapping
New Transformation
Source:
SwissAir
Target:
BritishAirways
OK
Cancel
email
xs:string
Person.email
Map This Field To:
New Property
Existing Property
Edit Property
Unmap Property
Description:
The Person's first name.

Fig. 110

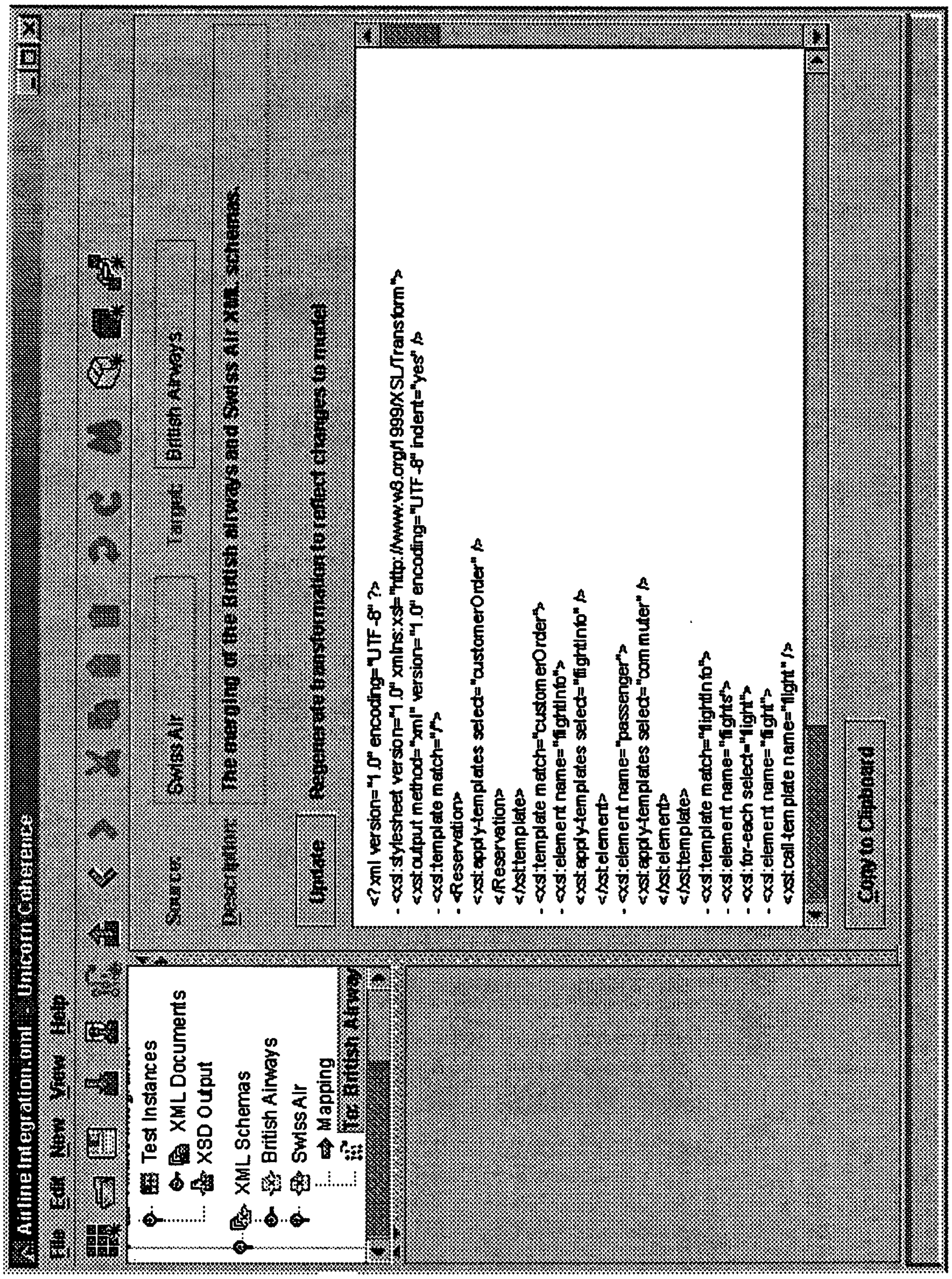
Airline Integration.cml - Unicorn Coherence
File Edit New View Help
Test Instances
XML Documents
XSD Output
XML Schemas
British Airways
Swiss Air
Mapping
Tx: British Airway
Source: Swiss Air
Target: British Airways
Description: The merging of the British airways and Swiss Air XML schemas.
Update
Regenerate transformation to reflect changes to model
<?xml version="1.0" encoding="UTF-8" ?>
- <xsl:stylesheet version="1.0" xmlns:xsl="http://www.w3.org/1999/XSL/Transform">
<xsl:output method="xml" version="1.0" encoding="UTF-8" indent="yes" />
- <xsl:template match="/">
- <Reservation>
<xsl:apply-templates select="customerOrder" />
</Reservation>
</xsl:template>
- <xsl:template match="customerOrder">
- <xsl:element name="flightInfo">
<xsl:apply-templates select="flightInfo" />
</xsl:element>
- <xsl:element name="passenger">
<xsl:apply-templates select="commuter" />
</xsl:element>
</xsl:template>
- <xsl:template match="flightInfo">
- <xsl:element name="flights">
- <xsl:for-each select="flight">
- <xsl:element name="flight">
<xsl:call-template name="flight" />
Copy to Clipboard

Fig. 11P

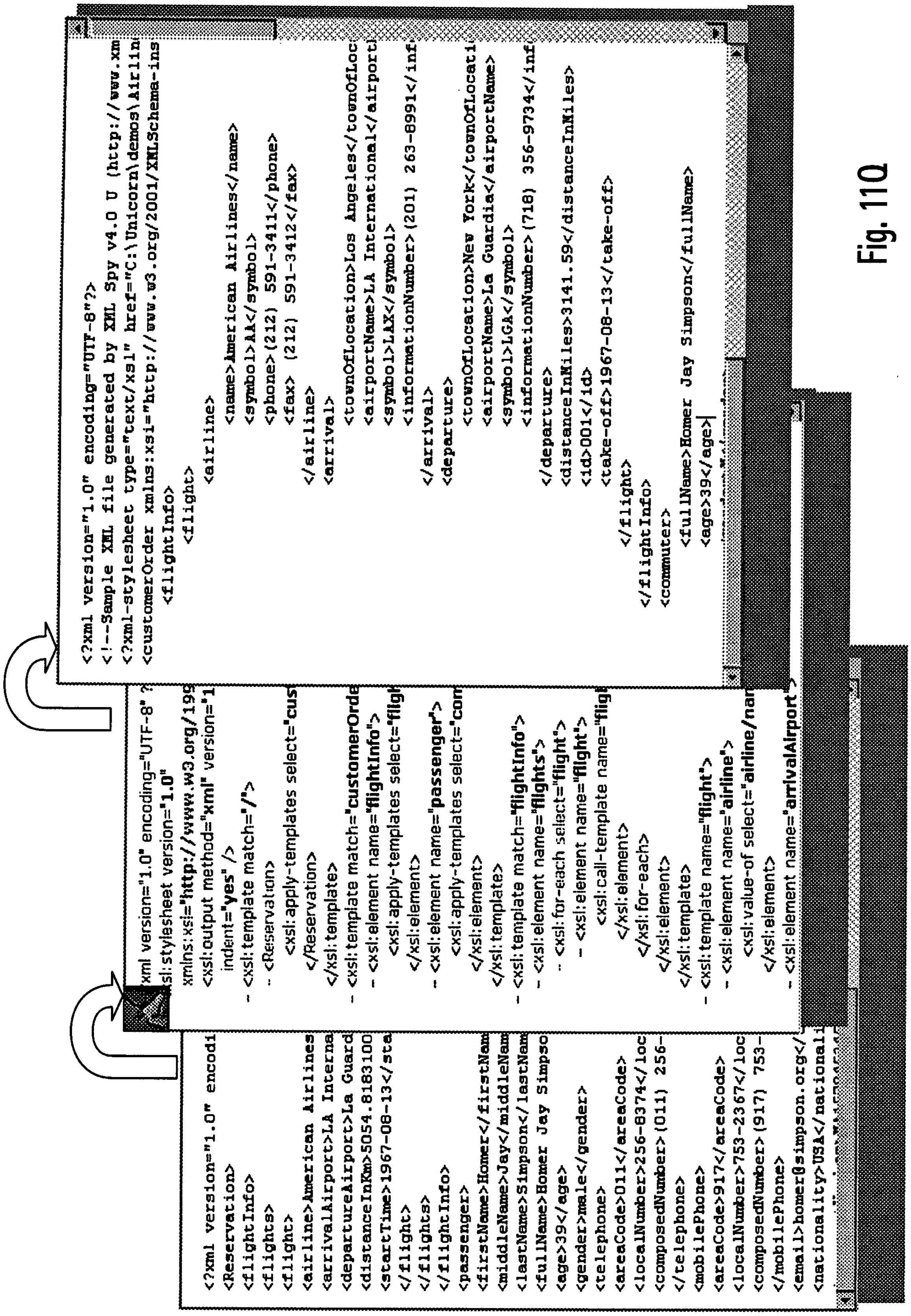
<?xml version="1.0" encoding="UTF-8"?>
<!--Sample XML file generated by XML Spy v4.0 U (http://www.xm
<?xml-stylesheet type="text/xsl" href="C:\Unicorn\demos\Airlin
<customerOrder xmlns:xsi="http://www.w3.org/2001/XMLSchema-ins
<flightInfo>
<flight>
<airline>
<name>American Airlines</name>
<symbol>AA</symbol>
<phone>(212) 591-3411</phone>
<fax> (212) 591-3412</fax>
</airline>
<arrival>
<townOfLocation>Los Angeles</townOfLoc
<airportName>LA International</airportl
<symbol>LAX</symbol>
<informationNumber>(201) 263-8991</inf
</arrival>
<departure>
<townOfLocation>New York</townOfLocati
<airportName>La Guardia</airportName>
<symbol>LGA</symbol>
<informationNumber>(718) 356-9734</inf
</departure>
<distanceInMiles>3141.59</distanceInMiles>
<id>001</id>
<take-off>1967-08-13</take-off>
</flight>
</flightInfo>
<commuter>
<fullName>Homer Jay Simpson</fullName>
<age>39</age>
xml version="1.0" encoding="UTF-8" ?
sl:stylesheet version="1.0"
xmlns:xsl="http://www.w3.org/199
<xsl:output method="xml" version="1
indent="yes" />
- <xsl:template match="/">
- <Reservation>
<xsl:apply-templates select="cus
</Reservation>
</xsl:template>
- <xsl:template match="customerOrde
- <xsl:element name="flightInfo">
<xsl:apply-templates select="fligh
</xsl:element>
- <xsl:element name="passenger">
<xsl:apply-templates select="com
</xsl:element>
</xsl:template>
- <xsl:template match="flightInfo">
- <xsl:element name="flights">
- <xsl:for-each select="flight">
- <xsl:element name="flight">
<xsl:call-template name="fligh
</xsl:element>
</xsl:for-each>
</xsl:element>
</xsl:template>
- <xsl:template name="flight">
- <xsl:element name="airline">
<xsl:value-of select="airline/nar
</xsl:element>
- <xsl:element name="arrivalAirport">
<?xml version="1.0" encodi
<Reservation>
<flightInfo>
<flights>
<flight>
<airline>American Airlines
<arrivalAirport>LA Interna
<departureAirport>La Guard
<distanceInKm>5054.8183100
<startTime>1967-08-13</sta
</flight>
</flights>
</flightInfo>
<passenger>
<firstName>Homer</firstNam
<middleName>Jay</middleNam
<lastName>Simpson</lastNam
<fullName>Homer Jay Simpso
<age>39</age>
<gender>male</gender>
<telephone>
<areaCode>011</areaCode>
<localNumber>256-8374</loc
<composedNumber>(011) 256-
</telephone>
<mobilePhone>
<areaCode>917</areaCode>
<localNumber>753-2367</loc
<composedNumber>(917) 753-
</mobilePhone>
<email>homer@simpson.org</
<nationality>USA</nationali

Fig. 11Q

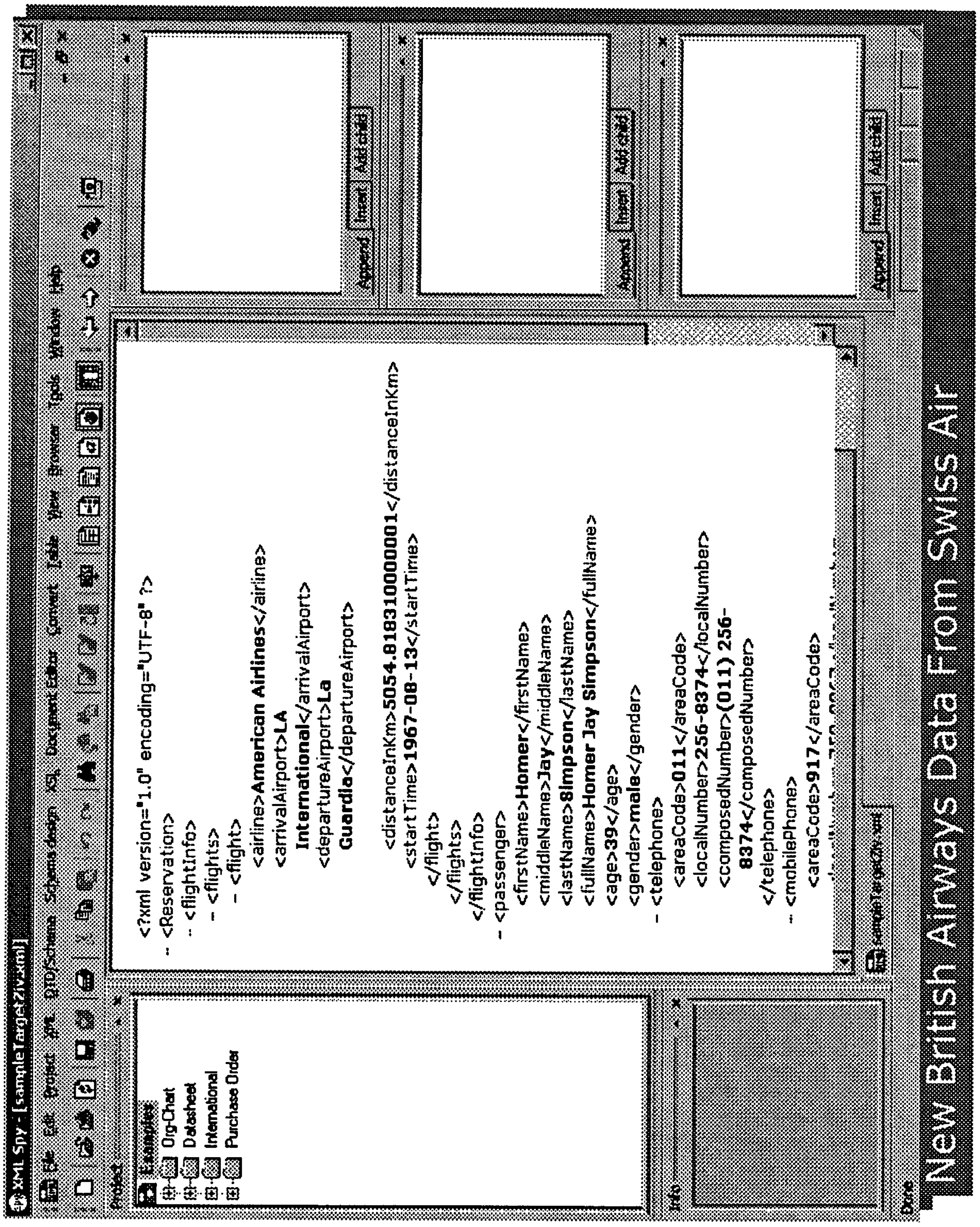
XML Spy - [sampleTarget2IV.xml]
File Edit Project XML DTD/Schema Schema design XSL Document Editor Convert Table View Browser Tools Window Help
Project
Examples
Org-Chart
Datasheet
International
Purchase Order
Info
<?xml version="1.0" encoding="UTF-8" ?>
- <Reservation>
- <flightInfo>
- <flights>
- <flight>
<airline>American Airlines</airline>
<arrivalAirport>LA International</arrivalAirport>
<departureAirport>La Guardia</departureAirport>
<distanceInKm>5054.818310000001</distanceInKm>
<startTime>1967-08-13</startTime>
</flight>
</flights>
</flightInfo>
- <passenger>
<firstName>Homer</firstName>
<middleName>Jay</middleName>
<lastName>Simpson</lastName>
<fullName>Homer Jay Simpson</fullName>
<age>39</age>
<gender>male</gender>
- <telephone>
<areaCode>011</areaCode>
<localNumber>256-8374</localNumber>
<composedNumber>(011) 256-8374</composedNumber>
</telephone>
- <mobilePhone>
<areaCode>917</areaCode>
Append Insert Add child
Done
New British Airways Data From Swiss Air

Fig. 11R

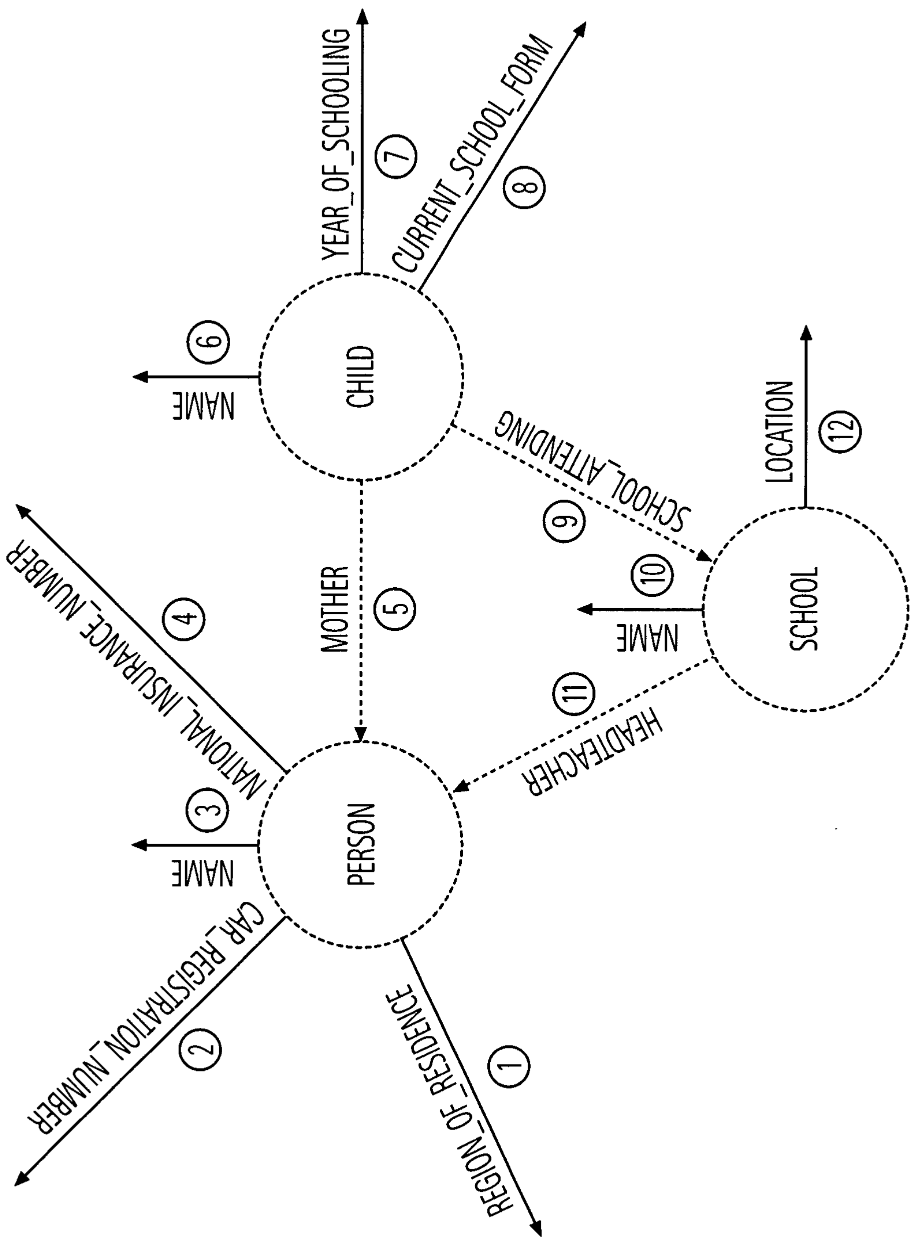
CHILD
PERSON
SCHOOL
REGION_OF_RESIDENCE
1
CAR_REGISTRATION_NUMBER
2
NAME
3
NATIONAL_INSURANCE_NUMBER
4
MOTHER
5
NAME
6
YEAR_OF_SCHOOLING
7
CURRENT_SCHOOL_FORM
8
SCHOOL_ATTENDING
9
NAME
10
HEADTEACHER
11
LOCATION
12

Fig. 12

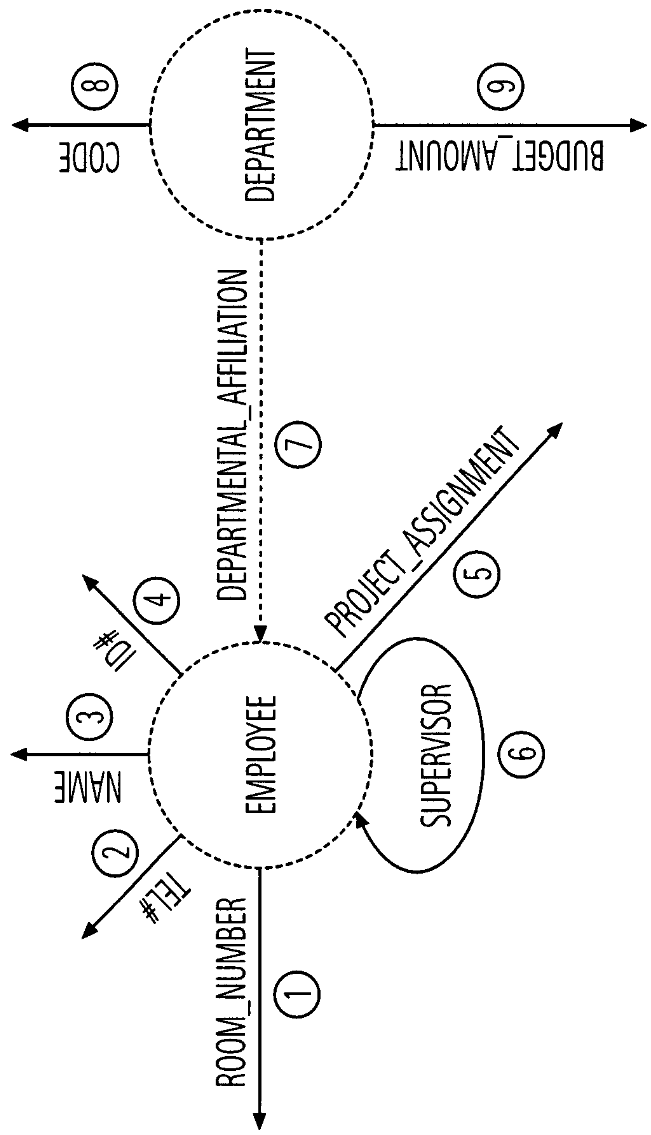
DEPARTMENT
CODE
8
BUDGET_AMOUNT
9
DEPARTMENTAL_AFFILIATION
7
EMPLOYEE
ROOM_NUMBER
1
TEL#
2
NAME
3
ID#
4
PROJECT_ASSIGNMENT
5
SUPERVISOR
6

Fig. 13

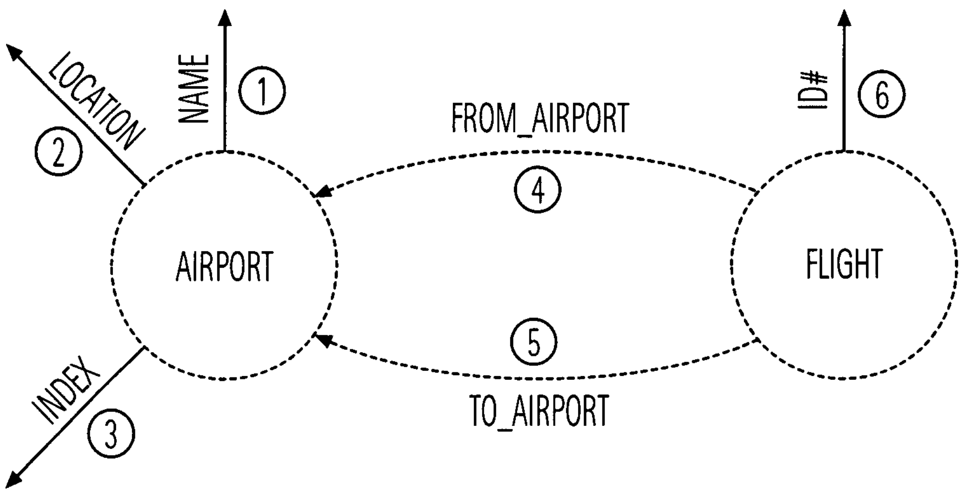
LOCATION
NAME
1
2
FROM_AIRPORT
ID#
6
4
AIRPORT
FLIGHT
5
INDEX
3
TO_AIRPORT

Fig. 14

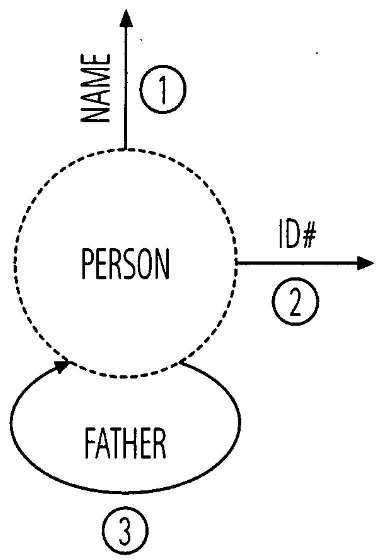


Fig. 15

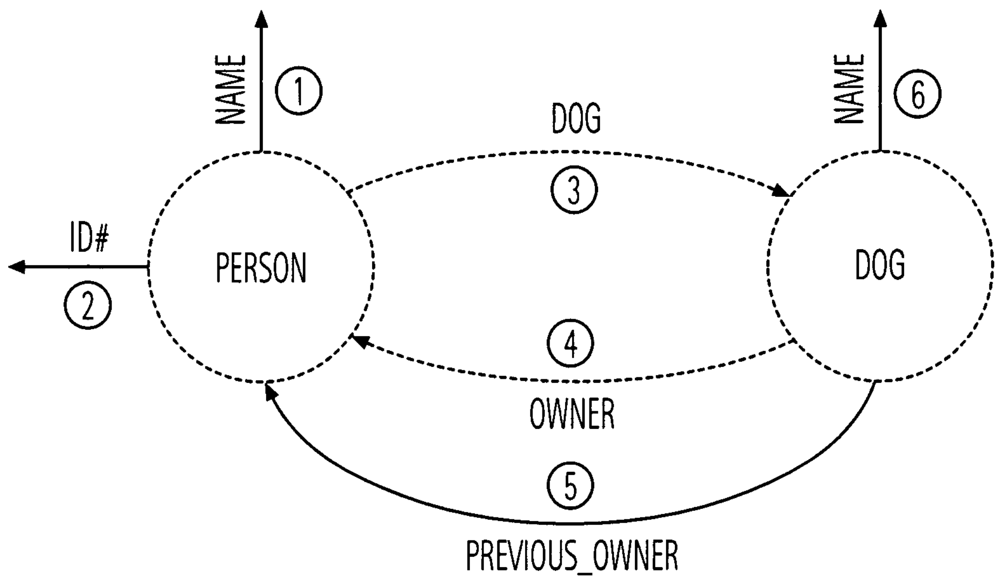


Fig. 16

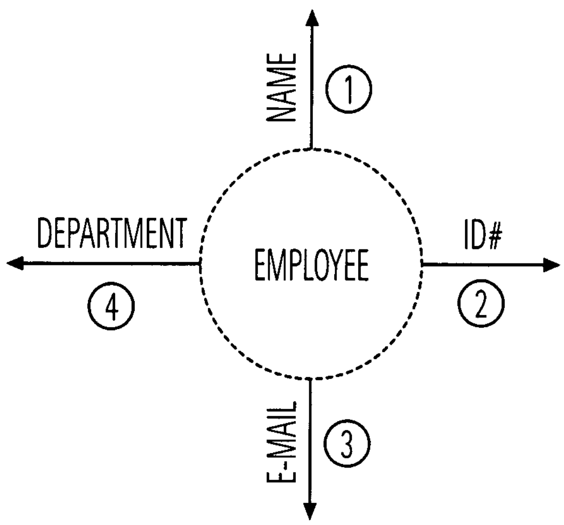


Fig. 17

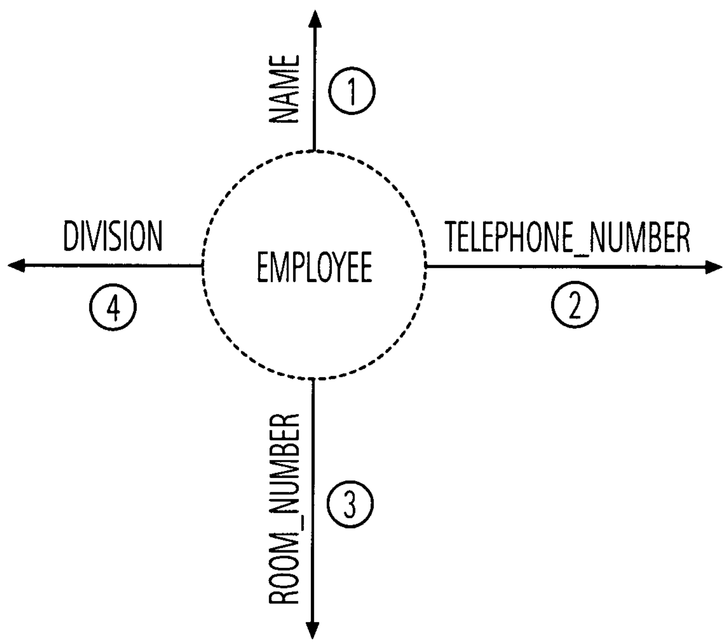


Fig. 18

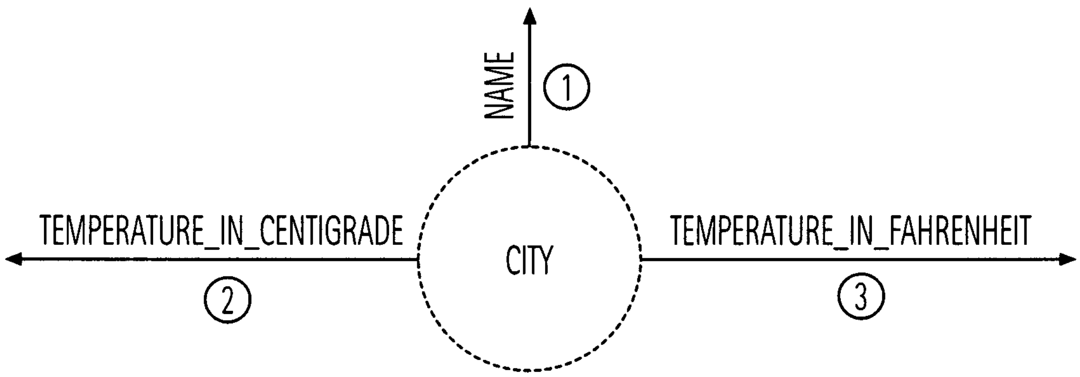
NAME
1
TEMPERATURE_IN_CENTIGRADE
2
CITY
TEMPERATURE_IN_FAHRENHEIT
3

Fig. 19

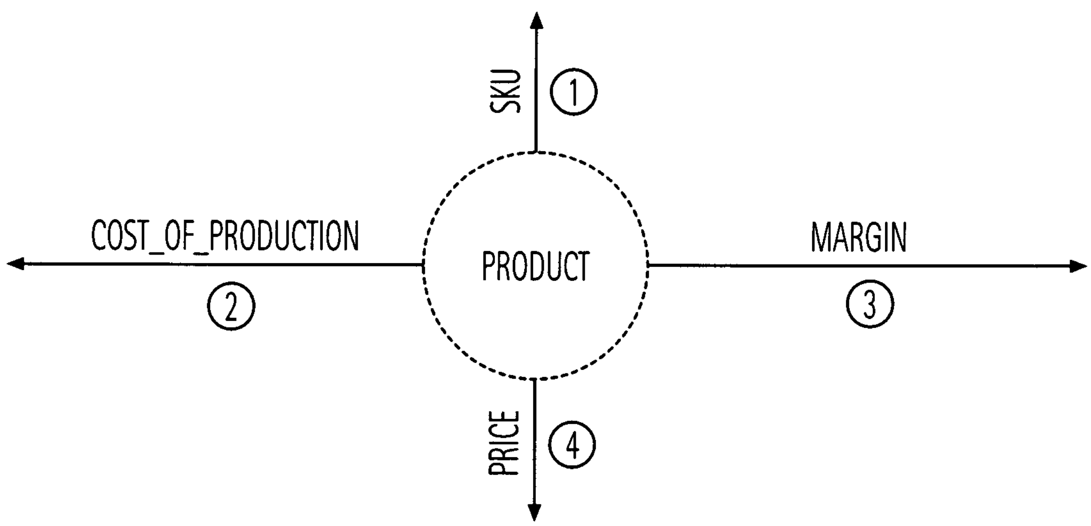


Fig. 20

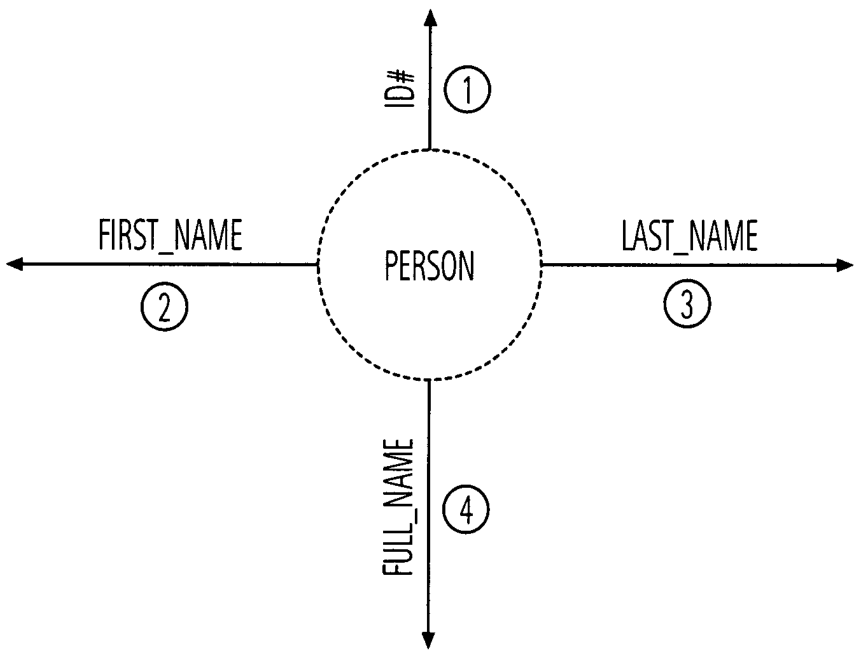


Fig. 21

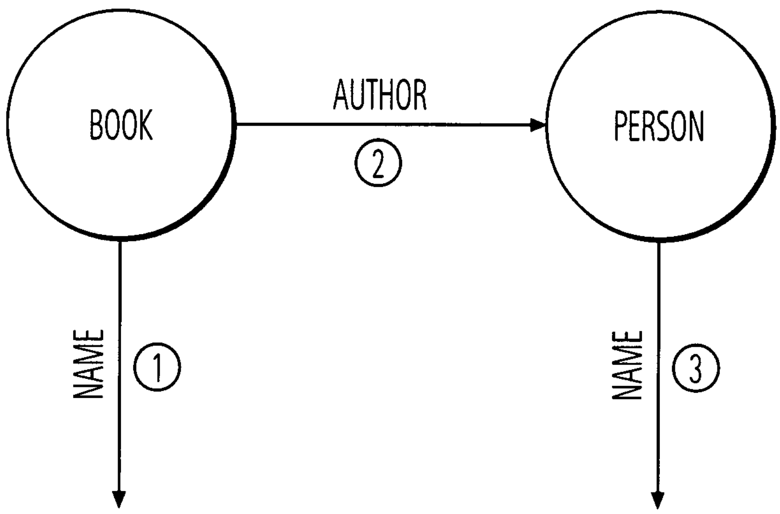


Fig. 22

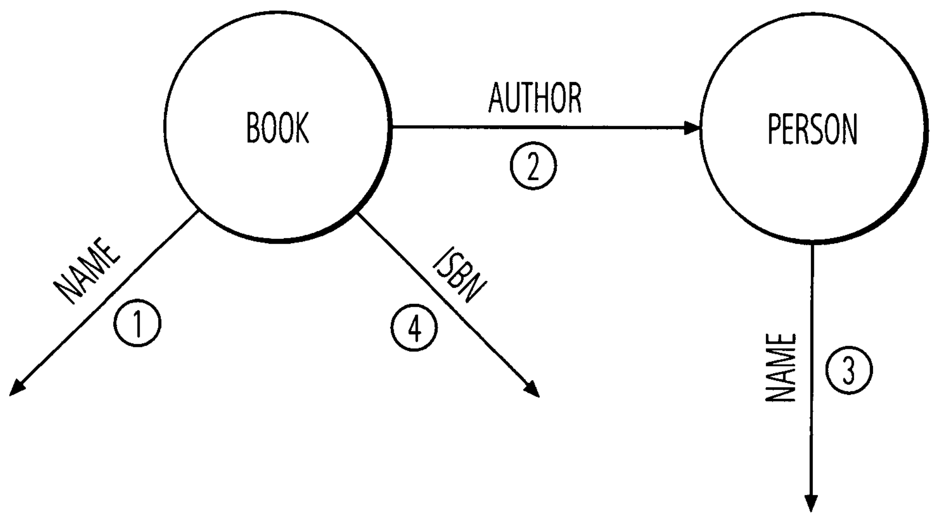


Fig. 23

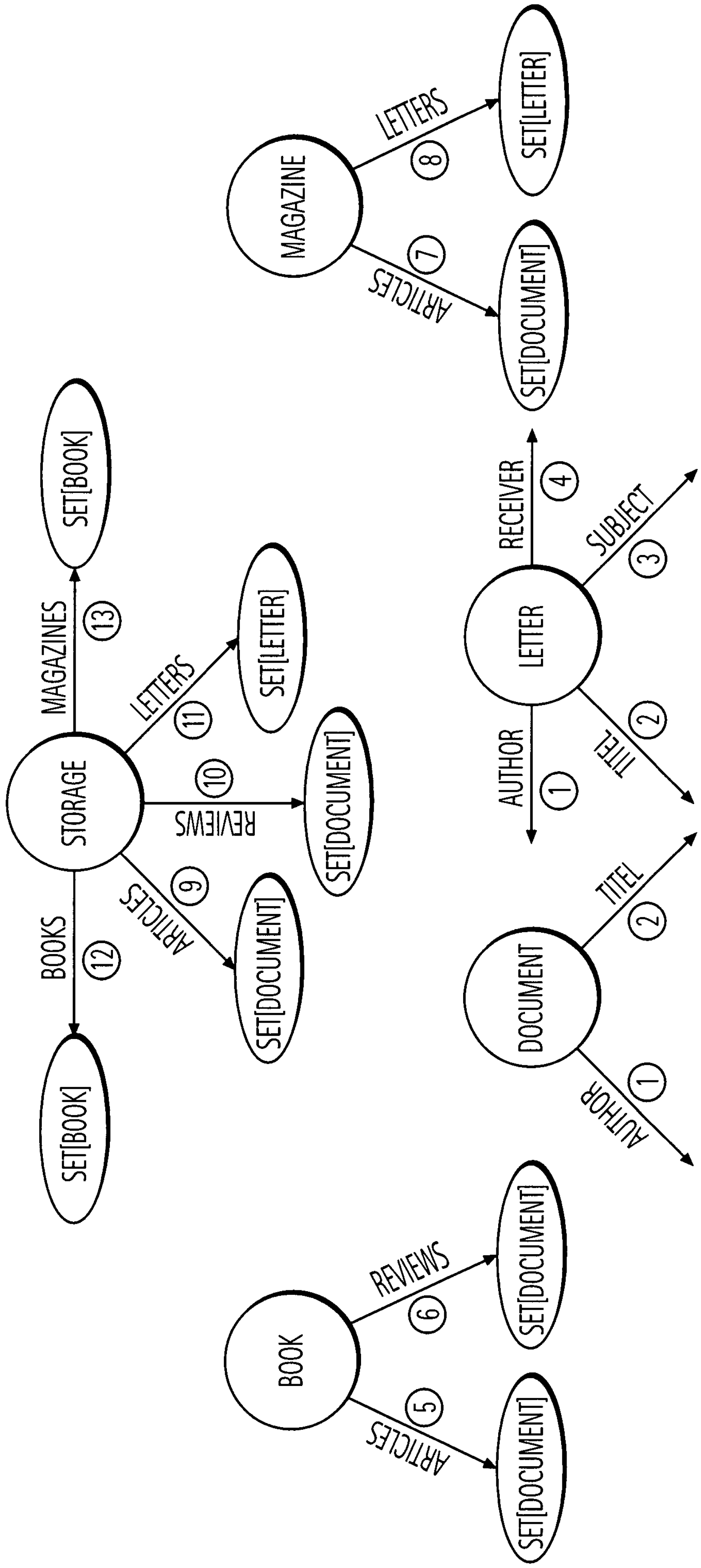
STORAGE
BOOKS
12
SET[BOOK]
MAGAZINES
13
SET[BOOK]
LETTERS
11
SET[LETTER]
REVIEWS
10
SET[DOCUMENT]
ARTICLES
9
SET[DOCUMENT]
MAGAZINE
ARTICLES
7
SET[DOCUMENT]
LETTERS
8
SET[LETTER]
LETTER
AUTHOR
1
TITEL
2
SUBJECT
3
RECEIVER
4
DOCUMENT
AUTHOR
1
TITEL
2
BOOK
ARTICLES
5
SET[DOCUMENT]
REVIEWS
6
SET[DOCUMENT]

Fig. 24

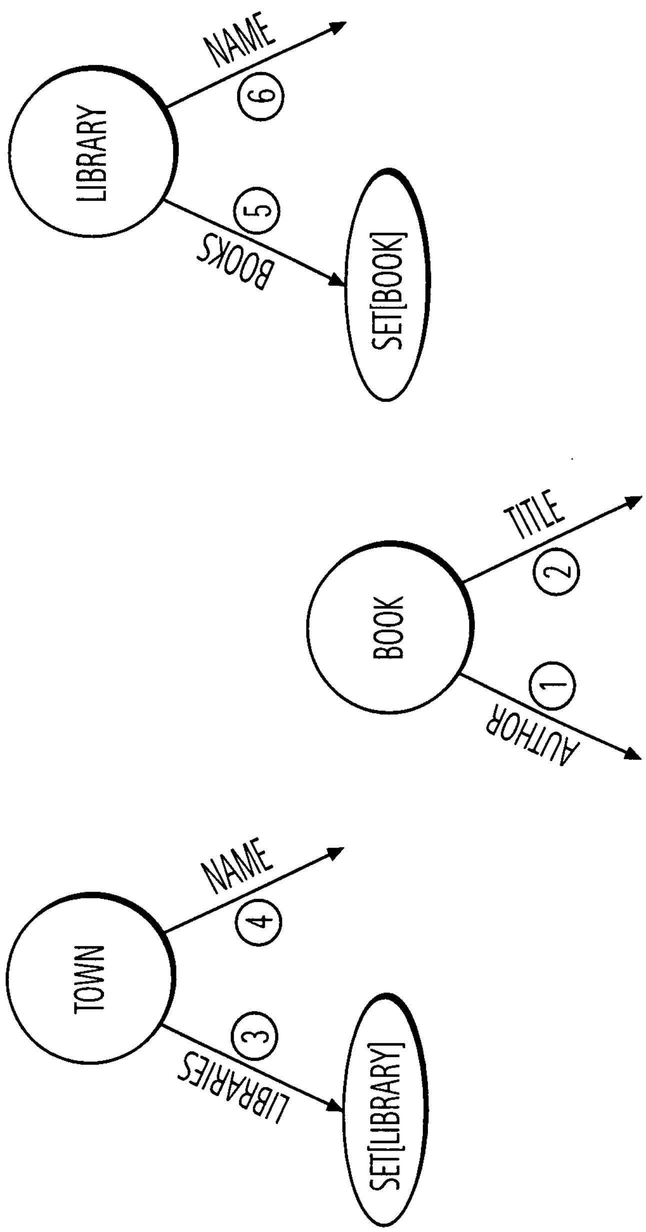
LIBRARY
NAME
6
5
BOOKS
SET[BOOK]
BOOK
TITLE
2
1
AUTHOR
TOWN
NAME
4
3
LIBRARIES
SET[LIBRARY]

Fig. 25

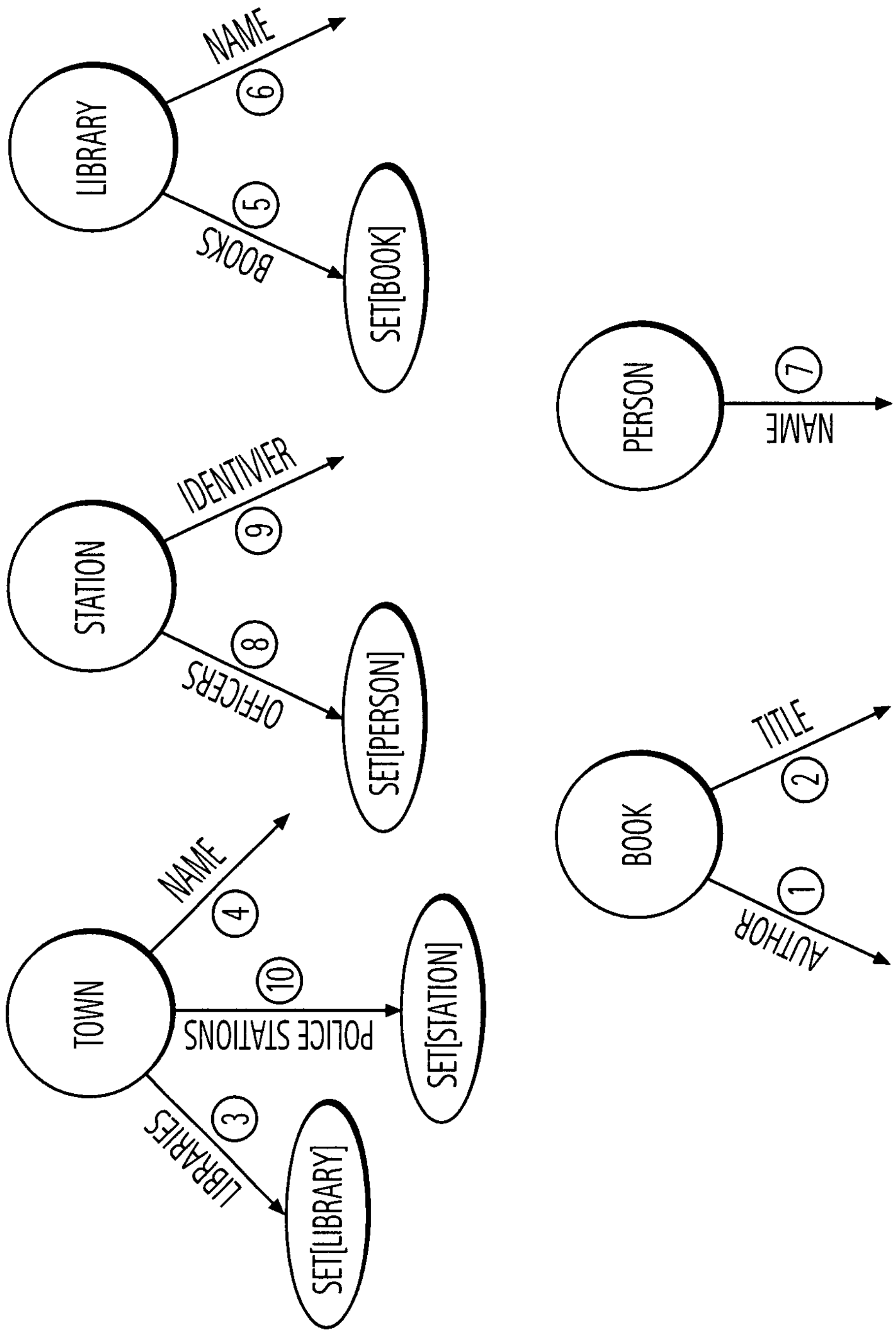
LIBRARY
NAME
6
5
BOOKS
SET[BOOK]
PERSON
7
NAME
STATION
IDENTIVIER
9
8
OFFICERS
SET[PERSON]
BOOK
TITLE
2
1
AUTHOR
TOWN
NAME
4
10
POLICE STATIONS
SET[STATION]
3
LIBRARIES
SET[LIBRARY]

Fig. 26